(19) Europäisches Patentamt
European Patent Office
Office européen des brevets

(11) **EP 2 354 968 A1**

(12) **EUROPÄISCHE PATENTANMELDUNG**

(43) Veröffentlichungstag:
**10.08.2011 Patentblatt 2011/32**

(51) Int Cl.:
***G06F 17/30*** *(2006.01)*

(21) Anmeldenummer: **09180953.3**

(22) Anmeldetag: **30.12.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder: **Frey, Tim**
**74855 Hassmersheim (DE)**

(72) Erfinder: **Frey, Tim**
**74855 Hassmersheim (DE)**

(74) Vertreter: **Heselberger, Johannes**
**Bardehle Pagenberg**
**Galileiplatz 1**
**81679 München (DE)**

Bemerkungen:
Geänderte Patentansprüche gemäss Regel 137(2) EPÜ.

(54) **Hyperadapter und Verfahren zum Zugreifen auf Dokumente in einer Dokumentenbasis**

(57) Die vorliegende Erfindung betrifft einen Hyperadapter (300) für den Zugriff auf Dokumente (400) und / oder Dokumententeile (410), die in einer Dokumentenbasis (305) gespeichert sind, wobei der Hyperadapter (300) aufweist:

a. einen Zugriffsübersetzer (303), der ausgebildet ist, um zumindest ein vom Hyperadapter (300) empfangenes Zugriffsdokument (302) zu verarbeiten, wobei das Zugriffsdokument (302) eine oder mehrere Klassen (402) von Dokumenten (400) und / oder Dokumententeilen (410) spezifiziert;

b. wobei der Hyperadapter (300) ausgebildet ist, die in der Dokumentenbasis (305) gespeicherten Dokumente (400) und / oder Dokumententeile (410) anhand von im Zugriffsdokument (302) spezifizierten Klassifikationsmitteln einer oder mehreren Klassen (402) zuzuordnen.

Fig. 9

Fig. 10

**Beschreibung**

**1. Technisches Gebiet**

Die vorliegende Erfindung betrifft einen Hyperadapter und ein Verfahren zum Zugreifen auf Dokumente in einer Dokumentenbasis.

**2. Stand der Technik**

Wie durch Studien belegt ist, verbringen heutzutage Entwickler einen erheblichen Teil ihrer Arbeit damit, Quellcode (d.h. Quelltext, oder engl. *"source code"*) zu inspizieren, um die Funktionalität vorhandener Softwaresysteme erfassen, nutzen und gegebenenfalls erweitern zu können. Gleiches gilt bei Sicherheitsanalysen von Quellcode, bei dem gegenwärtig ein hoher manueller Aufwand besteht. Hiermit gehen jedoch erhebliche Sicherheitsrisiken einher, da aufgrund der hohen Komplexität moderner Softwareprogramme leicht Fehler übersehen werden und die fehlerhafte Software somit erheblichen Schaden anrichten kann. Gerade im Kontext eingebetteter Software, z.B. im Automobil- oder Luft- und Raumfahrtbereich kann fehlerhafte Software zu katastrophalen Schäden führen.

Aus dem Stand der Technik ist es bekannt, durch verschiedene Techniken die Analyse und Bewertung von Quellcode zu unterstützen. Hierbei sind heutzutage jedoch keine ausreichenden rechnergestützten, systematischen Analysetechniken vorhanden, stattdessen wird typischerweise auf die Meinung von Experten vertraut. Des Weiteren ist es bisher nicht möglich, Quellcode aufgrund von mehrdimensionalen Strukturen zu analysieren. Im Ergebnis muss der Programmierer den Quellcode gegenwärtig vollständig von Hand untersuchen. Im Folgenden wird dargestellt, welche manuellen Techniken und Konzepte in diesem Kontext aus dem Stand der Technik bekannt sind.

Separation of concerns: Der Grundgedanke von "separation of concerns" wird in "Selected Writings on Computing: A Personal Perspective. On the role of scientific thought" von E. W. Dijkstra (Springer-Verlag, 1982, ISBN 0-3 87-90652-5, http://www.cs.utexas.edu/users/EWD/ewd04xx/EWD447.PDF) dargestellt und betrifft einen Ansatz, wie Software entwickelt werden sollte, der heutzutage weit verbreitet ist. Das Gedankenmuster empfiehlt, verschiedene Belange in verschiedenen Modulen zu programmieren. Unter Belangen (engl. *"concerns"*) wird dabei jeder Blickwinkel, Betrachtungswinkel oder auch die Anforderungen an ein Softwaresystem verstanden. Concerns/Belange werden im Rahmen der vorliegenden Erfindung auch als Dimensionen bezeichnet. Durch die Aufspaltung eines Softwaresystems in Module, die einzelnen Belangen entsprechen, wird die Komplexität bei der Entwicklung reduziert.

Tangling und Scattering: Da objektorientierte Programmiersprachen nur teilweise ermöglichen, Belange in einzelne Module aufzuspalten, treten Probleme auf, die als "Tangling" und "Scattering" bekannt sind. Tangling bedeutet, dass ein Modul mehrere Anforderungen gleichzeitig realisiert, ohne sie zu trennen, wodurch sich ein Modul nicht mehr eindeutig einer primären Aufgabe zuordnen lässt. Scattering bedeutet, dass eine Anforderung durch Codefragmente realisiert wird, die in mehreren verschiedenen Modulen vorhanden sind.

Aspektorientierte Programmierung: Die Aspektorientierte Programmierung (AOP) ist ein Programmierparadigma, welches ermöglichen soll, verschiedene logische Aspekte eines Anwendungsprogramms getrennt voneinander zu entwerfen, zu entwickeln und zu testen. Dabei setzt dieses Paradigma auf die objektorientierte Programmierung auf und ermöglicht es, Belange die zu mehreren Klassen gehören, in eigenen Modulen zu programmieren. Um AOP anzuwenden, wird oftmals ein spezieller Aspekt-Compiler oder ein sogenannter Weaver eingesetzt.

Annotationen: Unter Annotationen werden Meta-Sprachelemente einer Programmiersprache verstanden. Solche Sprachelemente erlauben die Einbindung von Metadaten in den Quelltext. Diese Metadaten können zur reinen Beschreibung von Elementen dienen, aber auch von einem Compiler oder einer Laufzeitumgebung ausgewertet werden.

Coding Conventions: Coding Conventions (dt. Codierungsrichtlinien) sind Richtlinien, wie ein gegebenes Softwaresystem programmiert werden soll. Beispielsweise wird festgelegt, wie spezielle Variablen oder Klassen benannt werden sollen. Ein Anwendungsbeispiel sind Datenzugriffsklassen, die oft den Namen DAO (data-access-object) in ihrem eigentlichen Namen zu enthalten haben. Durch Codierungsrichtlinien wird versucht, den Quellcode einfacher verständlich zu gestalten.

Domänenspezifische Sprachen: Ein neuerer Trend in der Softwareentwicklung ist das Nutzen von domänenspezifischen Sprachen. Eine domänenspezifische Sprache (engl. *"domain-specific language"*, DSL) ist eine formale Sprache, die speziell für ein bestimmtes Problemfeld (die Domäne) entworfen und implementiert wird. Beispielsweise gibt es DSLs, die dazu dienen grafische Benutzeroberflächen für elektronische Geräte zu erstellen, die über ein Touchpad bedient werden können. Domänenspezifische Sprachen können zur Generierung von Programmquellcode oder zum Ausführen auf einem Interpreter verwendet werden. Dabei kann eine solche Sprache auch in eine Programmiersprache eingebettet sein. Ein Beispiel hierfür sind Annotationen von Java. Dabei wird die DSL mit den Mitteln einer Programmiersprache beschrieben. Ein Beispiel für eine DSL außerhalb einer Programmiersprache ist zum Beispiel die Spring Bean XML Sprache. In ihr wird definiert, welche Java Klassen zur Laufzeit als Beans verfügbar sind.

Nutzung von Frameworks und Bibliotheken bei der Programmierung: Oftmals werden bei der Programmierung eines Softwaresystems fertige Bestandteile eingesetzt, z.B. Bibliotheken und Frameworks. Bibliotheken stellen fertig programmierte Funktionen zur Verfügung. Frameworks bieten eine Laufzeitumgebung mit vordefinierten Funktionen. Beispielsweise werden für die Ansteuerung einer Netzwerkverbindung typischerweise vorgefertigte Funktionen verwendet. Ebenso kann bei der Programmierung eines Mobiltelefons ein Framework verwendet werden. Wenn der Programmierer das Framework nutzt, kann er über dieses direkt die Hardware mit vordefinierten Funktionen ansteuern. Eine konkrete Anwendung hierfür ist das Auslösen des Fotoapparates, oder das Starten eines Liedes im Musikplayer des Mobiltelefons.

Unit tests: Ein Modultest (auch Komponententest oder oft vom engl. "unit test" als Unittest bezeichnet) ist eine Art von Softwaretest. Er dient zur Verifikation der Korrektheit von Modulen einer Software, z.B. von einzelnen Klassen. Dazu werden die einzelnen Module durch Tests auf deren erwartete Funktion geprüft. Sie dienen dazu, die Anwesenheit von Fehlern zu bestätigen. Oftmals werden sie bei der Weiterentwicklung eines Softwaresystems dazu benutzt zu prüfen, ob ein Modul nach einer Veränderung noch die gleichen Bedingungen erfüllt wie zuvor.

Metriken: Zur Messung der Qualität von Softwarequellcode werden oftmals Metriken als Maßzahlen verwendet. Der Wert einer Metrik ist interpretierbar als Erfüllungsgrad einer Qualitätseigenschaft der Software-Einheit. Eine solche Metrik wird durch eine Funktion berechnet, die einer Softwareeinheit einen Zahlenwert zuweist, z.B. die Anzahl der Quellcodezeilen.

Versionsverwaltungssysteme: Eine Versionsverwaltung ist ein System, das zur Versionierung und Aktualisierung von Quelltexten verwendet wird. Dabei werden die einzelnen Quelltexte in die Versionsverwaltung übermittelt und dort wird eine Historie aufgebaut.

Issue Tracking: Issue Tracking Systeme (dt. Fallbearbeitungssysteme) oder mit verringerter Funktionalität Bugtracking-Systeme genannt, werden in der Softwareentwicklung eingesetzt, um Fehler oder Verbesserungsanregungen eines Softwaresystems z.B. durch Tickets zu erfassen. Beispiele für solche Systeme sind Bugzilla, Trac und Jira. Oftmals werden diese Systeme mit einem Versionsverwaltungssystem und einem kontinuierlichen Integrationssystem verbunden, um Verbesserungsanregungen oder Fehler mit einer speziellen Version zu verbinden.

Data Warehouse: Im betriebswirtschaftlichen Kontext werden Data Warehouse Systeme eingesetzt, um betriebswirtschaftliche Daten zu analysieren und zu planen. Dabei werden die Daten aus betriebswirtschaftlichen Fremdsystemen aufbereitet und in einem Data Warehouse in einem mehrdimensionalen Schema gespeichert. Oftmals werden auf dieses mehrdimensionale Schema Data Mining Operationen mit dem Ziel der Mustererkennung verwendet. Zusätzlich können Benutzer mehrdimensionale Abfragen aufgrund von Grundoperationen erstellen. Data Warehouses haben den Nachteil, dass sie nur für betriebswirtschaftliche Daten und Reporting-Zwecke ausgelegt sind. Desweiteren ist ein Data Warehouse nicht dafür gedacht, als Suchmaschine eingesetzt zu werden, insbesondere nicht im Internet oder bei der Softwareentwicklung. Zudem wird ein Data Warehouse typischerweise unternehmensintern und nicht zur Analyse von Dokumenten oder Softwareentwicklungsartefakten verwendet.

Metrics Warehouse: In "Software metrics: a guide to planning, analysis and application" von C. Ravindranath Pandian (Auerbach Publications, 2003, 978-0849316616) wird ein Verfahren beschrieben, wie Projekte anhand von Metriken gesteuert werden können. Dies bezieht sich auf Metriken aus betriebswirtschaftlichen Systemen und nicht direkt auf Metriken, die durch eine Funktion aus Quellcode berechnet werden können. Diese Metriken werden in ein sogenanntes Metrics Warehouse geladen, das einem Data Warehouse ähnlich ist. Der genaue Aufbau des Metrics Warehouse, die Struktur der Daten, und der Inhalt des Warehouses wird nicht näher beschrieben. Metrics Warehouse hat jedoch den Nachteil, dass die Metriken zuerst berechnet sein müssen. Dabei lässt sich keine Beziehung zwischen Metriken und Concerns im Quellcode analysieren. Es gibt auch keine Möglichkeit, weitere Informationen über den Quellcode einzubinden. Die Struktur von Quellcode, wie beispielsweise Vererbung und die Auswirkung auf die Metriken wird nicht betrachtet. Desweiteren wird nicht genauer spezifiziert, welche Daten überhaupt in das Metrics Warehouse gelangen und wie diese dort strukturiert werden.

Sourcecode Mining: Sourcecode Mining (vgl. z.B. "Concern Mapper Homepage", http://www.st.cs.uni-saarland.de/softevo/) ist die Anwendung von Data Mining Algorithmen auf Sourcecode, Bug-Datenbanken und Versionsverwaltungssysteme. Die Hauptidee hierbei ist es, Bugs, d.h. Fehler, aus Issue Tracking Systemen mit deren Lösungen aus Versionsverwaltungssystemen aufgrund der entsprechenden Quelltexte zu verknüpfen und darauf Data Mining zur Analyse zu nutzen. Sourcecodemining hat jedoch den Nachteil, dass nur Zusammenhänge zwischen Fehlern und dem Sourcecode aufgedeckt werden können. Es ist dabei nicht möglich, weitere Daten in die Wissensbasis zu integrieren. Durch diese begrenzte Wissensbasis können beispielsweise folgende Zusammenhänge nicht untersucht werden: Zusammenhänge zwischen Metriken und Fehlern, Einbeziehung von DSLs bei der Analyse und deren Zusammenhänge zu Quellcode, Analyse von DSLs und deren Modellen, sowie Zusammenhänge zwischen Concerns und Fehlern.

Eine Spezialform des Source Code Minings ist das Aspect Mining (vgl. z.B. "Aspect Miner", http://www.research.ibm.com/hyperspace/workshops/icse2001/Papers/hannemann.pdf). Mit diesem Tool wird Quelltext aufgrund der Namensgebung und Typen basierter Analyse auf Aspekte untersucht. Dabei wird bei der typenbasierten Analyse die Kopplung zwischen Komponenten untersucht und es werden gegebenenfalls Aspektkandidaten vorgeschlagen.

Die DE 10 2006 046 203 A1 offenbart ein Verfahren zur rechnergestützten Bewertung von Quellcode. Der Quellcode wird aufgrund von Codierungsregeln und Codemetriken analysiert. Eine Codierungsregel ist eine eindeutig festgelegte Vorschrift, bei deren Nichterfüllen eine Regel verletzt wird. Eine Metrik ist eine aus dem Softwarequellcode oder dem lauffähigen Programm bestimmbare Größe, welche ein Indikator für bestimmte, in der Software enthaltene Fehler ist. Dabei werden die einzelnen Fehler, die im Softwarequellcode gefunden wurden, anhand einer oder mehrerer Fehlerklassen klassifiziert. Diese Zuordnung geschieht durch eine Konfiguration. Der Benutzer bekommt anhand der Fehlerklasse Korrekturhinweise, eine Beschreibung wie die Fehler der jeweiligen Klasse detektiert werden kann und eine Beschreibung der möglichen Ursachen für das Auftreten des Fehlers angezeigt. In einer bevorzugten Ausführungsform können die Fehlerklassen eine Qualitätsbewertung enthalten, um aufzuzeigen wie schwerwiegend der Fehler ist. Dadurch soll es zudem ermöglicht werden, eine Gesamtqualitätsbewertung für den kompletten Softwarequellcode zu ermöglichen. Jedoch ist es in der DE 10 2006 046 203 A1 nicht möglich, Fehler aufgrund von komplexen Auswertungen zu klassifizieren, da nur ein einfaches Mapping zwischen Fehler und dessen Fehlerklasse bereitgestellt wird. Beispielsweise sind Regeln, die eine Kombination von zwei Fehlern einer bestimmten Fehlerklasse zuordnen, nicht möglich.

Die US 2008/0313175 A1 beschreibt ein aufgabenzentriertes Verfahren, um die Erfahrung eines Benutzers durch das Aufzeichnen seiner Aktionen an einem Dokument oder Dokumententeilen zu erfassen und einer Aufgabe zuzuordnen. Diese Daten werden als Aufgabenkontext bezeichnet. Danach kann ein Benutzer eine Abfrage definieren, welche Aufgaben durch einen Bericht angezeigt werden sollen. Dabei wird eine Interessensbewertung beim Erstellen des Berichtes für die in der Aufgabe enthaltenen Dokumente oder Dokumententeilen für den Benutzer durchgeführt. Der Bericht wird anhand der Interessensbewertung erstellt. Eine Implementierung der Lehre der US 2008/0313175 A1 findet sich für Programmieraufgaben im Eclipse-Plugin Mylyn (vgl. "Mylyn Homepage", http://www.eclipse.org/mylyn/) und für allgemeine Aufgaben in Tasktop (vgl. "Tasktop Homepage", http://tasktop.com/). Die US 2008/0313175 A1 und Mylyn haben jedoch folgende Nachteile: Es sind nur einfache Kombinationen von Aufgabenkontexten durchführbar. Es werden bei der kombinierten Anzeige von Kontexten einfach alle Dokumente oder Dokumententeile, deren Interessensbewertung über einer bestimmten Schwelle liegt, in den Bericht aufgenommen. Es können keine Dokumente oder Dokumententeile, deren Interessensbewertung in einem Aufgabenkontext vorhanden ist, beim Erstellen eines Berichtes einer anderen Aufgabe ausgeschlossen werden. Die Interessensbewertungen eines Aufgabenkontextes können nicht mit anderen Informationen über Dokumente oder Dokumententeile kombiniert werden. Einzelne Dokumente oder Dokumententeile können nicht von einem Bericht ausgeschlossen werden.

ConcernMapper: Werkzeug, das die Entwicklung von Java Software vereinfachen soll ist der ConcernMapper (vgl. "ConcernMapper Homepage", http://www.cs.mcgill.ca/~martin/cm/). Durch den ConcernMapper kann ein Softwareentwickler neue Belange anlegen. Danach können einzelne Java Elemente oder Dateien einem Belang zugeordnet werden. Der Benutzer hat die Möglichkeit, nur noch Elemente eines Belanges anzeigen zu lassen. Der ConcernMapper besitzt jedoch folgende Nachteile: Er unterstützt nur Java Elemente und Dateien, d.h. es gibt keine Unterstützung für die einzelnen Elemente von Modellen von DSLs, es gibt keine Abfragen, um Concerns auszuschließen, sondern nur ein einfaches Anzeigen ist möglich, Concerns können nicht automatisch im Quellcode erkannt werden und es gibt keine Möglichkeit, Abfragen in Kombination mit einer anderen Technik, beispielsweise Mylyn, zu erstellen.

JQuery: JQuery ist ein Sourcecode-Analysator. Das Programm ermöglicht es, neue Ansichten für die Entwicklungsumgebung eines Programmierers zu erstellen. Dabei können für jede neue Ansicht Abfragen definierten werden. JQuery ist dafür gedacht, hochflexible anpassbare neue Ansichten zu erschaffen. JQuery bietet jedoch keine Möglichkeit, weitere Informationen im Bezug auf Java Quellcode zu integrieren. Desweiteren bestehen folgende Nachteile: Eine technische Untersuchung, ob Coding Conventions bei der Programmierung verletzt worden sind, ist nicht möglich. Es wird ausschließlich Java Code analysiert. Versionsverwaltungssysteme können nicht einbezogen werden. JQuery ist nicht für andere Programmiersprachen oder DSLs geeignet. Es werden in Abfragen keine Beziehungen zu externen Elementen unterstützt, beispielsweise zu Konfigurationsdateien. Es können keine Abfragen nach fehlgeschlagenen Testfällen durchgeführt werden. Es ist nicht möglich, Sourcecodefragmente zu Concerns zuzuordnen und dies in einer Abfrage zu nutzen. Es ist nicht möglich, Metriken in einer Abfrage zu nutzen. Die Sprache, um Abfragen zu formulieren, ist eine Logik-Programmiersprache und keine Abfragesprache. Es gibt keine Darstellung der Ergebnismenge einer Abfrage außerhalb der IDE. Die Ergebnismenge kann keine nicht-JavaElemente enthalten. Die Abfragesprache von JQuery ist Tyruba, eine Logikprogrammiersprache. Bei dem Erstellen von Abfragen mit JQuery wir nicht explizit von der Multidimensionalität von Quellcode ausgegangen. Es ist vergleichbar mit SQL und MDX Abfragen. Jede MDX Abfrage lässt sich in eine SQL Abfrage übersetzen, jedoch ist MDX für mehrdimensionale Abfragen und Berechnungen gedacht, SQL dagegen nur für einfache Abfragen. Es können keine Informationen über Aspekte einbezogen werden. Es ist beispielsweise nicht möglich, in einer Query alle Fragmente anzuzeigen, auf die ein Aspekt angewendet wird.

Allen bekannten Verfahren und Geräten im Stand der Technik, die auf die Verbesserung der Softwareentwicklung gerichtet sind, ist es darüber hinaus gemein, dass sie nur Quelltext betrachten, DSLs aber außer acht lassen.

Bei der Softwareentwicklung existiert eine Vielzahl von Problemen, beispielsweise wenn neue Funktionen zu einem Softwaresystem hinzugefügt werden, für die das Softwaresystem und dessen Module ursprünglich nicht ausgelegt waren. Dabei wären größere Änderungen in der Architektur nötig, weswegen typischerweise die neue Funktionalität in alte Module eingebaut wird. Dies verstärkt die bereits eingangs erläuterten Probleme wie Scattering und Tangling, die ohnehin schon in der objektorientierten Programmierung existieren. Heutzutage existiert zudem kein Weg, die Modularität eines Programmes zu bewerten oder zu analysieren. Eine solche Bewertung könnte beispielsweise dazu genutzt werden, um Prognosen über die Qualität, Sicherheit und Zuverlässigkeit des Programmes zu erstellen, oder auch die Einarbeitungszeit eines neuen Entwicklers abzuschätzen. Da moderne Softwaresysteme typischerweise extrem komplex sind und eine unüberschaubare Anzahl von Entwicklungsfragmenten (Dokumenten) aufweisen, besteht daher der Bedarf, diese Komplexität handhabbar zu machen, d.h. auf strukturierte Weise auf die Dokumente zugreifen zu können (z.B. lesend und / oder schreibend).

Die Einhaltung von Codierungsrichtlinen ist ein weiteres Qualitätsmerkmal von Quellcode. Bisher existiert kein technisches Verfahren, das es ermöglicht die Einhaltung von Codierungsrichtlinien systematisch zu überprüfen. Beispielsweise ist eine Überprüfung, ob eine Klasse, die auf ein Netzwerk zugreift auch "NetworkAccessor" in ihrem Namen trägt, nicht möglich. Dieses Problem wird heute durch manuelle und daher sehr aufwändige und fehleranfällige Code Reviews durch Experten adressiert.

Ein weiteres, insbesondere in technischen Anwendungsgebieten auftretendes Problem ist die Entwicklung der Temperatur eines programmgesteuerten Gerätes unter Last. Ein weiterer Fall, in dem die Temperaturentwicklung als Bestandteil einer Analyse erwünscht ist, ist die Ansteuerung einer Maschine. Dabei kann es sein, dass die Maschine bei dem Ausführen von softwareausgelösten Kommandos Teile enthält, die Wärme entwickeln. Beispielsweise könnte ein Softwarebefehl eine Maschine zu Bewegungen veranlassen. Führt eine Maschine ein Kommando ohne Pause zu oft hintereinander aus, so könnte es sein, dass deren Temperatur so weit steigt, dass dies zu einer Notabschaltung oder gar zur Beschädigung der Maschine führt. Bisher wird dieser Belang durch Analysemethoden nicht genauer erkundet. Dies kommt daher, dass es schwierig ist festzustellen, welche Teile eines Programmes für einen Temperaturanstieg verantwortlich sind. Ähnlich wie die Temperatur ist die Herausforderung, den Stromverbrauch einer Software zu senken, da beispielsweise mobile Geräte möglichst lange durch geladene Energiezellen betrieben werden sollten.

Ein weiterer Aspekt ist die Ansteuerung von Aktionen von Maschinen durch ein in der Maschine implementiertes Computerprogrammprodukt oder eine externe Steuerung. Dabei kann es sein, dass ein Computerprogrammprodukt dazu führt dass die Maschine Schritte ausführt, die viel Energie verbrauchen, was in Zeiten steigender Energiepreise sehr kostspielig und daher unerwünscht ist. Daher wäre es auch hier von Interesse zu analysieren, wie hoch der Energiebedarf eines Computerprogrammproduktes und dessen Wechselwirkung mit einer Maschine ist. Hier ist es bisher nicht möglich, den wahrscheinlichen Stromverbrauch eines Programmes zu bestimmen.

Eine Analyse, die Fragen über den Inhalt eines Programmes beantworten kann, ist derzeit auch nicht möglich. Insbesondere können keine der folgenden Fragen beantwortet werden: Nutzt das Programm Netzwerkverbindungen? Welcher Teil eines Programmes ist über einen Webserver erreichbar? Welcher Teil eines Programmes ist über einen Webserver erreichbar und wurde von eine bestimmten Autor geschrieben? Welche Teile eines Programmes nutzen veraltete Bibliotheken? Wie viel Code eines Programmes ist von einer bestimmten Bibliothek abhängig?

Moderner Code wird typischerweise mit Hilfe sogenannter Dependency Injection und einer Vielzahl von Konfigurationsdateien programmiert. Desweiteren wird heutzutage sehr viel Code generiert, der mit handgeschriebenem Quellcode interagiert. Sämtliche heutzutage verfügbaren Ansätze zur Analyse und Bewertung von Quellcode beziehen diese Tatsachen nicht ein.

Metriken haben sich in der Softwareentwicklung bisher nicht durchgesetzt. Vor allem ist die Interpretation, Berechnung und die Aussagekraft von Metriken oftmals nicht ausreichend. Es ist zudem nicht ohne weiteres möglich, komplexe Kombinationen von Metriken zu berechnen. Beispielsweise könnte eine Metrik bewerten, wie stark ein Sourcecodefragment vom restlichen Programm genutzt wird. Eine andere Metrik könnte die Qualität des Fragmentes bewerten. Durch die Kombination der beiden wäre es somit möglich, die Auswirkung der Qualität auf das Gesamtsystem zu bewerten. Heutzutage existiert kein System, um Metriken einfach und korrekt kombinieren zu können. Es können unter Anderem folgende Fragen nicht beantwortet werden: Wie hoch ist die Qualität der Klassen, die auf die Kamera des Mobiltelefons zugreifen? Welcher Autor hat denjenigen Quellcode geschrieben, der am meisten von anderen Komponenten genutzt wird? Welche weiteren Sourcecodefragmente sind indirekt von dem Fehler betroffen (d.h. Aufrufe des fehlerhaften Sourcecodefragmentes)? Desweiteren kann kein bekanntes Werkzeug die folgenden Analysen durchführen: Zeitreihenanalyse, wie oft ein Fehler in einem Sourcecodefragment auftritt, Metrikvergleich zwischen Metriken des Testes und Metriken getesteten Codes, sowie Identifikation des indirekt betroffenen Codes eines Aspektes, wenn dessen Test fehlschlägt.

Ein anderes Anwendungsgebiet sind Dokumentenmengen, die über Netzwerke wie das Internet verteilt sind. In diesem Kontext unterstützen bekannte Suchmaschinen derzeit keine mehrdimensionalen Abfragen, sondern es ist lediglich möglich, nach Wörtern in einzelnen Dimensionen zu suchen, beispielsweise nach Wörtern in Textseiten. Nur im Einzelfall lassen sich zusätzliche Suchkriterien spezifizieren, z.B. Dateitypen oder die Größe eines Bildes. Es ist dabei nicht möglich, Dimensionen in einer Website zu beachten, wie z.B. Kommentare. Ein weiteres Hauptproblem ist, dass keine Unterdimensionen oder Vereinigungsmengen bei der Suche verwendet werden können, d.h. es können nur Eigenschaften für eine Dimension spezifiziert werden, nicht aber, was in einer Unterdimension vorhanden sein muss. Diese Eigenschaften haben den Charakter von Filtern und sind keine eigenständigen Dimensionen, beispielsweise die Größe eines Bildes in Pixel. Die Dimension der Größe trifft auch auf andere Medienobjekte wie beispielsweise Videos zu. Desweiteren können die Eigenschaften nicht in Beziehung zueinander gesetzt werden, z.B. die Eigenschaften, dass ein Blog-Eintrag einen Autor hat und dieser wiederum einen Standort. Der Index einer heutzutage typischerweise eingesetzten Suchmaschine ist im Normalfall auf Wörter spezialisiert. Daher können beispielsweise keine Mengenoperationen aufgrund von "Tags" bei Webseiten durchgeführt werden, denn die Tags werden nicht als Dimensionen behandelt. Tags sind hierbei Stichworte oder andere Kennzeichen, die für die Auszeichnung eines Datenbestandes mit zusätzlichen Informationen benutzt werden, typischerweise zur Klassifikation der Daten. Die Folge dieser Sichtweise ist, dass eine herkömmliche Suchmaschine keine mehrdimensionalen Operationen unterstützt. Durch diese Beschränkung ist es nicht möglich die folgenden Abfragen zu stellen: Blog eines Autors, dessen Standort im Umkreis von 100 mm von Stuttgart liegt. Produkthändler im Umkreis von 10 km von Stuttgart, die Produkt X verkaufen, das nur 10% teurer ist als das günstigste Web-Angebot. Newseinträge, die mehr als 10 Kommentare enthalten und die Wörter "x y" enthalten. Newseinträge einer Domain, die mehr als 10 Kommentare enthalten. Videos, die von der Seite X verlinkt wurden. PDF-Dokumente, die keine Hyperlinks enthalten. Bilder, auf denen die Person X und die Person Y zu sehen sind. Blogposts, die das Wort X enthalten und mehr als 5 Kommentare haben. Eine Klasse mit dem Namen X, in der eine Funktion mit dem Namen Y vorkommt. Webseiten, die Videos mit positiven Bewertungen enthalten. Alle Blogposts, die von Autor X kommentiert wurden. Alle Seiten, die von zwei verschiedenen Webseiten verlinkt wurden. Alle Blogposts, die durch Tag 1 und Tag 2 markiert sind. Alle Videos, die von Autor X sind, die den Kommentar Z enthalten. Bilder, die Person A und Person B beinhalten. Person X, dessen Nachbar Person Y ist.

Innerhalb einer Website werden oftmals Suchfunktionen angeboten, die jedoch stark begrenzt sind. Die Suchmaschinen in der Website selbst nutzen ein relationales Datenmodell, das nicht multidimensional ist. Beispielsweise können auf einschlägigen Webseiten von Reiseveranstaltern verschiedene Eigenschaften für ein Reiseziel angegeben und gesucht werden. Es ist dabei aber nicht möglich, nach einer Reise mit einem Hotel zu suchen, das von einem bestimmten Autor gut bewertet wurde. Ein weiteres Problem von heutigen Webseiten ist, dass oftmals fremde Applikationen integriert sind, beispielsweise in "Social Networks" wie Myspace oder Facebook. Die Daten die durch die Fremdapplikation eingebettet wurden, sind dadurch nicht direkt durchsuchbar. Desweiteren haben heutzutage eingesetzte Suchmaschinen das Problem, dass eine Seite erst im Ranking (d.h. in ihrer Position in Ergebnislisten) steigt, wenn auf sie viele andere oder stark relevante Seiten verweisen. Es wird derzeit in der Suche beispielsweise nicht der Zeitfaktor berücksichtigt, seit wann eine Seite besteht und der Benutzer kann diesen Faktor daher nicht berücksichtigen lassen. Die DE 199 52 769 B4 offenbart in diesem Zusammenhang eine Suchmaschine zur Suche von in natürlicher Sprache formulierten Anfragen anhand von Vektorvergleichen von Wörtern.

"Google Goggles" (http://www.google.com/mobile/goggles/) ist eine Suchmaschine, die es erlaubt, das Web (Internet) aufgrund von Bildern aus einer Mobiltelefon-Kamera zu durchsuchen. Dabei dient als einziges mögliches Eingabegerät für die Suchmaschine ein Mobiltelefon mit dem Betriebssystem Android und eine Digitalkamera. Google Goggles vergleicht Teile eines Bildes mit dem Bildbestand von Google oder führt eine Schrifterkennung durch. Aufgrund der erkannten Schrift oder des erkannten Fotos wird dann eine herkömmliche Suche über eine der Google Suchmaschinen durchgeführt (normale Textsuche). Als Zusatz zu diesem Ergebnis werden dabei Bilder, die als gleich erkannt wurden und zur Identifikation dienten, um die letztendliche Suche durchzuführen, angezeigt. Eine weitere Funktion von Google Goggles ist es, die Namen von Geschäften im Display anzuzeigen, auf die mit der Kamera gezeigt wird. Somit ist Google Goggles zum einen eine Kombination aus textbasierter Suche und Bilderkennung und zum anderen eine GPS Richtungserkennung, die Suche in einem Verzeichnis eingetragener Geschäfte aufgrund von GPS Koordinaten durchsucht. Dadurch erbt Google Goggles, neben der Einschränkung, nur auf einem Mobiltelefon mit nur einem bestimmten Betriebssystem und auf keinen anderen Clienten einsetzbar zu sein, die Einschränkungen, die auch bei weiteren herkömmlichen Suchmaschinen vorhanden sind. Zum Beispiel ist Google Goggles bei der Suche auf ein einziges Objekt beschränkt. Wird ein Buch und eine CD gleichzeitig fotografiert, so werden nicht weitere Bilder gesucht, auf denen selbiges Buch und CD vorkommen. Oder führt das Bild eines berühmten Platzes nicht zu Suchergebnissen, die mit dem Platz verknüpft sind, wie zum Beispiel Veranstaltungen, bekannte historische Ereignisse, die stattfanden oder weiteren Bildern, die in der Nähe des Platzes erstellt wurden. Auch ist es nicht möglich, ein Bild eines Platzes mit einer Jahreszahl zu suchen, wobei die Ergebnismenge hierbei Bilder des Platzes im speziellen Jahr sein sollte. Außerdem ist die Suchfunktion derzeit auf einzelne Bereiche beschränkt. So lassen sich nur Sehenswürdigkeiten, Bücher, Kunst, Lokale, Wein und Logos erkennen. Diese einzelnen Bereiche lassen sich nicht miteinander bei einer Suche verknüpfen. Zum Beispiel ein Bild einer Flasche Wein, verknüpft mit GPS Koordinaten, kann nicht dazu genutzt werden, Restaurants in der Nähe der GPS Koordinaten anzuzeigen, in denen der Wein ausgeschenkt wird. Oder zwei Bilder mit verschiedenen Gegenständen, die zu einer Ergebnismenge führen sollten, auf der beide Gegenstände angezeigt werden.

Generell ist bei Google Goggles und anderen Suchmaschinen eine weitere Einschränkung, dass, sofern überhaupt Dimensionen erkannt werden, diese immer nur einer Dimension zugeordnet werden. Zum Beispiel kann Google Goggles Telefonnummern erkennen und danach eine Textsuche durchführen. Dabei wird aber nicht beachtet, dass eine Telefonnummer zum Beispiel einer Person zugehörig ist und somit auch in dieser Dimension vorhanden sein müsste. Zusätzlich können keine Klassifikationsmittel bestimmt werden, die zum beantworten eine Anfrage genutzt werden.

Grundlegend ist eine weitere Problematik von existierenden Suchmaschinen, dass diese eine festgeschriebene, unveränderbare, immer gleiche Frage haben. Ähnlich der Frage: "Suche Text, der in einer Webseite enthalten ist" oder "Suche Bilder, die in der Beschreibung den Text xy enthalten" oder "Suche Bilder, die dem übermittelten Bild ähnlich sind". Somit kann das Klassifikationsmittel, das genutzt werden soll, um eine Anfrage zu beantworten, nicht flexibel spezifiziert werden, denn es ist durch die unflexible Frage schon festgelegt, mit welchen Mitteln die Abfrage beantwortet werden soll. Fälschlicherweise könnte man das Verhalten einer heutzutage eingesetzten Suchmaschine, wie z. B. Google, auch Bilderergebnisse oder Map-Ergebnisse bei einem Suchvorgang anzuzeigen, als die Auswahl von Klassifikationsmitteln interpretieren. Dies könnte für jemanden bedeuten, dass Klassifikationsmittel von Google nach starren, unflexiblen Regeln ausgewählt werden, die in der Hauptsuchmaschine hinterlegt sind. Dies ist jedoch nicht so, da zum Beispiel die Suche nach "Haßmersheim -map" oder "-karte" trotz des Ausschlusses "-" als erstes zu dem Ergebnis einer google map führt. Würden die einzelnen Suchmaschinen wirklich als Klassifikationsmittel wahrgenommen, so wäre es auch möglich, Mengenoperationen aufgrund der Ergebnisse der einzelnen Suchmaschinen durchzuführen. Zum Beispiel ist es nicht möglich, einen Begriff zu suchen und dabei nur Webseiten anzuzeigen, die auch Verweise auf Bilder enthalten, die dem gleichen Suchbegriff entsprechen. Zudem sind die Fragen der einzelnen Suchmaschinen weiterhin fest vorgeschrieben und lassen sich nicht mit den anderen Suchmaschinen verknüpfen. Somit wird nicht das Klassifikationsmittel gewählt oder kombiniert.

Ein weiteres Problem ist, dass das World Wide Web derzeit statisch ist. Nur in Ausnahmefällen kann der Benutzer den Inhalt verändern, beispielsweise in speziell hierfür vorgesehenen community-basierten Webanwendungen wie Wikipedia. Es ist allerdings nicht möglich, beim Websurfen Inhalte auf Webseiten hinzuzufügen oder die derzeit bestehenden Inhalte zu ändern, wenn die entsprechenden Seiten nicht speziell dafür vorgesehen sind. Beispielsweise ist es nicht möglich, Anmerkungen an Abschnitte in einer Webseite hinzuzufügen, ebenso wenig wie einen Abschnitt einer Website zu markieren und eine Beschreibung hinzuzufügen. Außerdem ist es nur möglich, in Einzelfällen Tags hinzuzufügen, falls dies von der entsprechenden Webseite unterstützt wird. Um Tags hinzuzufügen, muss der Benutzer typischerweise Mitglied einer Community sein und kann nur innerhalb dieser Tags verteilen. Ein Ausnahmefall stellen hierbei "Lesezeichen Tagging Systeme" wie Delicous und Digg it dar. Hierbei kann der Benutzer Webseiten zu seinen Lesezeichen hinzufügen und mit Tags versehen. Ein Nachteil hierbei ist es, dass der Benutzer keine Teile von Webseiten taggen kann, sondern nur die Seite als Ganzes. Ein weiteres Beispiel ist das Taggen von Bildern. Beim Markieren von Bereichen auf Bildern kann der Nutzer generell nur Bilder taggen, sofern er Mitglied einer Community ist. Ferner werden Tags nicht in mehrdimensionale Schemen einsortiert.

"Collaborative OLAP with tag clouds" (http://arxiv.org/PS_cache/arxiv/pdf/0710/ 0710.2156v2.pdf) beschreibt OLAP-Operationen anhand von Tag-Clouds. Dabei können allerdings keine OLAP-Operationen anhand der mit der Tag-Cloud assoziierten Daten durchgeführt werden. Desweiteren ist keine Suchfunktion anhand der OLAP-Operationen möglich und es werden keine weiteren Dimensionen, außer der Tag-Cloud selbst, betrachtet.

Der vorliegenden Erfindung liegt deshalb das technische Problem zugrunde, ein System und ein Verfahren bereitzustellen mit dem auf Dokumente, insbesondere Softwarequellcode, systematisch und strukturiert zugegriffen werden kann, um die oben angesprochenen Nachteile zumindest zum Teil zu überwinden.

## 3. Zusammenfassung der Erfindung

Dieses Problem wird gemäß einem ersten Aspekt der Erfindung durch einen Hyperadapter für den Zugriff auf Dokumente und / oder Dokumententeile, die in einer Dokumentenbasis gespeichert sind, gelöst. In der Ausführungsform nach Patentanspruch 1 weist der Hyperadapter auf:

   a. einen Zugriffsübersetzer, der ausgebildet ist, um zumindest ein vom Hyperadapter empfangenes Zugriffsdokument zu verarbeiten, wobei das Zugriffsdokument eine oder mehrere Klassen von Dokumenten und / oder Dokumententeilen spezifiziert;

   b. wobei der Hyperadapter ausgebildet ist, die in der Dokumentenbasis gespeicherten Dokumente und / oder Dokumententeile anhand von im Zugriffsdokument spezifizierten Klassifikationsmitteln einer oder mehreren Klassen zuzuordnen.

Demnach stellt die vorliegende Erfindung einen Hyperadapter bereit, mit dessen Hilfe auf in einer Dokumentenbasis gespeicherte Dokumente und / oder Dokumententeile, insbesondere SoftwareQuellcode und deren Instruktionen, zugegriffen werden kann. Ein Zugriff kann hierbei das Auslesen, Schreiben, Ändern und / oder das Analysieren der Dokumente/Dokumententeile bedeuten. Aufgrund der Komplexität moderner Dokumentenbasen, beispielsweise im Bereich der Entwicklung komplexer Softwaresysteme, ist es wie bereits eingangs erläutert nicht möglich, die einzelnen darin enthaltenen Dokumente manuell zu analysieren bzw. überhaupt zu überblicken (da diese z.B. über ein Netzwerk wie das Internet verteilt sein können). Die vorliegende Erfindung basiert daher auf dem Konzept, die Dokumente bzw.

deren Teile in Klassen zu unterteilen, sodass die unüberschaubare Anzahl von Dokumenten in einer Dokumentenbasis durch Klassenbildung überhaupt erst handhabbar gemacht werden kann. Eine Klasse, im Folgenden auch "Dimension" genannt, stellt demnach einen Ausschnitt, eine Projektion, bzw. eine gefilterte Sicht auf eine Dokumentenbasis dar. Es sei angemerkt, dass ein gegebenes Dokument einer oder auch mehreren Klassen/Dimensionen gleichzeitig zugeordnet werden kann, d.h. es werden multidimensionale Zugriffe auf die Dokumentenbasis ermöglicht.

Die Klassifikation von Dokumenten bzw. deren Teilen findet dabei nicht, wie aus dem Stand der Technik bekannt, über fest vorgegebene Klassifikationsregeln statt. Vielmehr kann der Hyperadapter über ein empfangenes Zugriffsdokument Klassifikationsmittel erhalten, die spezifizieren, wie die in der Dokumentenbasis gespeicherten Dokumente zu klassifizieren sind. Dies ermöglicht eine besonders flexible Anpassung der Klassifizierung ohne die Notwendigkeit, den Hyperadapter anpassen zu müssen, da der Hyperadapter erst Laufzeit die zu verwendenden Klassifikationsmittel erhält.

In einem weiteren Aspekt der vorliegenden Erfindung kann der Hyperadapter ausgebildet sein, um die im Zugriffsdokument spezifizierten Klassifikationsmittel zu speichern und bei der Verarbeitung von zumindest einem zweiten empfangenen Zugriffsdokument zu verwenden. Demnach kann ein über ein Zugriffsdokument empfangenes Klassifikationsmittel nicht nur für den aktuellen Zugriff auf die Dokumentenbasis verwendet werden, sondern der Hyperadapter kann solche Klassifikationsmittel intern speichern und damit seine Funktionalität zur Verarbeitung zukünftiger Zugriffsdokumente erweitern. Die Klassifikationsmittel können zumindest ein Schema, eine oder mehrere Zuordnungsregeln und / oder ein oder mehrere Mappings aufweisen. Diese und weitere Möglichkeiten zur Spezifikation von Klassifikationsmitteln werden in der detaillierten Beschreibung näher erläutert.

Gemäß einem weiteren Aspekt der Erfindung kann der Zugriffsübersetzer eine Mehrzahl von vordefinierten Operationen zum Zugriff auf die in der Dokumentenbasis gespeicherten Dokumente und / oder Dokumententeile aufweisen und das zumindest eine Zugriffsdokument kann zumindest eine der vordefinierten Operationen referenzieren. Demnach ist es möglich, in einem Zugriffsdokument eine beliebig komplexe Folge von durchzuführenden Operationen zu spezifizieren, die der erfindungsgemäße Hyperadapter auf der Dokumentenbasis durchführen soll. Hierzu referenziert das Zugriffsdokument bevorzugterweise vordefinierte Operationen des Hyperadapters. Jedoch können im Zugriffsdokument auch neue Operationen, beispielsweise Programmcode, definiert werden, der mehrere vom Hyperadapter vorgegebene Operationen verknüpft. Hierdurch sind beliebige Erweiterungen der Funktionalität des Hyperadapters möglich.

Ferner können die Klassifikationsmittel ausgebildet sein, um ein Dokument und / oder einen Dokumententeil zu einer gewissen Wahrscheinlichkeit einer oder mehreren Klassen zuzuordnen. Demnach kann der Hyperadapter ausgebildet sein, unscharfe Zugriffe, beispielsweise mit Hilfe von Fuzzy Logic, zu unterstützen, wie in der detaillierten Beschreibung näher erläutert wird.

Das zumindest eine Zugriffsdokument kann eine Anfrage nach zumindest einer Klasse von Dokumenten und / oder Dokumententeilen spezifizieren, wobei der Hyperadapter ausgebildet ist, um zumindest ein Resultat zu erzeugen, welches die zumindest eine angefragte Klasse von Dokumenten und / oder Dokumententeilen aufweist. Demnach sind komplexe Abfragen der Dokumentenbasis möglich, wie in der detaillierten Beschreibung näher erläutert wird. Die Anfrage kann hierbei zumindest ein Beispieldokument aufweisen und der Hyperadapter kann ausgebildet sein, zumindest ein Resultat zu erzeugen, welches diejenige zumindest eine Klasse von Dokumenten und / oder Dokumententeilen aufweist, dem das Beispieldokument zugeordnet ist.

Ferner kann das zumindest eine Zugriffsdokument eine Schreibanforderung spezifiziert, die zusätzliche Informationen zu einem oder mehreren Dokumenten und / oder Dokumententeilen in der Dokumentenbasis aufweist, wobei der Hyperadapter ausgebildet ist, um die zusätzlichen Informationen in einen internen Speicher des Hyperadapters zu speichern. Demnach ermöglicht es der Hyperadapter, die Dokumente und / oder Dokumententeile in Dokumentenbasen "virtuell" zu editieren, obwohl diese tatsächlich nicht schreibbar sind. In diesem Fall werden die zusätzlichen Informationen, die geschrieben werden sollen, in einem internen Speicher des Hyperadapters abgelegt und vorzugsweise geeignet mit den "Original"-Dokumenten in der Dokumentenbasis verknüpft. Der Hyperadapter kann hierbei ausgebildet sein, bei der Verarbeitung zumindest einer zweiten Anfrage zumindest ein Resultat zu erzeugen, wobei das Resultat die angefragte Klasse von Dokumenten und / oder Dokumententeilen aus der Dokumentenbasis und die zusätzlichen Informationen aus dem internen Speicher des Hyperadapters aufweist. Folglich werden bei einer nachfolgenden Leseanfrage die angefragten Dokumente bzw. deren Teile mit den zuvor gespeicherten Zusatzinformationen kombiniert, um die (unbeschreibbare) Dokumentenbasis effektiv für einen Benutzer schreibbar zu machen.

Der Hyperadapter kann zumindest einen Detektor aufweisen, der ausgebildet ist, um die Dokumentenbasis zu analysieren und daraus ein oder mehrere Klassifikationsmittel zu erzeugen. Der erfindungsgemäße Hyperadapter bietet in verschiedenen Ausführungsformen eine Vielzahl verschiedener spezialisierter Detektoren an, um Dokumentenbasen zu analysieren und die darin enthaltenen Dokumente bzw. deren Teile zu klassifizieren, wie in der detaillierten Beschreibung gezeigt wird.

In einer besonders vorteilhaften Ausführungsform enthalten die in der Dokumentenbasis gespeicherten Dokumente Quellcode enthalten und der zumindest eine Detektor ist ausgebildet, um den Quellcode in Klassen/Dimensionen einzuordnen, die den Energieverbrauch angeben, den eine oder mehrere Maschinen benötigen, um Instruktionen des Quellcodes auszuführen. Demnach kann der Energieverbrauch eines gegebenen Softwareprogramms analysiert werden, was insbesondere im Bereich eingebetteter Software von großer Bedeutung ist. Der Hyperadapter stellt darüber hinaus weitere Detektoren bereit, um andere relevante physikalische Größen zu analysieren, wie z.B. die Temperatur, Druckverhältnisse oder weitere in der detaillierten Beschreibung erläuterte Größen.

Die vorliegende Erfindung betrifft ferner ein Verfahren zum Zugreifen auf Dokumente und / oder Dokumententeile, die in einer Dokumentenbasis gespeichert sind, wobei das Verfahren die folgenden Schritte aufweist: Verarbeiten zumindest eines Zugriffsdokuments, wobei das Zugriffsdokument eine oder mehrere Klassen von Dokumenten und / oder Dokumententeilen spezifiziert, wobei der vorherige Schritt das Zuordnen der in der Dokumentenbasis gespeicherten Dokumente und / oder Dokumententeile zu einer oder mehreren Klassen anhand von im Zugriffsdokument spezifizierten Klassifikationsmitteln aufweist. Weitere vorteilhafte Ausführungsformen des erfindungsgemäßen Verfahrens finden sich in den weiteren abhängigen Ansprüchen.

Zuletzt stellt die vorliegende Erfindung ein Computerprogramm bereit, das Instruktionen aufweist um jegliche hierin beschriebene Verfahren auszuführen.

## 4. Kurze Beschreibung der Zeichnungen

Im Folgenden werden bevorzugte Ausführungsbeispiele der vorliegenden Erfindung unter Bezugnahme auf die begleitenden Figuren erläutert:

Fig. 1 - 6:     Schematische Darstellungen eines Softwaresystems;

Fig. 7a:     Ein Beispiel eines Blogeintrags;

Fig. 7b:     Ein Pseudocode-Beispiel einer Robotersteuerung;

Fig. 7c:     Ein Beispiel eines Softwareentwicklungsfragments (SEF);

Fig. 8a:     Ein Beispiel für Dimensionen eines Blogs;

Fig. 8b-c:     Beispiele für Dimensionen;

Fig. 8d:     Ein exemplarisches Schema;

Fig. 9:     Ein Hyperadapter nach einer Ausführungsform der vorliegenden Erfindung;

Fig. 10:     Ein Hyperadapter mit einem oder mehreren Detektoren nach einer Ausführungsform der vorliegenden Erfindung;

Fig. 11-14:     Interaktion eines Hyperadapters mit einem oder mehreren Klienten nach Ausführungsformen der vorliegenden Erfindung;

Fig. 15:     Detektoren und Dimensionsschemata nach einer Ausführungsform der vorliegenden Erfindung;;

Fig. 16:     Ein Zugriffsübersetzer mit Dokumentenauswerter nach einer Ausführungsform der vorliegenden Erfindung;

Fig. 17:     Ein Zugriffsübersetzer mit Schnittstelle nach einer Ausführungsform der vorliegenden Erfindung;

Fig. 18:     Ein Bibliotheksdetektor nach einer Ausführungsform der vorliegenden Erfindung;

Fig. 19:     Ein Ausführungszeitdetektor nach einer Ausführungsform der vorliegenden Erfindung;

Fig. 20:     Ein Detektor für die Veränderung der Temperatur einer Maschine nach einer Ausführungsform der vorliegenden Erfindung;

Fig. 21:     Ein Beispiel für eine Implementierung von Schemata mit Index für einen Hyperadapter nach einer Ausführungsform der vorliegenden Erfindung;

Fig. 22: Ein Beispiel für eine Fusion von Hyperadapter und Dokumentenbasis nach einer Ausführungsform der vorliegenden Erfindung;

Fig. 23: Ein Beispiel für Newsrouting nach einer Ausführungsform der vorliegenden Erfindung;

Fig. 24: Ein beispielhaftes Verfahren zum Newsrouting-Anwendungsfall nach einer Ausführungsform der vorliegenden Erfindung;

Fig. 25: Ein Beispiel für "Slicing" nach einer Ausführungsform der vorliegenden Erfindung;

Fig. 26: Ein Beispiel für "Slicing" mit "AND" nach einer Ausführungsform der vorliegenden Erfindung;

Fig. 27: Ein Beispiel für einen "Dice" nach einer Ausführungsform der vorliegenden Erfindung;

Fig. 28: Ein Beispiel für einen "Hypercut" nach einer Ausführungsform der vorliegenden Erfindung;

Fig. 29: Ein Beispiel für einen "Hypercut" in einem System mit "Service Layer" nach einer Ausführungsform der vorliegenden Erfindung;

Fig. 30: Ein Beispiel für eine "Hyper Cascade" nach einer Ausführungsform der vorliegenden Erfindung; und

Fig. 31-43: Exemplarische Bildschirmmasken eines in einer integrierten Entwicklungsumgebung eingebetteten Hyperadapters nach einer Ausführungsform der vorliegenden Erfindung.

## 5. Detaillierte Beschreibung von bevorzugten Ausführungsformen

Die vorliegende Erfindung betrifft in einer Ausführungsform allgemein die Softwareentwicklung und insbesondere die Analyse und Bewertung von Softwareentwicklungsfragmenten. Unter Softwareentwicklungsfragmenten (SEF) sind hierbei jegliche Elemente/Artefakte zu verstehen, die bei der Softwareentwicklung erzeugt und / oder benutzt werden, beispielsweise Quelltextdokumente, Programmcode, kompilierte Elemente, Konfigurationsdateien, DSLs, Modelle, Bugs/Fehler, Versionen oder Teile davon oder zugehörige Systeme, d.h. alle Elemente und Systeme, die im Zusammenhang mit der Softwareentwicklung auftreten.

Aufgrund der Eigenschaften der vorliegenden Erfindung ist diese auch in weiteren Bereichen einsetzbar, insbesondere im Bereich des Internets. Zum Beispiel kann die Erfindung in einigen Ausführungsformen als Suchmaschine oder Suchsystem genutzt werden. Des Weiteren kann sie dazu dienen, ein System oder Gerät für das Internet bereit zu stellen, das es dem Benutzer ermöglicht, das Netz "schreibbar, veränderbar und personalisiert" zu benutzen.

Ein weiterer Einsatzort der Erfindung ist es, sie dazu zu nutzen, Informationen zu klassifizieren oder zu routen/ weiterzuleiten. Dabei ist es denkbar, aufgrund von Klassifikationen auch Operationen in externen Systemen durchführen zu lassen.

Grundsätzlich kann die Erfindung auch als mehrdimensionales Adaptersystem verwendet werden. Durch sie ist es möglich, mit Datenquellen dimensionsorientiert zu arbeiten.

Die vorliegende Erfindung arbeitet vorzugsweise auf einer Dokumentenbasis, in der die SEF abgelegt sind. Hierbei nehmen die SEF den Status von Dokumenten in der Dokumentenbasis ein, weshalb die Begriffe "Softwareentwicklungsfragment (SEF" und "Dokument" im Folgenden synonym verwendet werden. Ein Beispiel für eine Dokumentenbasis ist ein Dateisystem. Jedoch kann eine Dokumentenbasis auch aktiv sein, beispielsweise kann die Datenbasis/ Dokumentenbasis ein Webserver sein, oder auch mehrere Webserver, wie das Internet. Dabei bezieht sich der Begriff Datenbasis auch auf mehrere Systeme oder auch über Computernetzwerke gekoppelte Systeme. Der Begriff Dokument ist demnach ein Sammelbegriff für alle möglichen Ausgaben einer Datenbasis. Ein Dokument kann z.B. dynamisch von einer Datenbasis generiert werden, weshalb eine Datenbasis im Rahmen der vorliegenden Erfindung als Quelle oder Kombination von Quellen oder Quellsystemen anzusehen ist, von welchen Daten angefordert, geschrieben und / oder geändert werden können. Ein Dokument ist demnach eine logische Einheit, eine Partition, Komponente und / oder Unterteilung und trifft daher auch auf Teile von Dokumenten zu. Solche Teile von Dokumenten werden im Rahmen der vorliegenden Erfindung auch Dokumentenfragmente genannt, was bedeutet, dass ein solches Dokumentenfragment Teil einer größeren logischen Einheit ist. Ausführungsformen der vorliegenden Erfindung können dabei die Strukturinformationen der Datenbasis nutzen, um Zugriffe und Analysen der Datenbasis zu verbessern und / oder zu beschleunigen. Als Datenbasis können beispielsweise folgende Daten und zugehörige Systeme oder Systeme allein dienen: Hypertextdokumente, Word Dokumente, E-Mails, Webserver, Programmcode, Versionskontrollsysteme, Subversion, CVS, Application Server, SAP Systeme, Data Warehouses, Textdokumente, Bilder, Geodaten, Komponentenmodelle, virtuelle Maschinen, Issue Tracking Systeme, Testfälle, Modelle, Domänenspzifische Sprachen, Openoffice Dokumente, Blogs, Twitter, Social Networks, mobile Geräte, wie beispielsweise Handys, Peer-to-Peer-Netzwerke, Eingabegeräte, Dateisysteme, Datenbanken, Suchmaschinen, Server, Router, Maschinen, Sensoren, Testsysteme, Debugger, Menschen und / oder Automobile. Sofern die vorliegende Erfindung in einem Computernetzwerk eingesetzt wird, kann dieses Netzwerk und dessen Teilnehmer die Rolle der Datenbasis einnehmen, im Internet z.B. das Internetnetzwerk selbst, Peer-to-Peer-Netzwerke, Webserver, Internetseiten, Klienten, mobile Klienten (z.B. Mobiltelefone, Notebooks, PDAs, etc.) und weitere Akteure. Eine Internetseite kennzeichnet dabei ein Dokument, das über das Internet erreichbar ist und kann verschiedene Inhalte umfassen, die dort auftreten, wie z.B. für Hypertextdokumente, Videos, Bilder und weitere Dokumente, die Hyperlinks beinhalten können. Der Begriff Internetseite kann auch für mehrere Dokumente stehen, z.B. alle oder ein Teil der Seiten unter einer bestimmten Domain. Somit ist der Begriff Internetseite auch ein Sammelbegriff für das, was allgemein Website oder Webseite genannt wird, d.h. ein Sammelbegriff für einen gesamten Internetauftritt, z.B. ein Auftritt eines Unternehmens, einer Organisation, einer Privatperson, eines Vereins, einer Interessensgruppe oder zu einem bestimmten Zweck, z.B. Verkauf, Handel, Information, Diskussion, Austausch, Vergnügen, Suche, Vermittlung etc.. Eine solche Internetseite kann über verschiedene Protokolle übertragen werden, z.B. TCP/IP, HTTP, HTTPS, FTP, POP3, SMTP und andere Protokolle, die zur Kommunikation in Computernetzwerken eingesetzt werden.

Grundstruktur von komplexen Softwaresystemen

Softwareentwicklungsfragmente (SEF) sind typischerweise über eine Vielzahl von Systemen verteilt, die über Netzwerke erreichbar sind. Dabei sind alle Informationen typischerweise in Dateien und Verzeichnissen abgelegt. In einer Datei werden oft eine Vielzahl von Belangen/Dimensionen vermischt, z.B. Kommentare und operativer Code.

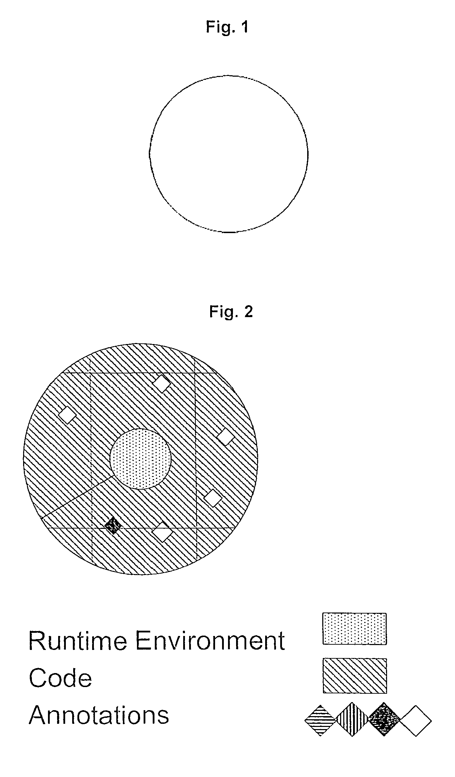

Die Figuren 1 - 6 zeigen in diesem Kontext schematisch ein Softwaresystem mit einer Vielzahl von Belangen/ Dimensionen. In Fig. 1 symbolisiert dabei der Kreis die Gesamtheit aller Fragmente (SEF) und darin vorkommenden Dimensionen des Softwaresystems, die bei der Softwareentwicklung eingesetzt werden. Fig. 2 zeigt ein Softwaresystem mit Annotationen. Annotationen können überall im Quellcode vorkommen und sind zur Laufzeit und / oder zur Compilezeit verfügbar. Diese Funktionalität wird typischerweise von der Plattform (Runtime Environment), auf der die Software ausgeführt wird, zur Verfügung gestellt. Daher zeigt Fig. 2 eine solche Plattform, auf der das Softwaresystem ausgeführt und / oder compiliert wird. Die verschiedenen Annotationen sind in Fig. 2 exemplarisch durch verschiedene Graustufen dargestellt, wodurch verdeutlicht werden soll, dass Annotationen beliebig über den Quellcode verteilt sein können.

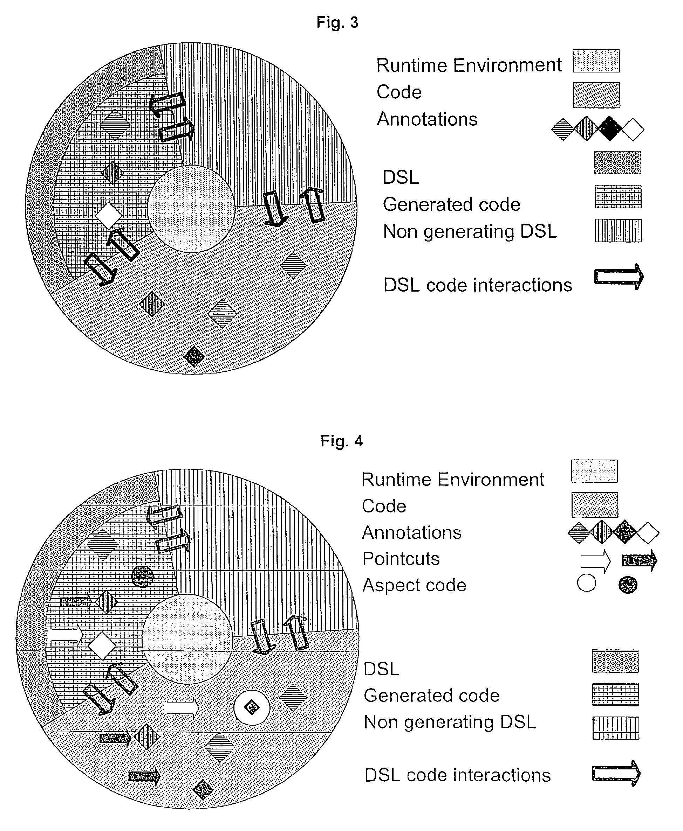

Fig. 3 zeigt ein erweitertes Softwaresystem mit Annotationen und DSLs, da Domänenspezifische Sprachen (DSLs) und zugehörige Modelle in vielen Fällen Teil eines Softwaresystems sind. DSLs treten in zwei verschiedenen Formen auf; zur Codegenerierung und als DSLs, die interpretiert werden. Interpretierte DSLs benötigen einen Interpreter, der es ermöglicht sie auszuführen und ist normalerweise durch eine Bibliothek realisiert (in Fig. 3 nicht gezeigt). Interpretierte DSLs können mit Code interagieren und / oder Code kann mit ihnen interagieren (siehe die Pfeile in Fig. 3). codegenerierende DSLs interagieren durch ihren generierten Code mit dem herkömmlichen Sourcecode. Im konkreten Modell einer generierenden DSL ist es möglich, dass diese auf Codefragmente verweist und umgekehrt. Die weiße Annotation im Abschnitt links in Fig. 3 kommt dabei nur im generierten Code vor und soll darstellen, dass der generierte Code durch spezielle Annotationen gekennzeichnet werden kann.

Die nächste Erweiterung der Veranschaulichung eines Softwaresystems sind Aspekte, wie sie in Fig. 4 gezeigt sind. Aspekte bestehen aus Code ("Advices") und / oder "Pointcuts", welche Stellen markieren an denen ein Advice ausgeführt wird. Die gleichen Farben bei Aspekt und Pointcut markieren in Fig. 4 die Zugehörigkeit. Dabei können Annotationen auch dazu dienen, Pointcuts zu definieren (siehe die graue Annotation in Fig. 4). Im Umkehrschluss ist es auch möglich, dass der Code eines Aspektes eine Annotation enthält. Pointcuts können sowohl in handgeschriebenem Code als auch in generiertem Code auftreten. Die Definition des Aspekt-Codes als auch eines Pointcuts kann ebenfalls in generiertem und handgeschriebenem Code auftreten.

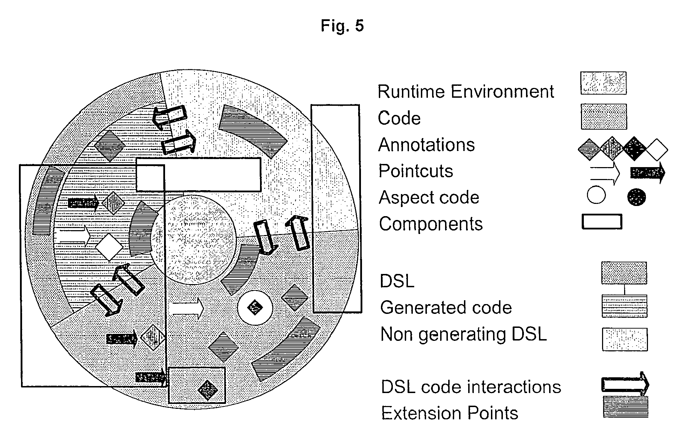

Fig. 5 zeigt die nächste Erweiterung der Visualisierung eines Softwaresystems. Hinzugekommen sind hier "Extension Points" und Komponenten. Die Extension Points zeigen Stellen des Softwaresystems an, wo die Anwendung erweitert werden kann. Solche Erweiterungen können z.B. durch Frameworks realisiert werden. Auch die beiden oben genannten DSL-Arten können Extension Points definieren. Dabei könnte dies bei einer generierenden DSL sowohl in einem Modell selbst sein, als auch im generierten Code. Im Bezug auf Aspekte könnten auch diese Erweiterungspunkte definieren. Dies würde es ermöglichen, den Aspektcode durch eine Erweiterung anzureichern. Exemplarisch wurden einzelne Teile des Systems in Fig. 5 zerschnitten, wobei die Umrandung zeigen soll, was zu einer speziellen Komponente gehört. Eine Komponente kann aus den verschiedensten Teilen des Systems bestehen. Die Abhängigkeit einer Komponente von den Teilen einer anderen wird durch die Überlappungen dargestellt.

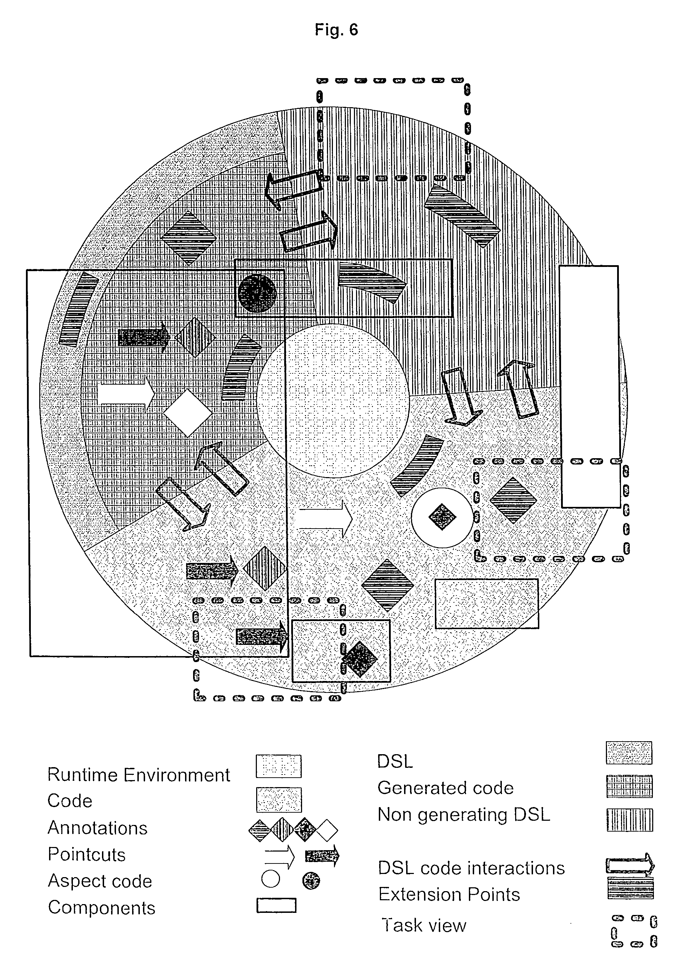

Das Softwaresystem wird wie zuvor vom Entwickler gesehen, weshalb der Entwickler ein unstrukturiertes Chaos sieht. Durch Werkzeuge wie z.B. Mylyn hat er jedoch eine Möglichkeit, das Chaos zumindest im Blickwinkel einer Aufgabe teilweise zu entwirren. Dies wird in Abbildung 6 gezeigt. Die dort dargestellten zusätzlichen Task views (durch die perspektivischen Umrandungen dargestellt) sollen zeigen, dass der Entwickler nur noch einen Teil bei der Modifikation einer Aufgabe wahrnimmt. Zu einer Modifikations- oder Erweiterungsaufgabe kann der Entwickler Fragmente nutzen, die quer über das ganze System verteilt sind. Dabei nimmt der Entwickler nur noch die relevanten Details seiner Aufgabe wahr, die mit dieser assoziiert sind.

Anhand des schrittweisen Aufbaus des Softwaresystems in Fig. 1 - 6 wird deutlich, dass eine Vielzahl verschiedener Fragmente (SEFs) eines Softwaresystems auf komplexe Weise miteinander interagieren. Dabei ist in Fig. 1 - 6 bisher nicht die Interaktion von Teilen im Quelltext selbst dargestellt. Der Ausgangspunkt der vorliegenden Erfindung ist es daher, dass die Betrachtungsweise gegenüber einem Softwaresystem geändert werden muss.

Die Ausgangssichtweise der Erfindung ist, dass SEF und Softwaresysteme ein multidimensionales Gebilde darstellten. Eine Dimension (auch "Concern" oder "Belang" genannt) repräsentiert hierbei einen Ausschnitt, eine Projektion oder einen Filter des Betrachtungsgegenstands (in diesem Fall eines SEF), der nur die relevante Untermenge des Gegenstands enthält. Dabei ist es unerheblich, in welcher Programmiersprache Software erstellt wird. Die SEF eines Softwaresystems liegen typischerweise nicht nur in einer einzigen Dimension, sondern sie sind in mehreren Dimensionen gleichzeitig vorhanden, was die bereits oben angesprochenen Probleme wie Tangling und Scattering aus der objektorientierten Programmierung hervorruft.

Grundfunktionalität der Erfindung

Ein grundlegender Aspekt der vorliegenden Erfindung ist es, dass der Mensch stets versucht, Informationen zu strukturieren und sie in Beziehung zueinander zu setzen. Dabei werden im Kontext komplexer Softwaresysteme in den verschiedenen Systemen und Dateien Informationen abgelegt. Eine Aufgabe der Erfindung ist es daher, eine technische Zugriffsmöglichkeit und Identifikation auf die einzelnen Dimensionen und / oder deren Beziehungen zu ermöglichen.

Die vorliegende Erfindung ermöglicht es daher in einigen Ausführungsformen, Dimensionen eines oder mehrerer Softwaresysteme und deren SEF technisch zu erkennen und sie in mehrdimensionale Schemata einzuordnen. Doch auch schon ohne mehrdimensionale Schemata ist es von großem Nutzen, mehrdimensionale Operationen aufgrund von Dimensionen von SEF auszuführen. Dies spaltet die im Folgenden offenbarte Erfindung in verschiedene Aspekte, die getrennt oder zusammen eingesetzt werden können: Der mehrdimensionale Zugriff, d.h. der Zugriff aufgrund von mehrdimensionalen Operationen, die aufgrund von Dimensionen durchgeführt werden können. Das technische Erkennen von Dimensionen. Die Analyse aufgrund von Dimensionen. Das Ordnen der Dimensionen aufgrund mehrdimensionaler Schemata.

Es sei angemerkt, dass aufgrund der Tatsache dass SEF sich grundsätzlich von betriebswirtschaftlichen Daten unterscheiden, herkömmliche Data Warehouse-Konzepte für die vorliegende Erfindung untauglich sind. Beispielsweise existieren oftmals SEF, die mehreren Dimensionen parallel zugeordnet werden können. Daher ergibt sich die weitere Herausforderung, diesen Umstand im Bezug auf SEF zu beachten.

Die vorliegende Erfindung betrifft in einigen Ausführungsformen weitere Anwendungsgebiete. Bereits oben wurde dargelegt, dass jegliche Art von Dokument verschiedene Dimensionen enthalten kann, insbesondere Hypertextdokumente im Internet. Wird z.B. ein Internet-Blog betrachtet, so hat ein Eintrag ("Post") in diesem Blog verschiedene Dimensionen, wie Eintragsdatum, Kommentare, Autor und / oder Tags. Somit bringt der im Rahmen dieser Erfindung offenbarte Apparat und das zugehörige Verfahren auch Vorteile in diesen Anwendungsfeldern, jenseits von Softwaresystemen. Sofern die obigen Daten als einzelne Dimensionen aufgefasst werden, ist es möglich mehrdimensionale Operationen auf sie anzuwenden. Selbst wenn Daten in Hypertextdokumenten, z.B. im Internet, nach Dimensionen strukturiert wären, so existiert heutzutage noch keine Suchmaschine, die mehrdimensionale Operationen bei Suchen zulässt.

Das Beispiel eines Blogs zeigt bei genauerer Betrachtung, dass die Daten, die als Dokumente teilweise im Internet verfügbar sind, teilweise schon in Datenbanken zur Verfügung gestellt werden. Falls ein direkter Zugriff auf diese Datenbank(en) möglich ist, vereinfacht dies das Dimensionserkennen. Auch im anderen Fall, ist das Konzept mehrdimensionaler Suchoperationen, wie auch die Dimensionen in Schemata einzuordnen, vorteilhaft. Dies verdeutlicht den weiteren Mangel im Stand der Technik, dass es heutzutage keine Suchmaschine gibt, die es ermöglicht nach einzelnen Dimensionen, Verknüpfungen oder in einer Hierarchie zu suchen.

Ein wesentlicher Aspekt der vorliegenden Erfindung ist es daher, einen mehrdimensionalen Adapter bereitzustellen, der es ermöglicht Dimensionen zu erkennen und / oder mehrdimensionale Zugriffe durchzuführen. Aufgrund der verschiedenen betrachteten Dimensionen wird der erfindungsgemäße Adapter auch Hyperadapter genannt. Sofern der Hyperadapter dafür eingesetzt wird, Softwaresysteme zu entwickeln, werden die durch den Hyperadapter ermöglichten Prozesse unter dem Sammelbegriff Hypermodelling zusammengefasst. Der Begriff des Modellings kommt daher, dass bei der Softwareentwicklung typischerweise immer mit Modellen, d.h. Abstraktionen, der Realität gearbeitet wird, und zudem oftmals formale Modelle und / oder DSLs genutzt werden.

Beispiele für Dimensionen

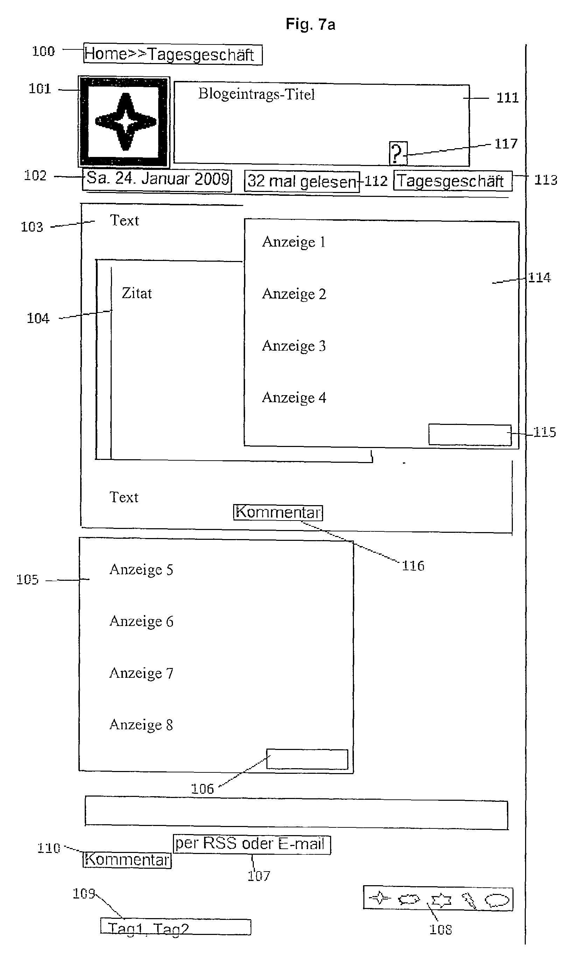

Im Folgenden wird das Konzept der Dimensionen anhand des oben genannten Beispiels eines Internet-Blogs gezeigt. Fig. 7a zeigt einen Auszug aus einem Internet-Blog, wobei die einrahmenden Markierungen die verschiedenen Dimensionen eines Blogeintrags (Blogposts) anzeigen. Fig. 7a zeigt, einen Pfad 100 zu dem Blogpost, welcher in der Hierarchie unter Home→Tagesgeschäft zu finden ist. Ferner sieht man ein mit dem Blogpost assoziiertes Bild 101, wobei entweder der Blogpost als Dimension ein solches Bild besitzen kann, oder ein Bild kann als Dimension einen Blogpost besitzen. Mit 102 ist die Dimension der Zeit angegeben, zu der der Blogpost verfasst wurde. Außerdem enthält der Blogpost einen schriftlichen Inhalt 103 mit einem Zitat 104 (d.h. das Zitat 104 ist eine Unterdimension des Inhalts 103). Mit 116 ist eine weitere Unterdimension der Schriftdimension des Blogposts bezeichnet, nämlich die Dimension des Verweises auf eine weitere Dimension. In diesem Beispiel enthält der Post einen Verweis auf die Kommentarerstellung. 105 und 114 umfassen die Dimension der Werbung des Blogposts. Dabei kann diese Dimension noch weiter spezifiziert werden. Durch entsprechende Labels 106 und 115 kann in diesem Beispiel der Anbieter der Werbung bekannt sein. Auch dies könnte als Hierarchie aufgefasst werden. Die Dimension "Werbung" enthält die Dimension "Anzeigen dieses Anbieters", welche wiederum die konkrete Werbung enthält. Ein weiterer Verweis auf eine andere Dimension ist die Dimension des Abonnierens 107. Der Link 107 führt zu einer Seite, auf der es ermöglicht wird, weitere Blogposts des Blogs durch verschiedene technische Kanäle zu empfangen, z.B. per E-Mail. Diese Dimension bezieht sich dabei nicht auf den konkreten Blogpost, sondern viel mehr auf den Blog als Ganzes. Ferner ist es über das Steuerelement 108 möglich, den Blog zu den Favoriten oder zu verschiedenen sozialen Netzwerken hinzuzufügen, was eine Operationsdimension repräsentiert. Die Dimension der Tags 109 des Blogposts befindet sich zusätzlich noch in der Dimension der Links, da sie durch einen Hyperlink unterlegt sind. 110 zeigt einen weiteren Verweis auf die Kommentardimension 116. Während 111 die Dimension der Überschrift des Blogposts zeigt, kann die Dimension der Überschrift 111 weiter in die Dimension der Fragen 117 spezifiziert werden. Schließlich zeigt 112 die Anzahl der Leser bis zum derzeitigen Besuch, die den Blogpost gelesen haben.

Außer den in der Fig. 7a gezeigten Dimensionen kann ein solcher Blogpost noch weitere Dimensionen besitzen. Beispielsweise ist er unter einer URL 118 (in Fig. 7a nicht gezeigt) zu finden, welche eine Domain 119 ausweist. Desweiteren gehört der Blog einem Autor 120, der ihn betreut und besitzt einem Namen 125. Der Autor 120 kann über die umliegenden Elemente, die in Fig. 7a nicht gezeigt sind, festgestellt werden. Desweiteren können noch weitere Dimensionen indirekt bestimmt werden. Beispielsweise die Post-/Eintragssprache 128 oder die Zitatsprache 129, oder z.B. die Dimension Werbung. Die Anzahl der Anzeigen 121 ist im Beispiel von Fig. 7a acht. Auch würde sich die Länge des Posts und des Zitates messen lassen, d.h. die Zitatlänge 124, die Postlänge 126 und / oder die Postlänge ohne Zitat 127. Dasselbige wäre für Zitate möglich 123 oder die Anzahl von Tags 124.

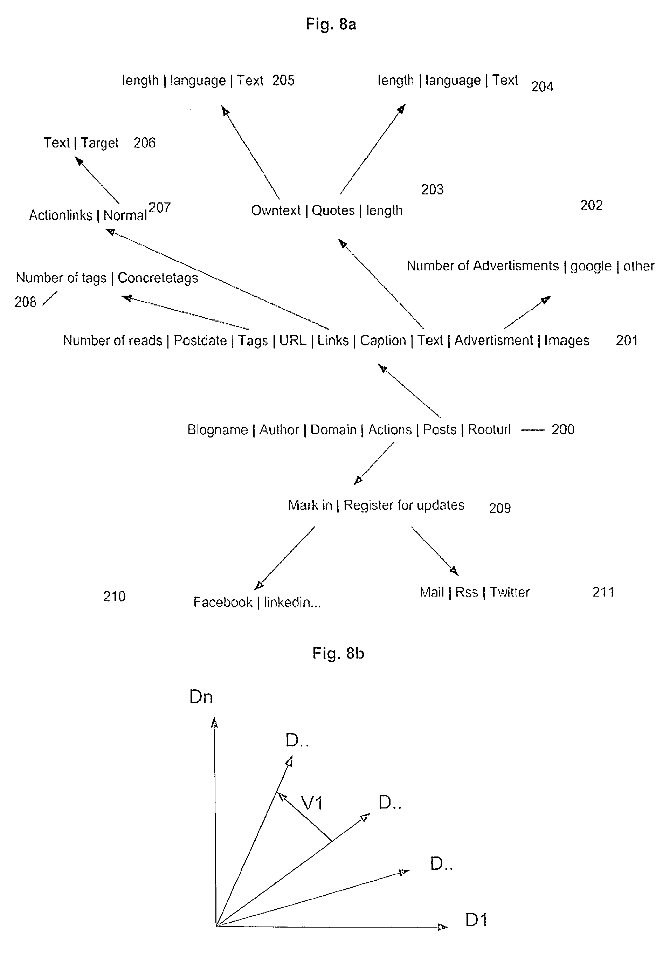

Beispiel für ein mehrdimensionales Schema anhand eines Blogs: Durch die einzelnen Dimensionen kann der Blog in ein Schema einsortiert werden. Ein Beispiel für ein Schema ist Fig. 8a gezeigt. Es folgt eine Erläuterung mit der partiellen Einordnung der im Beispiel von Fig. 7a für Dimensionen anhand eines Blogs beschriebenen Dimensionen. 200 zeigt hier die Urdimension für einen Blog. Ein solcher Blog hat einen Autor 120, eine Rooturl, die z.B. eine Domain 119 sein kann, sowie Aktionen, die durchgeführt werden können. Diese Aktionen lassen sich noch einmal weiter unterteilen, wie durch 209 gezeigt. Letztendlich lässt sich so 210 zu 108 und 211 zu 107 zuordnen. Außerdem besitzt ein solcher Blog auch einen Namen 125, der dem Blognamen zugeordnet werden kann. Ein solcher Blog hat die Dimension von Posts 201. Die weitere Zuordnung ist aufgrund der Tatsache, dass sie analog zu der Urdimension erfolgt, und durch die bisherige Ausführung Klarheit über die Vorgehensweise besteht, im Weiteren nur stichwortartig beschrieben: In 201 können die Inhalte von einzelnen Posts zugeordnet werden. Number of reads (201) kann 112 zugeordnet werden. Postdate (201) 102. Url (201) 108. Caption (201) 111. Images (201) 101. Concretetags (208) 109. Number of Tags (208) 124. Actionlinks (207) 116. Normal (207) Beispielsweise 109 und die zugehörigen Linkziele (nicht eingezeichnet) in 206. 205 kann dem Zitat 104 und den daraus erfolgten Berechnungen 124, 129, 124, 129 entnommen werden. 204 ebenso durch 127, 128, 127, 130. 203 (length) kann durch 126 beschrieben werden. 202 kann durch 121, 105, 106, 114, 115 bestimmt werden.

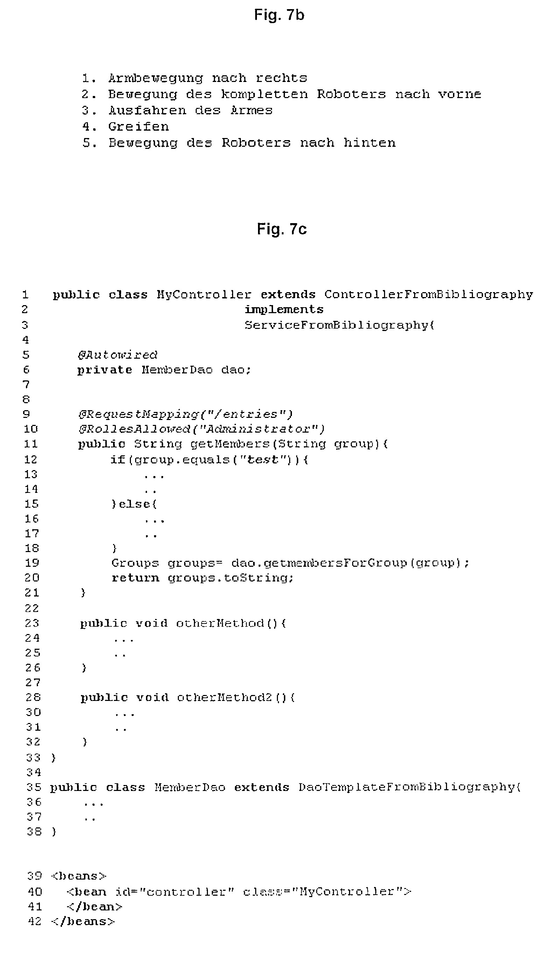

Fig. 7b zeigt ein weiteres Beispiel für Dimensionen anhand von aufeinanderfolgenden Anweisungen, wie durch Funktionsaufrufe ein Roboter mit einem Arm gesteuert wird. Die zugehörige Implementierung der Funktionen können zum Beispiel von einer Programmbibliothek zur Verfügung gestellt werden. Alle Befehle, die im Pseudocode aufgerufen werden, liegen in der Dimension des Roboters. Dabei kann jede der Anweisungen in weiteren Dimensionen liegen. Zum Beispiel, wie viel Strom eine einzelne Funktion verbraucht. Oder auch wie stark sich Wärme, durch die Bewegung des Roboters, in diesem selbst oder seiner Umgebung entwickelt. Eine weitere Dimension könnten zum Beispiel auch die Druckveränderungen innerhalb von Komponenten des Roboters sein. Die Dimensionen müssen dabei nicht direkt auf eine Zeile bezogen sein, sondern auch auf mehrere Zeilen. Zum Beispiel der Stromverbrauch, den der komplette Pseudocode durch Roboterbewegungen bewirkt.

Fig. 7c zeigt einen Ausschnitt von Pseudoquellcode, der an die Programmiersprache Java angelehnt ist und ein weiteres Beispiel für Dimensionen darstellt. Dieses Beispiel wäre auch in anderen Programmiersprachen, wie z.B.

C, C++, Prolog, ABAP, C#, Visual Basic, funktionalen Sprachen, DSLs, oder in Kombination mit diesen denkbar. Der Quellcode im Beispiel besitzt verschiedene Dimensionen. Im Quelltext kommen oftmals Punkte, wie in Zeile 13 und 14, vor, die andeuten, dass an ihrer Stelle beliebiger Inhalt stehen kann. Die Klasse MemberDao in Quellcodezeile 35 bis 38 erbt von einer Klasse aus einem Framework, die es erleichtert, den Zugriff auf eine Datenbank herzustellen. Aufgrund des Erbens ist es feststellbar, das diese MemberDao Klasse in der Dimension der Data Access Objects (DAO) liegt.

Zeile 1 bis 33 stellt die MyController Klasse dar. Die Klasse selbst ist in der Dimension der Controller, erkennbar anhand des Erbens in Zeile 1 von ControllerFromBibliography. Gleichzeitig ist die Klasse in der Dimension der Services und der Dimension der Beans. In der Dimension der Services ist die Klasse deshalb, weil in Zeile 1,2,3 dazu genutzt werden, das ServiceFromBibliography zu implementieren. In der Dimension der Beans ist die Klasse, da sie einer Konfigurationsdatei, von Zeile 39-42 dargestellt, als Bean definiert wird. Diese Mitgliedschaft in der Dimension Beans ist ein gutes Beispiel dafür, dass auch verschiedene Sprachen gemeinsam analysiert werden können. In diesem Beispiel, die deklarative domänenspezifische Sprache zur Beandefinition, zusammen mit Quellcode.

Die weiteren Teile der Klasse sind Methoden und Felder. Diese sind Unterdimensionen und Teil einer Klasse. Das Feld dao in Zeile 6, und somit ein Teil der Klasse, ist durch die @Autowired Annnotation in Zeile 5 in die zusätzlich Dimension der automatisch verbundenen Felder versetzt. Aufgrund von Zeile 9 ist die Methode getMembers in Zeile 11 in der Dimension der Methoden, die unter einer URL verfügbar sind. Genauer sogar noch eine Methode, die unter der URL /entries erreichbar ist. Gleichzeitig ist diese Methode durch Zeile 10 abgesichert. Sie ist somit zudem in der Dimension der gesicherten Methoden. Genauer sogar in der Dimension der gesicherten Methoden, auf die nur Administratoren zugreifen dürfen. Die Methode kann zudem weitere Dimensionen besitzen. Zum Beispiel eine Durchlaufzeit. oder die Energieaufnahme. In der Methode, in Zeile 19 zu sehen, dass auf eine weitere Dimension, die Dimension der dao zugegriffen wird und somit eine Verbindung zur dao Dimension existiert. Es könnte auch anders ausgedrückt gesagt werden, dass der Methodenaufruf oder das Feld in Zeile 6 in der dao Dimension liegen. Bei dieser Betrachtungsweise wäre somit die Funktion zu einer gewissen Prozentzahl in einer weiteren Dimension.

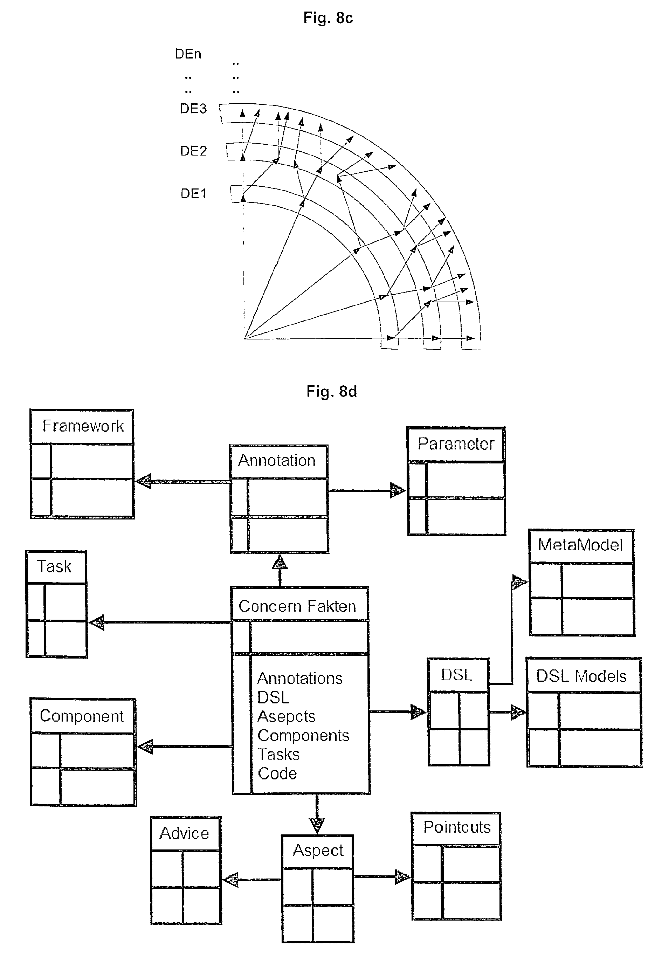

Mit der vorhergehenden Beschreibung des Quellcodes wurde desweiteren die Erläuterung klarer, was ein Softwarefragment (SEF) ist. Zum Beispiel ist jede Zeile Quellcode, auch mehrere Zeilen, eine Funktion oder eine Klasse, ein SEF. Ein solches SEF kann in verschiedenen Dimensionen liegen, wie zuvor gezeigt wurde. In Fig. 8b werden abstrakt die Dimensionen dargestellt. Dabei zeigen D1, D.. und Dn, dass es unendlich viele Dimensionen sein können. V1 ist ein Beispiel dafür, dass Elemente einer Dimension auf Elemente in anderen Dimensionen verweisen können. Dies könnte zum Beispiel der Aufruf vom MyController in Zeile 19 der DAO Dimension sein. Zusätzlich lassen sich Dimensionen auch hierarchisch anordnen. Zum Beispiel kann die Dimension dao eine Unterdimension der größeren Dimension Persistenz sein. Gezeigt wird dies exemplarisch in Fig. 8c. Hierbei sind die Dimensionen in Dimensionsebenen (DE1 bis DEn) eingeteilt. Die Ebenen sind als Hilfsmittel eingezeichnet. Sie sollen verdeutlichen, dass jede Dimension weitere Unterdimensionen haben kann, und dies auch unendlich in die Tiefe gehen kann, d.h. dass Unterdimensionen wiederum Unterdimensionen haben können. Fig. 8b und 8c sind natürlich nicht nur auf Software, sondern auch auf andere Einsatzgebiete des erfindungsgemäßen Hyperadapters zu beziehen und stellen auch hierfür ein abstraktes Beispiel dar.

Aufgrund der Dimensionen von SEF könnte dies zum Beispiel wie in Abbildung Fig. 8d dargestellt werden. Diese Grafik zeigt exemplarisch ein mehrdimensionales Schema für SEF, um das zuvor gesagte, anhand eines Beispieles besser visualisieren zu können. Dabei ist das Zentrum der Zeichnung als Fakten benannt. Unter diesen Fakten sind Assoziationen zwischen verschiedenen Dimensionen zu verstehen. Beispielhaft ist ein SEF in dieser Zeichnung als Code benannt. Durch diesen Code sind hierbei die Dimensionen verknüpft. Zum Beispiel besitzt ein SEF Annotationen mit Parametern, die aus verschiedenen Programmbibliotheken stammen können. Zum Beispiel aus der Java Standardbibliothek oder dem Spring Framework. Ein SEF kann auch Teil von Tasks oder und von Komponenten (Component) sein. Zusätzlich kann es von Aspekten betroffen sein. Eine weitere Möglichkeit sind DSLs, die zum Beispiel auf den Code zugreifen, oder aus denen der Quelltext generiert wurde.

Natürlich kann Code auch ein Modell einer DSL sein. Es kann auch sein, dass ein solches Schema weiter hierarchisch aufgebaut ist. Dies ist ansatzweise in der Grafik dargestellt. Auf den Quelltext könnte durch Modelle einer DSL verwiesen werden, und die DSL selbst besitzt ein Metamodell.

Mit DSLs wäre es zudem denkbar, Hierarchien abzubilden. Zum Beispiel könnte eine DSL Beans im Quellcode definieren. Eine weitere könnte Abläufe definieren, bei denen auf Beans zugegriffen wird. Somit ist eine Hierarchie im Bezug auf Modelle vorhanden: Quellcode - Beans - Abläufe.

Dies könnte ebenso in einem solchen Schema abgebildet werden. In der Realwelt ist es möglich, dieses Beispiel durch Java und der Spring Beans DSL und der Spring Webflow DSL des Spring Frameworks einer Modellhierarchie exemplarisch zu betrachten.

Anwendbarkeit von mathematischen Methoden: Abstrakt kann zusammenfassend ein Dokument, oder eine Dokumentenbasis als mehrdimensionaler Raum mit Dimensionen gesehen werden. Diese Dimensionen könnten auch mit anderen Dimensionsbegriffen aus der Mathematik (z.B. Schauder-Dimension, Mannigfaltigkeiten, Hausdorff-Dimension, topologische Dimension und / oder Hamel-Dimension) belegt werden. Dadurch lassen sich die mathematischen Regeln und Berechnungen in diesem Bezug einsetzen. Zusätzlich kann und sollte das mehrdimensionale Schema nicht als absolut gesehen werden. Es kann mehrere Schemen geben, denen sich die Dimensionen zuordnen lassen. Somit ist die Sichtweise der Hierarchie relativ zu dem Standpunkt des Betrachters. Auch kann es sein, das Berechungen von dem Betrachtungswinkel der Dimensionen abhängig sind. Beispielsweise ist der Abstand zweier Punkte auf der Erde, betrachtet in 2D, anders als der Abstand betrachtet in 3D. Ebenso kann dies bei den Dimensionen, von denen in diesem Dokument gesprochen wird, der Fall sein. Beispielsweise kann ein Dokument oder eine Dokumentenbasis eine Mannigfaltigkeit darstellen, vergleichbar mit der Oberfläche der Erde. Jede Dimension kann in verschiedene Schemata eingeordnet werden. Vergleichbar einer Karte im Atlas. Solche Dimensionen und Schemata können auch als mehrdimensionale Körper aufgefasst werden.

Struktureller Aufbau des Hyperadapters

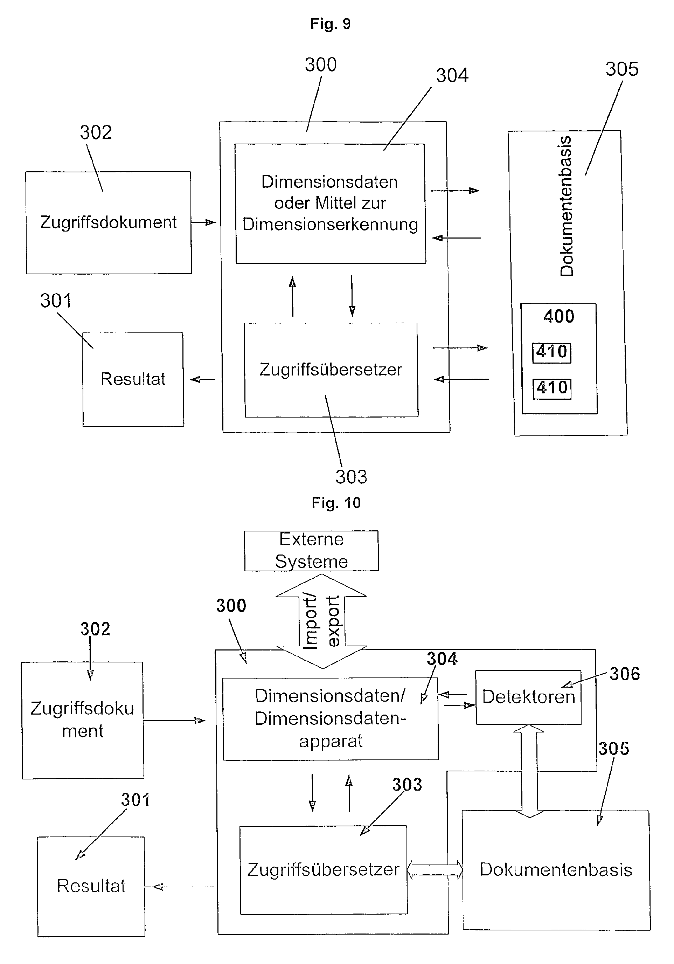

Hyperadapter: Fig. 9 zeigt einen Hyperadapter 300 gemäß der vorliegenden Erfindung. Der Hyperadapter 300 nimmt ein Zugriffsdokument 302 aus einer nicht dargestellten Eingabeeinheit entgegen. Das Zugriffsdokument 302 kann sowohl von einem menschlichen Benutzer als auch von einer Maschine erzeugt werden. Der Hyperadapter 300 weist Mittel auf, mit denen er das Zugriffsdokument 302 auswerten kann, wie z.B. einen Zugriffsübersetzer 303 (im Folgenden auch Zugriffsauswerter genannt). Dieser nutzt die Inhalte des Zugriffsdokumentes 302, um nötige Operationen durchzuführen und ein Resultat 301 zu erzeugen. Operationen können z.B. das Zusammenstellen des Resultates 301, oder bei einem Schreibvorgang das Schreiben in eine Datenbasis 305 sein. Dabei enthält der Hyperadapter 300 Mittel, um Dimensionen in der Datenbasis 305 zu erkennen. Solche Mittel 305 sind zum Beispiel Dimensionsdaten 304 (im Folgenden auch Schemata genannt). Dimensionsdaten 304 könnten auch schon in der Datenbasis 305 selbst vorhanden sein. Der Zugriffsübersetzer 303 kann diese Mittel 304 nutzen, um das Resultat 301 zu erzeugen.

Grundfunktionalität: Grundlegend bietet der Hyperadapter 300 die Funktionalität für Analysen auch mit Berechnungen, der Nutzung als Suchmaschine, Dimensionserzeugung und / oder - planung, Filter, Schreib- und / oder Lesevorgänge in Dimensionen oder Dimensionteilen und / oder der Dimensionierung bzw. Dimensionsanalyse eines Dokumentes. Dimensionieren, bzw. Dimensionsanalyse bedeutet hierbei, dass ein Dokument nach Dimensionen untersucht wird. Zusätzlich kann er noch Mengenoperationen aufgrund von Dimensionen durchführen. Desweiteren kann er als virtueller Adapter genutzt werden. Virtueller Adapter bedeutet, dass ein mehrdimensionaler Zugriff auf nicht explizit mehrdimensionale Ressourcen möglich ist. Die einzelnen Fähigkeiten des Hyperadapters können dabei als eigenständige technische Geräte realisiert werden oder kombiniert in einem Gerät.

Zugriffsdokument: Zugriffsdokument 302 bedeutet in diesem Zusammenhang nicht zwangsläufig ein Dokument im klassischen Sinne. Ein Zugriffsdokument 302 kann auch das Aufrufen von API-Funktionen sein. Das Zugriffsdokument 302 können auch andere Techniken sein, die bei dem Zugriff auf Computerimplementierte Erfindungen genutzt werden. Im Ergebnis repräsentiert ein Zugriffsdokument 302 jegliche Information zur Steuerung des Hyperadapters 300.

Beispiele für Inhalte des Zugriffsdokumentes 302: Der Inhalt des Zugriffsdokumentes 302 kann dazu genutzt werden, die Grundfunktionalitäten des Hyperadapters 300 anzusprechen. Beispielsweise kann es aus einer Anfrage bestehen, eine Dimension eines Dokumentes aus der Datenbasis 305 zurückzugeben, d.h. alle Dokumententeile, die in der angeforderten Dimension liegen bzw. dieser zugeordnet sind. Dabei können in einem solchen Zugriffsdokument 302 auch Dimensionen durch logische Verknüpfungen angegeben werden, beispielsweise die Dimension der Werbung bei einem Blogpost (siehe das Beispiel weiter oben), wobei die Dimension der Werbung für einen bestimmten Blogpost gefordert wird.

Ein weiteres Zugriffsdokument 302 könnte das Anfordern von Dokumenten oder Referenzen auf diese sein, die zu im Zugriffsdokument 302 spezifizierten Dimensionen gehören.

Sofern ein Zugriffsdokument 302 ein Resultat 301 zur Folge hat, das eine Teilmenge oder Referenzen oder Verweise auf eine Teilmenge des zugrundeliegenden Informationsbestandes ist, so wird das Zugriffsdokument 302 auch als Abfrage oder Query bezeichnet.

Ein anderes Beispiel ist es, Daten aus dem Zugriffsdokument 302 in eine spezielle Dimension zu schreiben. Man beachte, dass über das Zugriffsdokument 302 auch interne Teile, dies bedeutet Daten, Funktionen oder Geräte, des Hyperadapters 300 angesprochen werden können. Zusätzlich ist es möglich, dass Inhalte eines Zugriffsdokumentes 302 wie die Datenbasis 305 behandelt werden können.

Man beachte, dass es möglich ist, im Zugriffsdokument 302 Dimensionsdaten zu übermitteln, die dann beim Auswerten des Zugriffs mit einbezogen werden. In einem einfachen Fall können beispielsweise einzelne Teile der Datenbasis 305 einer bestimmten Dimension zugeordnet werden.

Solche Klassifikationsmittel können ausgebildet sein, um zu spezifizieren, mit welchen Mitteln eine Anfrage beantwortet werden soll. Durch diese flexible Anpassung wird es zum Beispiel ermöglicht, Probleme herkömmlicher Suchmaschinen elegant zu umgehen. Damit ist es zum Beispiel möglich, mehr als eine festgeschriebene Frage zu beantworten, indem die Mittel zur Beantwortung der Frage spezifiziert werden können. Des Weiteren können die Mittel auch dazu genutzt werden, um die Beziehungen zwischen den einzelnen Dimensionen zu beschreiben. Zusätzlich können Klassifikationsmittel auch indirekt gegeben sein. Indirekt beutet, dass der Hyperadapter selbst automatisch bestimmt, welche Klassifikationsmittel er aufgrund der Inhalte des Zugriffsdokuments verwendet.

Resultat: Das Resultat 301 ist ebenso wie das Zugriffsdokument 302 nicht zwangsläufig ein Dokument im klassischen Sinne. Daher können die gleichen Möglichkeiten wie für das Zugriffsdokument 302 genutzt werden.

Beispiele für das Resultat: Das Resultat 301 kann zum Beispiel eine positive Rückmeldung bei einem Schreibvorgang sein. Als Alternative könnte das Resultat 301 auch Referenzen oder Verweise auf die Dimensionen, die durch das Zugriffsdokument 302 angefordert wurden, sein. Das Resultat 301 könnte auch die Inhalte der geforderten Dimensionen zurück liefern. Eine weitere Variante könnte das Ausführen von Callback-Operationen sein.

Verfahren: Die vorliegende Erfindung kann zudem bei einem Verfahren eingesetzt werden, das folgende Schritte aufweist: (1) Aufdecken von Dimensionen einer Datenbasis, (2) Übersetzen eines dimensionalen Zugriffs mit Hilfe der aufgedeckten Dimensionen und / oder (3) Zusammenstellen und / oder Übersetzung des Resultates der dimensionalen Anfrage. Man beachte, dass die Schritte im Verfahren auch in der Reihenfolge getauscht werden können, insbesondere Schritt 1 und 2. Hierbei sei erwähnt, dass Schritt 1 durch Dimensionsdaten 304 oder auch durch weitere Mittel und Verfahren, wie beispielsweise Dimensionserkennungsregeln, geschehen kann, die es ermöglichen, Dimensionen zu identifizieren.

Zugriffsmöglichkeiten auf den Hyperadapter 300: Der Hyperadapter 300 kann als eigenständige Maschine, über ein Computernetzwerk, besonders bevorzugt ein TCP oder UDP/IP Netzwerk erreichbar sein. Es kann zusätzlich möglich sein, den Zugriff über das HTTP Protokoll herzustellen. Desweiteren kann er auch über eine REST-Schnittstelle (vgl. "Representational State Transfer", http://de.wikipedia.org/wiki/Representational_State_Transfer), über eine Webservice/SOAP Schnittstelle oder über eine Remote Procedure Call Schnittstelle verfügen. Auch ist es möglich, dass der Hyperadapter 300 über ein Webinterface erreichbar ist, oder über eine hardwareseitige Schnittstelle.

Verteilbarkeit der Komponenten: Der Hyperadapter 300 kann zudem über mehrere Maschinen/Rechner verteilt werden und / oder als verteiltes System realisiert werden. Beispielsweise können die Dimensionsdaten 304 auf einem anderen Gerät allokiert sein, wie z.B. der Zugriffsauswerter/-übersetzer 303. Die verschiedenen Bestandteile der Erfindung können dann über ein Computernetzwerk miteinander kommunizieren. Eine weitere Möglichkeit ist es, den Hyperadapter 300 in einem Peer-to-Peer-Netzwerk zu realisieren.

Erweiterung: Gemäß einer Ausführungsform ist der Zugriffsübersetzer 303 auch dazu fähig, im Zugriffsdokument 302 definierte Logik einfließen zu lassen. Dies können z.B. Erkennungsregeln für weitere Dimensionen sein. Oder es ist möglich, Daten über Dimensionen anzugeben. Somit wäre es möglich, für die Dauer des Zugriffs und / oder über eine Mehrzahl von Zugriffen hinweg Dimension A als Teil von Dimension B zu behandeln. Solche Logik kann z.B. dauerhaft im Hyperadapter 300 hinterlegt und durch weitere Zugriffsdokumente angesprochen werden. Desweiteren ist es möglich, durch solche Logik auch die Integration von weiteren, externen Daten in die Datenbasis 305 für die Dauer eines Zugriffs, oder gegebenenfalls auch dauerhaft zu integrieren.

Ausgabekanal: Eine Erweiterung des Hyperadapters 300 ermöglicht es, verschiedene Ausgabekanäle zu wählen. Beispielsweise können Ergebnisse 301 eines Zugriffs 302 direkt auf einem Drucker ausgegeben werden. Desweiteren ist es auch denkbar, als Ausgabekanal weitere technische Geräte, Systeme und / oder Netzwerke zu wählen, z.B. Mobilfunknetze, SMS, Handy, PDA, FAX, E-mail, Internet, Mobilfunkverbindungen, PDF, Verteilende Systeme, Bildschirme, Webserver oder viele weitere. Man beachte, dass es auch möglich ist, Ausgabekanäle auf Grund von Regeln, die z.B. im Resultat 301 enthaltene Dimensionen berücksichtigen, zu wählen. Solche Regeln können im Hyperadapter 300 hinterlegt und / oder im Zugriffsdokument 302 spezifiziert und / oder referenziert werden. Vergleicht man den Hyperadapter 300 mit einer Suchmaschine, so lassen es diese nicht zu, den Ausgabekanal zu spezifizieren.

Schnittstelle: Optionalerweise enthält der Hyperadapter 300 eine dimensionsorientierte Schnittstelle. Diese Schnittstelle kann beispielsweise im Zugriffsübersetzer 303 realisiert werden.

Vorgefertigte Operationen: In einer besonders bevorzugten Ausführungsform weist der Hyperadapter 300 vordefinierte Operationen auf, die nützlich für Zugriffe aller Art sind. Diese Operationen dienen beispielsweise dazu, dass über das Zugriffsdokument 302 spezifiziert werden kann, welche Aktionen der Hyperadapter 300 durchführen soll. Beispiele für solche Operationen sind das Lesen und Schreiben von Dimensionen, die Analyse, das Auffinden von Dimensionskreuzungen, das Dimensionieren eines Zugriffsdokumentes 302 oder auch das Integrieren von im Zugriffsdokument 302 spezifizierten Regeln. Desweiteren könnten solche Operationen beispielsweise auch das Anfordern einer Dimensionsliste für ein bestimmtes Dokument aus der Datenbasis 305 sein. Es ist weiterhin denkbar, dass zum Beispiel Operationen wie das Integrieren eines bestimmten Dokumentes in die Datenbasis 305 durch solche Operationen vorgenommen werden kann. Eine weitere denkbare Operation ist das Integrieren von Informationen eines Dokumentes zu den Dimensionsdaten 304. Diese Operationen werden auch als logische Schnittstelle bezeichnet. Um eine solche Funktionalität bereit zu stellen, könnten diese beispielsweise im Zugriffsübersetzer 303 realisiert werden. In besonders bevorzugter Weise sind bei diesen Operationen auch mehrdimensionale Operationen vorhanden, die optionalerweise auch Hierarchien im Zusammenhang mit Dimensionen berücksichtigen können.

Dimensionsdaten und Alternativen: Wie bereits erläutert weist der Hyperadapter 300 Mittel auf, um Dimensionen zu identifizieren. Ein solches Mittel können Dimensionsdaten 304 sein, die Informationen darüber enthalten, welche Dimensionen in der Datenbasis 305 vorhanden sind. Eine andere Möglichkeit ist es, dass diese Mittel über einen eigenen Apparat bereitgestellt werden. Dieser Apparat wird Dimensionsdatenapparat genannt. Eine weitere Möglichkeit ist, dass weitere externe Programme oder Maschinen, beispielsweise die weiter unten beschriebenen Detektoren, die Dimensionsdaten erzeugen.

Dimensionsdaten: Ein einfaches Beispiel für Dimensionsdaten 304 ist eine Liste von Dimensionen und Angaben, wo Fragmente der Dimension aufzufinden sind. Dimensionsdaten 304 können zum Beispiel auch Regeln sein, auf welche Weise Dimensionen in der Datenbasis 305 oder in einem Zugriffsdokument 302 erkannt werden können. Desweiteren ist es möglich, dass die Regeln in einer computerlauffähigen Form definiert werden. Beispielsweise können die Regeln in einer Logiksprache (z.B. Prolog, Tyruba und weitere) definiert werden, oder es ist möglich, dass die Regeln auf einer virtuellen Maschine, einem Interpreter, oder einem Mikroprozessor lauffähig sind (Java, C#, Python, C++, C, Visual Basic, PHP und weitere). Desweiteren ist es hierbei möglich, dass die Regeln vor ihrer Ausführung kompiliert werden müssen (z.B. Quelltexte).

Eine Alternative zu den Dimensionsdaten 304 als Regeln können auch Mappings sein. Mappings spezifizieren, welche Dokumententeile aus der Datenbasis 305 zu welchen Dimensionen gehören. Beispielsweise könnte ein solches Mapping Verweise oder Referenzen zu dimensionszugehörigen Teilen enthalten. Ein Beispiel für eine Datenstruktur, wie ein solches Mapping umgesetzt werden könnte ist eine Map-Set Kombination. Dabei würden in der Map die Dimensionen gespeichert und im Set die zugehörigen Verweise oder Referenzen. Verweise oder Referenzen können z.B. Hardlinks, Softlinks, Pointer, Verweise oder Referenzen auf Regeln oder auch Regeln selbst sein.

Dimensionsdatenstrukturen: Dimensionsdaten 304 können durch verschiedene Datenstrukturen realisiert werden. Beispielsweise durch mehrdimensionale Schemen, die dem bereits oben beschriebenen Schema ähnlich sind, Erweiterungen dessen darstellen oder auf denselben oder ähnlichen Gedankengängen beruhen. Desweiteren ist es möglich solche Datenstrukturen implizit in ein Computerprogramm einzuweben. Implizit bedeutet hierbei, dass nicht direkt ein mehrdimensionales Schema im Programmcode verwendet wird, sondern dessen Logik durch Programmcode realisiert wird. Selbiges gilt natürlich auch für Programmcode mit mehreren Schemata. Eine weitere Möglichkeit für Dimensionsdaten 304 ist es, weitere Geräte zu benutzen, wie beispielsweise einen Dimensionsdatenapparat oder Detektoren.

Detektoren: Eine besonders bevorzugte Erweiterung eines Hyperadapters 300 sind Dimensionsdetektoren 306 (siehe Fig. 10). Detektoren 306 können dazu genutzt werden, um Dimensionen oder deren Fragmente und Daten über diese in der Datenbasis 305 aufzudecken. Desweiteren können durch Detektoren 306 auch Beziehungen zwischen Dimensionen aufgedeckt werden. Besonders bevorzugt jedoch werden sie in Kombination mit Dimensionsdaten 304 verwendet. Oftmals können Detektoren 306 selbst als eigenständiges technisches Gerät realisiert werden. Desweiteren ist es auch möglich, dass Detektoren 306 sich aus mehreren einzelnen Detektoren 306 zusammen setzen. Beispielhafte Detektoren 306 finden sich in den Anwendungsfällen weiter unten. Detektoren 306 können auch dazu genutzt werden, Dimensionsdaten ersetzen und direkt im Zugriffauswerter 303 eingesetzt zu werden. Hierbei ist beispielsweise die Kombination einer impliziten, im Programmcode vorhandenen, Datenstruktur mit Detektoren 306 denkbar.

Detektoren und Dimensionsdaten: In einer besonders bevorzugten Ausführung können Dimensionsdaten auch Verweise auf Detektoren 306 enthalten. Eine weitere Möglichkeit ist es, dass die Detektoren 306 Daten über aufgedeckte Dimensionen in die Dimensionsdaten 304 schreiben. Detektoren können zudem Dimensionsdaten nutzen, um weitere Dimensionen zu erkennen. Abbildung 10 zeigt einen Hyperadapter 300 mit Dimensionsdaten 304 und Detektoren 306. Dabei ist zu sehen, dass die Dimensionsdaten 304 in externe Systeme exportiert oder von ihnen importiert werden können.

Dimensionsdaten: Eine erweiterte Version des Hyperadapters 300 erlaubt es, Anfragen, die durch Zugriffsdokumente 302 gestellt wurden, Dimension zuzuordnen. Dabei können solche Anfragen gespeichert werden. Dies kann z.B. dazu dienen, diese weiteren oder existierenden Dimensionen zuzuordnen.

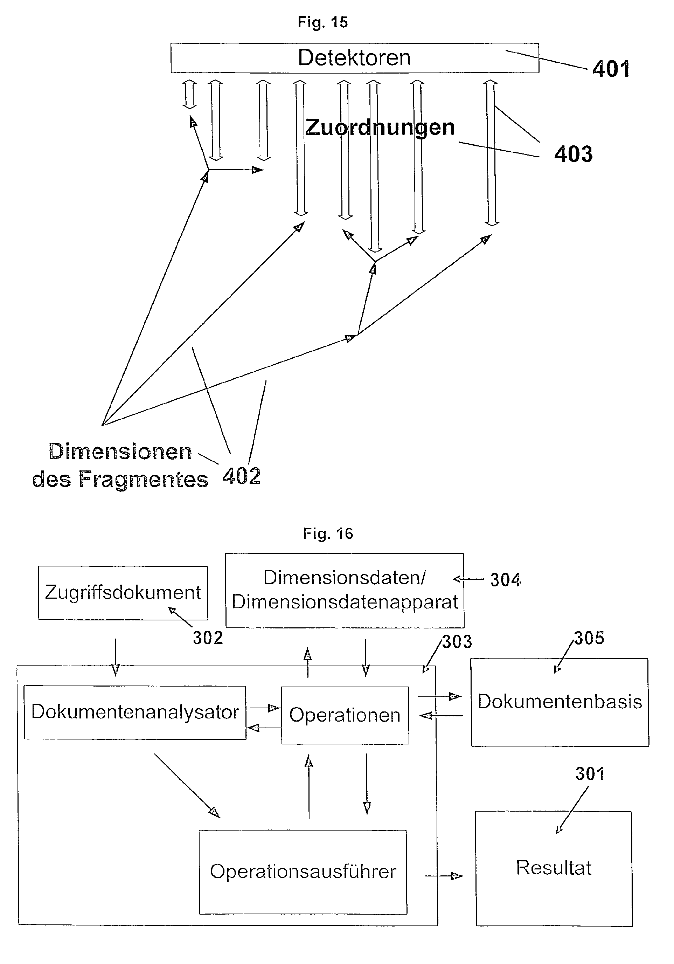

Dimensionsdaten Detektoren Schema: Als Alternative zu einfachen Mappings können, wie im anfänglichen Beispiel gezeigt, mehrdimensionale Schemata eingesetzt werden. Fig. 15 zeigt exemplarisch das Zusammenwirken von Detektoren 401 und einem mehrdimensionalen Schema 402. Dabei ordnen die Detektoren 401 die einzelnen Dimensionen in das Schema 402 ein. Die Zuordnungen 403 zeigen an, dass die Detektoren 401 auf das Schema 402 zugreifen können. Ebenso ist es denkbar, dass das Schema 402 Verweise zu den Detektoren 401 enthält.

Fuzzy Logic: Eine zusätzliche Erweiterung des Hyperadapters 300 kann Fuzzy Logic nutzen. Fuzzy Logic kann an verschiedenen Stellen im Hyperadapter 300 eingesetzt werden:

Dimensionsdaten mit Fuzzy Angaben: Eine weitere bevorzugte Ausführung kann unscharfe Angaben bei den Dimensionsdaten 304 enthalten. Beispielsweise kann eine unscharfe Angabe eine Prozentzahl sein, inwiefern ein Dokumentenfragment oder Dokument zu einer oder mehreren Dimensionen zugehörig ist. Eine weitere Möglichkeit ist es, dass die Regeln und / oder Detektoren 306, 401 zur Dimensionsidentifikation unscharfe Angaben liefern. In einem solchen Fall können die Regeln selbst ein unscharfes Ergebnis liefern, oder eine Regel oder ein Detektor selbst und deren Ergebnis kann als unscharf definiert werden. Auch eine Kombination ist hier denkbar. Die letztendliche Zugehörigkeitszahl könnte dann über komplexe oder einfache Rechungen bestimmt werden. Als komplexe Rechnungen können eigenständige Maschinen oder Computerprogrammprodukte dienen.

Beispiel zu unscharfen Angaben: Dabei kann beispielsweise eine Regel R oder ein Detektor D das Ergebnis liefern, dass Fragment F mit einer Wahrscheinlichkeit von z % in einer Dimension liegt. Die Regel R oder D selbst könnte als y % genau eingestuft werden. Die letztendliche Zugehörigkeit könnte dann über z * y = Dimensionszugehörigkeit in % oder andere, komplexere Rechnungen ermöglicht werden.

Technische Realisierung der Dimensionsdaten: Grundsätzlich können die Daten 304 auf eigenen Systemen, Geräten oder verschiedenen Datenspeichern, wie Festplatten, Flashkarten, Bandlaufwerken, Arbeitsspeichern oder ähnlichen Speicherungstechnologien gespeichert werden. Als Speicher könnten weiter spezialisiert für Dimensionsdaten 304 relationale oder multidimensionale Datenbanken verwendet werden. Hierbei ist es auch denkbar, Data Warehouse Systeme oder zugehörige Technologien einzusetzen. Desweiteren ist es möglich, Dimensionsdaten 304 in einem XML-Dokument oder in einem Dateisystem zu speichern. Eine weitere Möglichkeit wäre es, die Daten 304 in Dokumenten oder der Datenbasis 305 selbst zu speichern. Desweiteren sind Mischformen denkbar.

Technische Realisierung mit IDs: Für mehrdimensionale Schemata von Dimensionsdaten wird besonders bevorzugt Fragmenten der Datenbasis 305 eine Identität / ein Identifizierer (ID) zugeordnet, da ein Fragment in mehreren Schemata vorkommen kann. Eine solche ID kann beispielsweise von einem Zähler generiert werden. Es ist aber auch möglich, dazu Hashverfahren zu verwenden. Hashverfahren haben an dieser Stelle den Vorteil, dass aus einem Fragment direkt die ID berechnet werden kann, ohne ein System, z.B. den Zähler, befragen zu müssen. Sofern Fragmente der Dokumentenbasis 305 in Versionskontrollsystem abgelegt sind, werden bevorzugt IDs mit Bezug auf dieses System erzeugt.

Grunddimensionen: Ein Hyperadapter 300 kann auch eine oder mehrere Grunddimensionen aufweisen. Mit Grunddimensionen sind elementare Dimensionen gemeint, in der sich die anderen Dimensionen befinden. Solche Grunddimensionen können beispielsweise Lesen, Schreiben, Ändern und / oder Erzeugen sein. In diesem Kontext ist es wichtig, darauf hinzuweisen, dass nicht nur schon existierende Inhalte als Dimensionen aufgefasst werden können, sondern auch beispielsweise Formulare, die es ermöglichen, Inhalte hinzuzufügen. Kommentieren ist beispielsweise eine Unterdimension von Schreiben. Unter Anderem können die Grunddimensionen dazu genutzt werden, mit Zugriffstypen assoziiert zu werden, z. B. kann bei einem schreibenden Zugriff auf die Kommentardimension ein Kommentar geschrieben werden. Dies könnte durch einen REST POST Zugriff auf den Hyperadapter 300 geschehen.

Dimensionsmetadaten: Optionalerweise weist der Hyperadapter 300 Dimensionsmetadaten auf. Diese enthalten Daten / Informationen über die einzelnen Dimensionen. Beispielsweise können dies Stichwörter sein, die die Dimensionen näher beschreiben. Dabei gibt es die Möglichkeit, dass diese statisch angelegt werden. Eine weitere ergänzende Möglichkeit ist das Aufdecken von Dimensionsmetadaten durch Detektoren und / oder Dimensionserkennungsregeln. Beispielsweise können bei der Analyse von Computerprogrammen Kommentare im Quelltext von Dimensionen als Dimensionsmetadaten identifiziert werden. So könnte eine Annotation einen Kommentar haben, die beschreibt für was der zugehörige Quelltext eingesetzt werden soll, im Falle von Java beispielsweise deren Javadoc. Diese Beschreibungen können in den Dimensionsmetadaten hinzugefügt, referenziert und / oder als Verweis verwendet werden.

Zugriffsübersetzer: Die Erfindung kann auch einen Zugriffsübersetzer 303 aufweisen, der dafür zuständig ist, ein oder mehrere Zugriffsdokument(e) 302 zu analysieren und darin oder daraus folgende Operationen durchzuführen. Ein solcher Zugriffsübersetzer 303 kann beispielsweise durch einen Interpreter, Bytecode-Interpreter, einen Compiler oder einen JIT-Compiler umgesetzt werden. Besonders bevorzugt werden bei der Realisierung eines Zugriffsübersetzers 303 Erkenntnisse aus der Datenbanktechnologie, Data Warehousing und von Complilern/Interpretern verwendet.

Dabei kann es auch sein, dass mehrstufige Verfahren zum Einsatz kommen. Mehrstufig bedeutet, dass der Zugriffsübersetzer 303 zunächst selbst analysiert wird und erst daraus ein interpretierbares oder kompilierbares Dokument erzeugt wird. Dabei ist es desweiteren denkbar, dass hybride Verfahren genutzt werden.

Ein solcher Zugriffsübersetzer 303 kann desweiteren als Emulator fungieren. Beispielsweise, in dem er den Zugriff auf Dimensionen über eine Streaming API anbietet. Ein Client kann hierbei auf die Dimension zugreifen, als wäre sie eine normale Datei.

Die Operationen, die vom Zugriffsübersetzer 303 durchgeführt werden, können dabei implizit oder explizit ausgelöst werden. Implizit wäre beispielsweise das automatische Durchführen einer Schreiboperation, sofern eine Streaming API angeboten wird und ein Schreibvorgang, der von dem Client darauf ausgeführt wird. Explizit bedeutet in diesem Kontext, dass die Aktion bzw. die Aktionen, die durchgeführt werden soll(en), direkt im Zugriffsdokument 302 definiert ist/sind.

In einer besonders bevorzugten Ausführungsform nutzt der Zugriffsübersetzer 303 andere Komponenten der Erfindung, um die durch das Zugriffsdokument 302 geforderten Operationen durchzuführen. Optionalerweise unterstützt der Zugriffsübersetzer 303 auch die weiteren Funktionen und Daten, die in der logischen Schnittstelle und anderen Teilen der Erfindung beschrieben sind.

Dimensionserkennung im Zugriffsdokument: Das Spezifizieren einer Dimension kann zum Beispiel in einem Zugriffsdokument 302 über einen oder mehrere Identifikatoren geschehen. Ein solcher Identifikator für eine Dimension kann beispielsweise ein einzigartiger Bezeichner sein. Desweiteren kann die Erkennung der geforderten Dimensionen auch aufgrund von Dimensionsmetadaten durchgeführt werden. Beispielsweise, indem die Dimensionen in dem Zugriffsdokument 302 durch Stichwörter/Tags beschrieben sind, und diese mit den Stichwörtern in den Dimensionsmetadaten verglichen werden. Für einen solchen Vergleich können aus dem Stand der Technik bekannte Mittel oder Verfahren eingesetzt werden. Eine alternative Möglichkeit ist es, die Dimensionen im Zugriffsdokument 302 anhand eines Beispiels anzugeben. So könnte beispielsweise die Dimension der Überschriften eines Dokumentes angefordert werden. Dabei könnte im Zugriffsdokument 302 ein Dokument, in dem Überschriften enthalten sind, als Beispiel gegeben werden. Der Zugriffsauswerter 303 kann dann mit anderen Mitteln des Hyperadapters 300, beispielsweise Detektoren 306, die Dimensionen im Beispieldokument bestimmen.

Speichereinheit: Man beachte, dass beim Schreiben von Daten in Dimensionen, beim Ändern von Inhalten von Dimensionen und / oder beim Erzeugen von neuen Dimensionen, der Hyperadapter 300 auch über Mittel verfügen kann, die Daten direkt in die Datenbasis 305 zu schreiben, beispielsweise über den Zugriffsauswerter 303. Desweiteren ist es möglich, dass der Hyperadapter 300 über eine eigene Speichereinheit verfügt, in der die Daten gespeichert werden können. Dies wird beispielsweise benötigt, weil oftmals keine Schreibrechte für alle Dokumente aus der Datenbasis existieren, wie z.B. bei vielen Webseiten. Dieser Speicher kann auch mit den Dimensionsdaten verknüpft oder in diese integriert sein. Grund dafür ist, dass bei einem Zugriff die Daten aus der originalen Datenbasis mit den Daten im Speicher des Hyperadapters 300 kombiniert werden können.

Aufgrund eines solchen Speichers können auch weitere Aktionen ermöglicht werden. Beispielsweise kann von externen Geräten, auch von Geräten, die Teile der Datenbasis bereitstellen, wie z.B. einem Webserver, auf diesen Speicher zugegriffen werden. Dies kann dazu dienen, dessen Inhalte ganz oder teilweise zu integrieren.

Lokaler Speicher für Dimensionsplanung: Zusätzlich kann der beschriebene Speicher dazu genutzt werden, neue Dimensionen oder Inhalte von Dimensionen zu planen. Dabei können die geplanten Daten in den Speicher geschrieben werden. Bei Zugriffen können dann Daten aus dem Speicher, sowie aus der Datenbasis 305 verwendet werden. Ebenso wie zuvor können externe Geräte auf diese Daten zugreifen, zum Beispiel um sie in die Datenbasis zu schreiben. Desweiteren kann der Hyperadapter 300 noch über Mittel verfügen, wie beispielsweise Regeln, die festlegen, wann und ob und wie Daten aus dem Speicher in die Datenbasis 305 geschrieben werden.

Das Hinzufügen und / oder Ändern von Dimensionen und / oder Daten in diesen Dimensionen kann aufgrund von vordefinierten Schemata geschehen. Außerdem kann durch weitere technische Geräte oder Computerprogrammprodukte festgeschrieben sein, wo Daten geändert oder Dimensionen angelegt werden können. Ebenso ist es aufgrund der gleichen Mittel möglich, Daten in die Datenbasis 305 zu schreiben.

Soll-Ist Vergleich mit Plandaten: Wichtig ist zu wissen, dass sofern Daten im Speicher als Dimensionsplandaten abgelegt werden, Soll-Ist Vergleiche mit der Datenbasis 305 möglich sind.

Fuzzy Detektoren: In einer weiteren, besonders bevorzugten Ausführung können die Detektoren 306, 401 unscharfe Fuzzy Logic Ergebnisse liefern. Dabei wird unscharf angegeben, zu wie vielen Teilen ein Dokument oder ein Dokumentenfragment in einer Dimension liegt. Ist beispielsweise eine Klasse von einer Frameworkklasse abgeleitet, so ist diese stark in der Dimension des Frameworks. Wird aber nur eine Funktion des Frameworks benutzt, so ist die konsumierende Klasse nicht so stark in der Dimension des Frameworks.

Crawler: Besonders bevorzugt kann ein Hyperadapter 300 auch einen oder mehrere Crawler besitzen oder als Crawler eingesetzt werden. Damit können z.B. zyklisch Detektoren 306, 401 ausgeführt und deren Ergebnisse durch Mittel des Hyperadapters 300 verwertet werden.

Stored Queries: Besonders bevorzugt ermöglicht es der Hyperadapter 300 auch, Abfragen zu hinterlegen (zu speichern). Dabei kann es möglich sein, den Ausgabekanal für die Abfrage aufgrund einer anderen Ausführungsform zu spezifizieren (Ausgabekanal). Desweiteren können solche Abfragen auch spezifizieren, dass sofern Dokumente gefunden werden, die der Abfrage entsprechen, das entsprechende Dokument über den Ausgabekanal automatisiert zugestellt wird.

Aktionen aufgrund von Abfragen: Aufgrund hinterlegter Abfragen können im Hyperadapter 300 auch weitere Aktionen ausgelöst werden, die beispielsweise durch Regeln "getriggert" werden.

Automatische Schema-Erkennung: In einer weiteren Ausführung enthält die Erfindung auch Mittel, um Schemata technisch zu erkennen. Dieses Erkennen von Schemata z.B. kann aufgrund von Detektoren 306, 401 geschehen.

Erzeugen von Detektoren: Eine besonders bevorzugte Ausführung des Hyperadapters 300 kann Detektoren 306, 401 erzeugen. Beispielsweise wird durch einen Human-Detektor mehrmals eine neue Dimension erkannt. Diese Informationen und das zugehörige Dokument können z.B. dazu genutzt werden, ein Neuronales Netz zu trainieren, das als Detektor verwendet werden kann.

Erweitern des Hyperadapters durch Detektoren von Benutzern: Eine besonders bevorzugte Erweiterung des Hyperadapters 300 ermöglicht es, dass Benutzer weitere Detektoren hinzufügen können.

Darwin: In dem Hyperadapter 300 können auch darwinistische Methoden verwendet werden. Ein Beispiel für deren Einsatz sind Detektoren, die von Benutzern hinzugefügt werden. Dabei können darwinistische Methoden zur Weiterentwicklung eingesetzt werden. Der von einem Benutzer entwickelte Detektor kann durch andere Benutzer weiterentwickelt werden. Jede neue Version eines solchen Detektors wird dann getestet. Sobald eine Version eine höhere Performance als eine vorherige liefert, wird diese automatisch ersetzt.

Desweiteren können in diesem Fall für das Ersetzen eines Detektors noch weitere Faktoren eine Rolle spielen. Beispielsweise können Ergebnisse eines neuen Detektors anderen Benutzern gezeigt werden. Deren Aktionen aufgrund den Ergebnissen des Detektors, können dazu dienen zu bewerten, ob der Detektor wirklich genauer als ein vorheriger Detektor ist.

In diesem Kontext könnten auch Human-Detektoren verwendet werden. Aufgrund der Ergebnisse der Human-Detektoren könnte, ebenso wie zuvor, der Detektor bestimmt werden, der die besseren Ergebnisse liefert. Dadurch könnte der Detektor und somit ein Mensch dahinter durch einen anderen abgelöst werden.

Neuronale Netze: Im Hyperadapter 300 können Neuronale Netze eingesetzt werden. Dabei kann ein solches Neuronales Netz entweder durch ein technisches Gerät oder durch ein künstliches Neuronales Netz umgesetzt werden.

Einsatz einer Inferenzengine und / oder Inferenzregeln: In einem Hyperadapter 300 können auch Inferenzregeln genutzt werden. Dies erlaubt beispielsweise Rückschlüsse der Art, dass wenn ein Fragment in einer Dimension liegt, dieses auch Teil in einer anderen Dimension sein muss. Oder bei einem Zugriff, wenn eine Dimension angefordert wurde, so könnte dies die logische Folge haben, dass auch eine andere Dimension gefordert wurde. Solche Inferenzregeln können durch aus dem Stand der Technik bekannte Inferenengines realisiert sein.

Inferenzregeln können auch Informationen aus den Dimensionsdaten, z.B. aus mehrdimensionalen Schemata, nutzen, um Rückschlüsse zu bilden. Desweiteren ist es auch denkbar, Inferenzregeln aufgrund von unscharfen Angaben zu nutzen. Dabei ist es auch möglich, dass Inferenzregeln zusätzliche Daten in mehrdimensionalen Schemata, wie z.B. Wahrscheinlichkeitswerte, nutzen.

Bayes'sche Netze: Im Hyperadapter 300 können des weiteren Bayes'sche Netze eingesetzt werden. Beispielsweise können diese genutzt werden, um aufgrund der Ergebnisse verschiedener Detektoren festzustellen, welche Dimensionen am wahrscheinlichsten richtig bestimmt wurden.

Sicherheitsfunktionen: Optionalerweise enthält der Hyperadapter 300 Mittel, um einzelne Dimensionsinhalte, Schemata und / oder Mittel/Techniken die vom Hyperadapter 300 zur Verfügung gestellt werden, zu schützen. Um Sicherheitsfunktionen oder ein Sicherheitssystem zu realisieren, können weitere Mittel des Hyperadapters 300 genutzt werden.

Anreicherung von Daten/Dokumenten/Dokumententeilen: Durch verschiedene Mittel kann der Hyperadapter 300 dazu genutzt werden, Dokumente anzureichern und / oder zu verändern. Beispielsweise können Daten aus dem internen Speicher mit den Daten aus der Datenbasis 305 kombiniert werden. So kann eine solche Kombination über einen Zugriff 302 angefordert werden. Der Hyperadapter 300 würde intern Daten aus dem Speicher mit Daten aus der Datenbasis 305 kombinieren und könnte dadurch ein neues kombiniertes Dokument als Resultat 301 erzeugen.

Ein weiteres Beispiel für die Anreicherung von Daten wäre es, dass der Hyperadapter 300 ein Dokument aus der Datenbasis 305 durch Dimensionsdaten anreichert. Beispielsweise können im aufbereiteten Dokument Dimensionen durch Tags oder Annotationen markiert sein.

Möglichkeiten für die Kommunikation mit Klienten: Der Hyperadapter 300 kann über verschiedene Möglichkeiten realisiert werden. Dabei ist der Hauptunterschied, dass verschiedene Teile des Hyperadapters auch auf einem oder mehreren Klienten realisiert werden können.

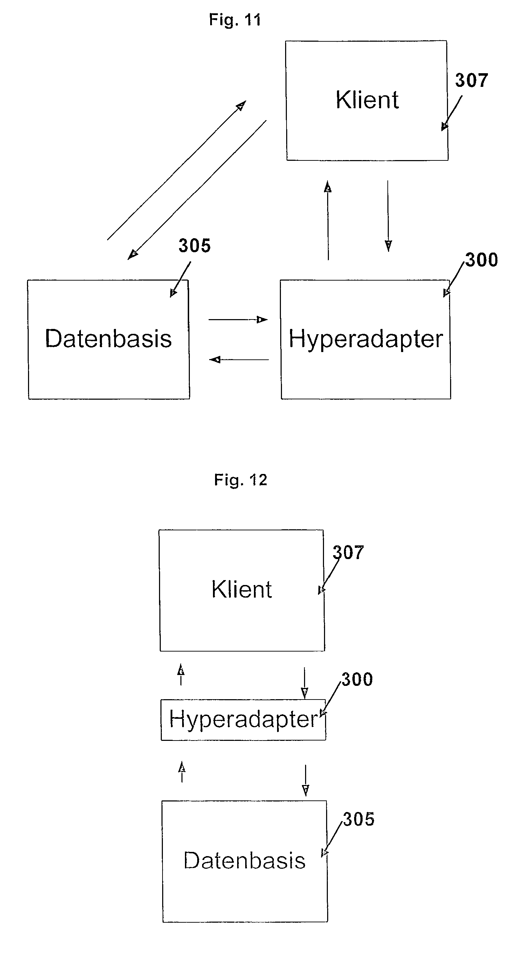

Fig. 11 zeigt einen beispielhaften Klienten 307, der mit dem Hyperadapter 300 kommuniziert. Dabei kann der Klient 307 direkt auf die Datenbasis 305 zugreifen. Der Klient 307 kann hierbei auf den Hyperadapter 300 zugreifen, um Daten in eine Dimension zu schreiben, zu lesen, Änderungen durchzuführen und / oder weitere Daten oder Funktionen vom Hyperadapter 300 auszuführen. Der Hyperadapter 300 selbst kann auf die Datenbasis 305 zugreifen, um diese zu analysieren, lesen, und / oder Daten in diese zu schreiben. Der Klient 307 hat die Möglichkeit, selbst die Daten aus der Datenbasis 305 zu verändern, oder diesen Vorgang durch den Hyperadapter 300 durchführen zu lassen. Veränderungen oder Schreibvorgänge, kann der Klient 307 dem Hyperadapter 300 melden, oder dieser erkennt die Änderungen selbst. z.B. durch Detektoren.

Fig. 12 zeigt den Hyperadapter 300 als Verbindungsstück mit der Datenbasis 305. Dabei erfolgt der Zugriff auf die Datenbasis 305 durch den Hyperadapter 300. Der Klient 307 kommuniziert nur mit dem Hyperadapter 300, und dieser dient als Umsetzer für Zugriffe 302 auf die Datenbasis 305.

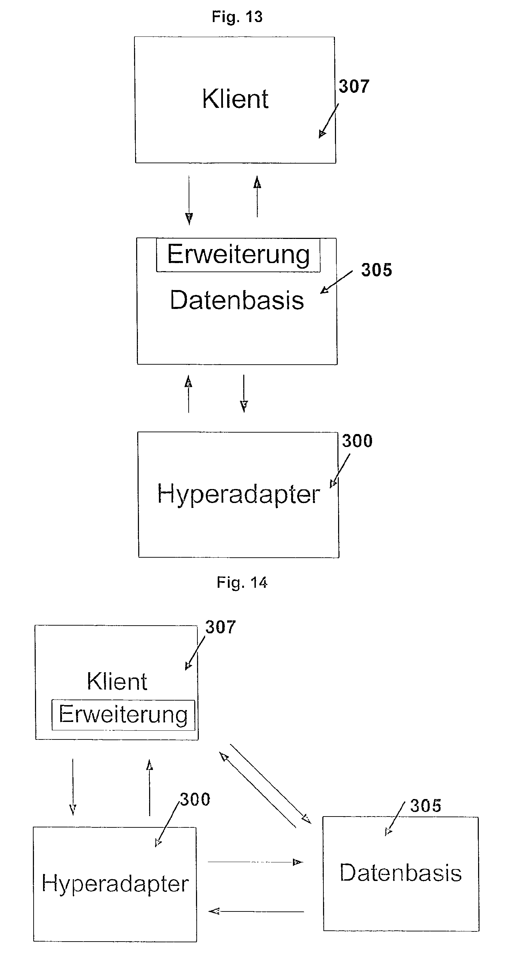

Fig. 13, "Aufbau eines Hyperadapters und Interaktion mit einem Klienten 3" zeigt eine Datenbasis, die auf einem technischen Gerät realisiert ist. Eine solche Datenbasis kann beispielsweise ein Webserver sein. Diese enthält eine Erweiterung, die es entweder ermöglicht, einen Hyperadapter zu nutzen oder die eine Implementierung des Hyperadapters selbst darstellt. Der Klient kann dabei durch diese Erweiterung Funktionen des Hyperadapters nutzen. Desweiteren kann durch eine solche Anordnung auch ermöglicht werden, dass der Klient implizit die Funktionen des Hyperadapters nutzt. Beispielsweise kann der Klient durch den Hyperadapter angereicherte Daten zugestellt bekommen. Oder die Daten aus der Datenbasis werden so ausgesendet dass der Klient die Möglichkeit erhält, überall Änderungen durchführen zu können. Diese Möglichkeit wird hierbei nicht von der Datenbasis, sondern vom Hyperadapter und der Erweiterung zur Verfügung gestellt.

Fig. 14 zeigt eine Erweiterung im Klient 307 selbst. Diese Erweiterung kann dazu dienen, Funktionen des Hyperadapters 300 zu nutzen oder kann Implementierungen von Funktionen des Hyperadapters 300 darstellen. Beispielsweise können mehrdimensionale Operationen in der Erweiterung realisiert sein. Diese könnten dann auf einem Dokument im Klienten 307, das durch Dimensionsdaten angereichert, ist genutzt werden.

Kryptographische Verfahren: Ein Hyperadapter 300 kann auch kryptographische Verfahren und / oder Algorithmen nutzen. Beispielsweise können die Verbindungen zwischen dem Hyperadapter 300 und einem Klienten 307 verschlüsselt werden, oder die Daten, die ein Benutzer in Dimensionen geschrieben hat, werden verschlüsselt hinterlegt.

Filter: Besonders bevorzugt kann der Hyperadapter 300 auch als Filter für eine Datenbasis 305 fungieren. Dabei kann ein solcher Filter z.B. durch mehrdimensionale Ausdrücke konfigurierbar sein. Ein Beispiel wäre, durch ein Zugriffsdokument 302, den Inhalt eines Teils der Datenbasis 305 bestimmen zu lassen. Das Resultat 301 könnte dann als Entscheidungsgrundlage verwendet werden, welche Elemente angezeigt werden sollen. Optionalerweise besitzt der Hyperadapter 300 einen Filtermodus, der es z.B. erlaubt, durch den Hyperadapter 300 auf eine Datenbasis 305 zuzugreifen und diese, aufgrund der Konfiguration, zu filtern.

Parser: Optionalerweise besitzt die Erfindung einen oder mehrere Parser. Diese können, je nach Anwendungsfall, speziell angepasst sein und an verschiedenen Stellen eingesetzt werden, beispielsweise einen "Abstract syntax tree" Parser. Ein solcher Parser kann beispielsweise in Detektoren eingesetzt werden. Damit könnte die Analyse und das Aufdecken von Dimensionen im Quelltext vereinfacht werden.

GPU: Da der Hyperadapter 300 mehrdimensionale Operationen unterstützt, können bei einer Implementierung eine GPU (Graphics Processing Unit) und / oder eine Grafikkarte für Teile des Adapters 300 genutzt werden. Dies kann aufgrund der Parallelität einer GPU eine starke Beschleunigung für Teile des Adapters 300 bewirken. Beispielsweise können damit schneller Transformationen oder Berechnungen ausgeführt werden.

Physikbeschleuniger: Sofern Analysen durchgeführt werden, kann es von Vorteil, sein Physikbeschleuniger oder eine Physik-Engine einzusetzen. Dabei kann die Tatsache zu Hilfe genommen werden, dass aufgrund von Dimensionen hyperdimensionale Körper aufgespannt werden können. Beispielsweise können damit Kollisionen zwischen einzelnen hyperdimensionalen Körpern berechnet werden. Oder die hyperdimensionalen Körper können als "flexible" Körper durch Fuzzy Logic aufgefasst werden.

Fuzzy Logic-Chips: Aufgrund von unscharfen Dimensionen kann es von Vorteil sein, bei der Implementierung speziell hierfür optimierte Chips zu verwenden, beispielsweise DSPs. Durch spezielle angepasste Chips könnten unscharfe Operationen mit erheblich gesteigerter Geschwindigkeit vorgenommen werden.

Import / Export von Dimensionsdaten: Eine besonders bevorzugte Erweiterung des Hyperadapters 300 ermöglicht es, Dimensionsdaten zu importieren oder zu exportieren.

Zugriffsdokumentersteller: Optionalerweise besitzt der Hyperadapter 300 ein Werkzeug, das es ermöglicht einfach und komfortabel Abfragen zusammenzustellen. Ein solches Werkzeug ermöglicht es beispielsweise in einer grafischen Benutzeroberfläche durch Drag and Drop (DND) Elemente zu einer Abfrage 302 hinzuzufügen. Dabei können vordefinierte Dimensionen per DND hinzugefügt werden, und / oder es ist einfach möglich, Elemente hineinzuziehen, deren Dimension erkannt wird, wodurch die Dimension zum Zugriff hinzugefügt wird. Ein Beispiel aus der Softwareentwicklung solcher Elemente können Annotationen sein. Der Zugriffsdokumentersteller erkennt die Dimension der Annotation und fügt diese hinzu. Bevorzugt geschieht dies über eine grafische Benutzeroberfläche des Hyperadapters 300.

Fremdsystemintegration/Brücke: Besonders bevorzugt enthält der Hyperadapter 300 eine Brücke (Bridge), über die Fremdsysteme und / oder deren Informationen integriert werden können. Dabei können in den Dimensionsdaten beispielsweise Verweise oder Referenzen zu Daten aus Fremdsystemen vorhanden sein. Insbesondere zu Versionskontrollsystemen, Data Warehouses und / oder Issue Tracking Systemen.

Eine weitere Funktionalität kann es sein, dass bei Zugriffen auf den Hyperadapter 300 automatisch auf Fremdsysteme zugegriffen werden kann. Beispielsweise können durch eine solche Brücke Verweise zu einem Personalsystem aufgrund der Dimension "Autoren" realisiert werden. Somit wäre es möglich, Abfragen der folgenden Art zu stellen: Alle Artikel Blog Z, die von gewissen Autoren geschrieben worden sind, die Teammitglieder von Team X sind. Der Hyperadapter 300 könnte so, durch das Fremdsystem, die Mitglieder des Teams bestimmen und dann die benötigten Artikel als Resultat erzeugen.

Data Warehouse: In einer Ausführungsform können Erkenntnisse dieser Erfindung in einem Data Warehouse benutzt werden. Dabei kann ein Data Warehouse dazu dienen, dass es als Grundlage genutzt wird, um es herum und in ihm die Funktionalität des Hyperadapters 300 zu implementieren. Desweiteren kann die Erfindung und die Abläufe der Erzeugung von Dimensionsdaten auch dazu dienen, diese in ein Data Warehouse zu exportieren.

Oftmals existieren über eine Dokumentenbasis auch Daten in einem Data Warehouse. Daher werden Operationen angeboten, die es ermöglichen, einen Hyperadapter 300 mit einem Data Warehouse zusammen zu nutzen. Beispielsweise könnte ein Hyperadapter 300 eine virtuelle Data Mart Schnittstelle anbieten. Oder der Hyperadapter 300 kann durch diese Operationen ein Data Warehouse nutzen.

<u>Vorgefertigte Operationen</u>

In einer besonders bevorzugten Ausführung weist der Hyperadapter 300 eine oder mehrere der folgenden vorgefertigten Operationen auf, die von dem Klienten 307 über das Zugriffsdokument 302 angesprochen werden können. Dabei können solche Operationen auch über Ausdrücke angesprochen werden. Aus diesem Grund ist im weiteren Verlauf von Operationen, wie auch von Ausdrücken die Rede.

Operation zur Erweiterung: Eine besonders bevorzugte Operation erlaubt es, weitere Operationen zu definieren. Beispielsweise können interne Operationen kombiniert und als neue Operation zur Verfügung gestellt werden. Ein weiteres Beispiel wäre es, im Zugriffsdokument 302 selbst Operationen zu definieren, die dann dem Hyperadapter 300 hinzugefügt werden. Operationen die hinzugefügt werden, können auch weitere Programme oder Operationen sein, die auf weiteren Systemen durchgeführt werden.

Direktzugriff auf interne Komponenten: Eine weitere Operation stellt den Zugriff auf alle Bestandteile des Hyperadapters 300 bereit, so dass dessen interne Funktionen auch von externen Geräten oder Programmen genutzt werden können. Dabei ist zu beachten, dass durch diese Art von Schnittstelle besonders bevorzugt Bestandteile benutzt werden können, die bisher nicht Stand der Technik sind.

In dieser Ausführung ist es auch denkbar, dass der Hyperadapter 300 nur aus den Komponenten besteht, die durch externe Maschinen oder Systemen genutzt werden. Als Beispiel könnte der Hyperadapter 300 nur aus Detektoren 306, 401 bestehen, die neue technische Lehren und Verfahren bereit stellen.

Logische Operationen: Besonders bevorzugt werden auch logische, mathematische Funktionen und / oder Bedingungen als Operationen unterstützt. Damit sind beispielsweise Operationen, wie +, -, AND, OR, WHERE oder mathematische Funktionen gemeint. Solche Operationen können z.B. zu Berechnungen und / oder für Vergleiche verwendet werden.

Berechnungen: Desweiteren werden Operationen für mathematische Berechnungen bereit gestellt. Solche Operationen ermöglichen es, komplexe und einfache mathematische Funktionen zu nutzen. In diesem Zusammenhang wird besonders bevorzugt Hardware benutzt, die für die mathematischen Funktionen optimiert ist. Beispielsweise können bei Berechnungen, die parallel durchgeführt, werden hierfür optimierte Chips benutzt werden, beispielsweise Grafikchips (GPUs).

Logische Operationen und Dimensionsverknüpfungen: Die zuvor vorgestellten logischen Operationen können auch dazu verwendet werden, um Dimensionen in einer Abfrage 302 zu spezifizieren, beispielsweise "Dimension 1 AND Dimension 2". Dies würde bedeuten, die Fragmente zu selektieren, die in Dimension 1 und Dimension 2 sind. Oder "Dimension 1 AND Dimension 2 WHERE sizeoflines Dimension 2 > 50 lines". WHERE gibt dabei eine weitere Bedingung an. sizeoflines kann beispielsweise eine Berechung sein, womit die Anzahl der Zeilen eines Fragmentes berechnet wird. Das Resultat wären somit alle Fragmente, die in Dimension 1 und 2 liegen, und deren Zeilen größer 50 ist. Man beachte dabei, dass auch Operationen als Dimensionen behandelt werden können.

Rekursive Aufrufe: Eine spezielle Ausführung ermöglicht es, auch rekursive Ausdrücke zu Nutzen. Rekursiv bedeutet, dass Operationen durchgeführt werden, auf deren Resultat die gleiche Operation angewendet wird. Dabei kann es auch möglich sein die Rekursionstiefe durch Parameter oder Stopfunktionen bestimmen zu können. Im Falle von Quellcode könnte so zum Beispiel folgendes beantwortet werden: Welche Aktion im Benutzerinterface ist dafür verantwortlich, dass letztendlich eine bestimmte Funktion F indirekt aufgerufen wird: Rekursive Bestimmung der Aufrufer von F mit der Stopfunktion zu bestimmen, ob ein Aufrufer im Benutzerinterface liegt.

Zugreifende Aufrufe: Eine weitere Ausführungsform bietet Operationen an, die ermöglichen, Resultate 301 als eigene Dimensionen weiter zu verarbeiten. Somit können auf diese weitere Operationen angewendet werden. Beispielsweise soll die Dimension der Konsumenten von Funktionen der Persistenzdimension bestimmt werden. Zuerst werden daher, aufgrund der Mittel des Hyperadapters 300, beispielsweise Detektoren, Fragmente in der Persistenzdimension identifiziert. Danach kann bestimmt werden, welche Funktionen darauf zugreifen. Auf das obige Blogbeispiel bezogen könnten Funktionsaufrufe als Hyperlinks verstanden werden. Alle Blogposts aus dem Blog, die auf Blogposts verweisen, welche die Tags "XY" haben. Das Resultat 301 wären dann alle Blogposts, die einen Hyperlink auf das Resultat "Blogposts mit dem Tag XY" verweisen.

Zur Beschleunigung dieser Operation kann der Hyperadapter 300 über optimierte Implementierungen für solche Fälle verfügen. Zum Beispiel dadurch, dass aufgrund von solchen "Zwischenresultaten" Aggregate gebildet werden können oder das interne Vorberechnen von oft geforderten "Zwischenresultaten".

Mehrdimensionale Ausdrücke: Eine besonders bevorzugte Spezialisierung bietet Operationen an, die es ermöglichen, mehrdimensionale Ausdrücke zu verarbeiten. Dabei sind erweiterte Möglichkeiten denkbar, wie z.B. solche Ausdrücke mit Variablen belegen zu können. Ein Beispiel hierfür ist es, die Überschriften aus einem speziellen Dokument ausgeben zu lassen. Dabei ist in diesem Ausdruck eine Dimensionskreuzung beschrieben. Einmal soll aus der Dimension Dokument ein spezielles Dokument ausgewählt werden und in diesem wiederum die Überschriften dessen.

Formatieren von Resultaten: Weitere Operationen können dazu dienen, das Resultat 301 zu formatieren. Dabei kann das Formatieren auch eine Umwandlung sein, beispielsweise in eine Grafik.

Mehrdimensionale Schema-Auswahl: Sofern mehrere Schemata eingesetzt werden, können Operationen dazu dienen, ein spezielles Schema oder auch mehrere zu wählen, aufgrund derer oder dessen Operationen ausgeführt werden. Im Beispiel oben wurde der Blogpost nur in ein Schema eingeordnet. Jedoch ist es möglich, dass die Dimensionen in verschiedene Schemata einsortiert werden. Dadurch kann es nötig werden, ein konkretes Schema zur Bearbeitung eines Zugriffs 302 auszuwählen.

Typecasts: Besonders bevorzugt werden auch Operationen für Typenumwandlung zur Verfügung gestellt. Beispielsweise existieren oftmals Dimensionen, wie z.B. Längen, die als Zahlen ausgedrückt werden können. Sofern solche Dimensionen vorhanden sind, kann es sinnvoll sein, diese auch in den Typ einer Zahl umzuwandeln. Diese Operationen dienen dazu, explizit und / oder implizit geforderte Umwandlungen durchzuführen. Explizit bedeutet hierbei ein geforderter Cast, wohingegen implizit eine nicht direkt geforderte Umwandlung bedeutet, die sich jedoch durch die geforderten Operationen oder das Zugriffsdokument 302 herleiten lässt. In diesem Kontext ist es auch denkbar, dass Umwandlungen durch Operator-Overloading, ähnlich dem C++ Operator overloading, realisiert werden.

Transformationen: Besonders bevorzugt werden auch Transformationsoperationen bereitgestellt. Diese Operationen dienen dazu, Inhalte des Zugriffsdokumentes 302 zu transformieren. Beispielsweise kann bei einem Schreibzugriff in eine bestimmte Dimension eine Umwandlung nötig sein, damit der Inhalt des Zugriffsdokumentes 302 auch in dem passenden Format für die Datenbasis 305 vorhanden ist. Ein weiteres Beispiel ist es, ein unstrukturiertes Dokument in der Datenbasis 305 als XML-Dokument ausgeben zu können. Transformationen können dabei durch eigene technische Apparate, Regeln oder Computerprogrammprodukte realisiert werden. Desweiteren besteht die Möglichkeit, solche Operationen im Zugriffsdokument 302 selbst zu spezifizieren. Besonders bevorzugt kann der Hyperadapter 300 daher eine Transformationsengine aufweisen, die für Transformationen optimierte Verfahren bereit stellt.

Fuzzy logic: Eine besonders bevorzugte Erweiterung unterstützt Fuzzy Logic-Operationen, wie sie aus dem Stand der Technik bekannt sind. Somit können zusätzlich unscharfe Mengenoperationen genutzt werden. Diese unscharfen Operationen machen es damit möglich, alle weiteren hierin beschriebenen Operationen zu "fuzzyfizieren".

Beispielsweise kann die Abfrage "Dimension 1 AND Dimension 2" auch aufgrund von Fuzzy Logic durchgeführt werden. Dazu können Elemente, die in den verschiedenen Dimensionen liegen, eine Prozentzahl aufweisen, wie stark sie in der einzelnen Dimension liegen. Oder es könnte auch sein, dass eine Dimension verschieden starke Ausprägungen hat. Beispielsweise bei dem Blogbeispiel von oben Posts mit sehr viel Werbung und Posts mit wenig Werbung.

Schwellwert: Eine weitere Ausführungsform des erfindungsgemäßen Hyperadapters 300 erlaubt es, Schwellwerte oder Schwellwertfunktionen anzugeben. Schwellwerte sind dabei Werte, die es erlauben, für unscharfe Angaben einen Wert anzugeben, ab wann diese zu einer bestimmten Dimension zugehörig sind. Dabei können Schwellwerte im Bezug auf mehrere Dimensionen angegeben werden. Beispielsweise wird "70% Dimension A und 50% Dimension B" als "Dimension A" gewertet. Schwellwertfunktionen ermöglichen solche Zuordnungen aufgrund von Regeln oder eigenen technischen Apparaten. Ein Beispiel für einen solchen technischen Apparat könnte ein Neuronales Netz sein. Solche Schwellwerte können dazu dienen, zu "entfuzzyfizieren". Der Sinn dieser Schwellwerte ist es, diese bei Abfragen nutzen zu können, oder auch unscharfe Ergebnisse, nach dem Aufdecken von Dimensionen, scharf zu machen. Schwellwerte oder Schwellwertfunktionen können dabei in der Abfrage 302 selbst gegeben werden. Es ist desweiteren möglich, dies auch im Hyperadapter 300 selbst zu hinterlegen und die Schwellwerte auf die Ergebnisse von Detektoren oder Regeln zur Dimensionsaufdeckung anzuwenden.

Schwellwert zur Fuzzyfikation: Ein weiterer Einsatz solcher Funktionen/Operationen ist die Umkehrung der bisher vorgestellten Konzepte an denselben Einsatzstellen. Beispielsweise können Dimensionen über Fragmente nur mit scharfen Angaben bekannt sein. Fragment A hat als Beispiel Dimension 1, 2 und 3. Dieses könnte nun durch Regeln oder einen Apparat fuzzyfiziert werden, beispielsweise mit folgenden Regeln:

- Dimension 1 ist immer 100% genau

- Dimension 2 ist, sofern sie zusammen mit Dimension 3 auftritt, zu 40% genau.

- Dimension 3 ist, sofern sie zusammen mit Dimension 1 auftritt, zu 70% vorhanden.

Dies würde das Fragment im Beispiel oben zu Dimension 1 zu 100%, zu Dimension 2 zu 40% und zu Dimension 3 zu 70% zuordnen. Hierbei sei jedoch angemerkt, dass dies ein extrem vereinfachtes Beispiel ist. In der Realität könnten komplexere Berechnungen oder intern gespeicherte Statistiken über das Dimensionsauftreten verwendet werden. Dabei können zudem weitere Parameter einfließen, beispielsweise welcher Detektor dieses Ergebnis hervorgebracht hat.

Zugehörigkeitsfuktionen/Fuzzy Funktionen: Zugehörigkeitsfunktionen und Fuzzy-Funktionen sind aus dem Stand der Technik bekannt und können wie Schwellwertfunktionen im Hyperadapter 300 eingesetzt werden.

Verschärfer-Verstärker: Sofern unscharfe Angaben benutzt werden, ist es auch denkbar, einen oder mehrere Verschärfer einzusetzen. Verschärfer können dazu dienen, Aufgrund von Regeln unscharfe Angaben zu verstärken oder zu vermindern. Dabei können solche Verstärker wie Filter eingesetzt werden. Dies bedeutet, dass sie auch kaskadiert werden können. Eine einfache Implementierung ist beispielsweise eine Assoziationsliste von Dimensionen und einem Verstärkungsfaktor. Weitere Möglichkeiten sind lernende Verstärker, die z.B. durch Neuronale Netze umgesetzt werden können. Verstärker können an verschiedenen Stellen im Hyperadapter 300 eingesetzt werden. Beispielsweise bei Detektoren, die Dimensionen aufdecken. Hierbei können sie dazu genutzt werden um direkt die aufgedeckten Dimensionen zu verstärken.

Operationen bei Bereichen: Oftmals besitzt eine Dimension verschiedene Ausprägungen. Ausprägungen können eine messbare Größe sein, auf das Blogbeispiel bezogen beispielsweise die Textlänge. Weitere Bereiche können beispielsweise bei unscharfen Dimensionen Zugehörigkeitsprozentzahlen sein. Ein weiteres Beispiel könnte die Bewertung eines Dokumentes durch einen Zahlenwert sein. Somit ist es sinnvoll, Operationen zum Arbeiten mit Bereichen bereit zu stellen, die es beispielsweise erlauben, von- und bis-Grenzen anzugeben. Durch solche Operationen lassen sich Abfragen folgender Art stellen: Alle Dokumente, die mindestens als nützlich bewertet sind und zwischen 50 und 70 Prozent zur Dimension Biologie zählen und zur Dimension Säugetiere mit mehr als 80% gehören und vom Autor XY geschrieben sind.

Versions- / zeitorientierte Operationen: Man beachte, dass Dokumente oftmals in verschiedenen Versionen vorliegen. Versionen sind ein weiteres Beispiel für Bereiche/Dimensionen. Dabei werden die verschiedenen Versionen oder auch Zeit als Dimensionen aufgefasst. Dabei werden Operationen bereit gestellt, um mit diesen Bereichen zu arbeiten.

Olap-Operationen. In einer spezialisierten Ausführung der Erfindung weist der Hyperadapter 300 eine oder mehrere Olap-Operationen auf. Diese Operationen können die gleiche Funktionalität wie bekannte Olap-Operationen haben, z.B.:

- Slice: Ausscheiden von Fragmenten, die zu einer Dimension zugehörig sind. Es wird eine Scheibe der Realität selektiert oder berechnet.

- Dice: Mehrere Slice-Operationen zusammengenommen. Hierbei wird ein kleinerer multidimensionaler Ausschnitt aus der Datenbasis erzeugt.

- Pivote (Rotate): "Drehen" des derzeitigen Resulates in die Richtung einer anderen Dimension.

- Drill-Down: "Hereinzoomen", d.h. Eine Dimension in Unterdimensionen aufspalten.

- Roll-Up: Gegenoperation zu Drill-Down; Verdichten auf höhere Hierarchiestufe(n).

- Drill-Across: Betrachtung und Vergleich von anderen Dimensionselementen, die auch aus einer anderen Datenbasis kommen können.

- Drill-Through: Verfeinerung des Detaillierungsgrades.

Spezielle Olap-Erweiterungen: Besonders bevorzugt unterstützt der Hyperadapter 300 zumindest einen Teil der folgenden weiteren Operationen, da im Gegensatz zu reinem Olap, bei dem Daten nur einer Dimension befindlich sind, diese im Sinne des Hyperadapters 300 in mehreren Dimensionen gleichzeitig liegen können:

- Hypercut: Ein Hypercut ist die Operation, eine Dimension bewusst auszuschließen. Ausschluss bedeutet in diesem Kontext, dass Fragmente die eigentlich Inhalt des Resultates 301 sind, ausgeschlossen werden, sofern sie in der durch den Hypercut spezifizierten Dimension liegen. Die Dimension, die von dem Hypercut ausgeschlossen wird, kann durch alle weiteren Operationen definiert werden.

- Hyperand: Ein Hyperand ist die Operation, einen Slice anhand eines AND Operators zu erzeugen. AND ist hierbei der logische AND Operator. Dabei werden die Artefakte bestimmt, die in zwei Dimensionen gleichzeitig liegen müssen.

- Berechnende Operationen: Berechungen, die bei dem Ausführen der Abfrage 302 vorgenommen werden sollen und deren Ergebnis Gegenstand des Resultates 301, weiteren Operationen oder von Bedingungen ist.

Komplexe Analyse-Operationen: Besonders bevorzugt werden auch Operationen bereit gestellt, die komplexe Analysen ermöglichen. Solche komplexen Analysen zeigen beispielsweise Veränderungen über einen Zeitraum. Ein Beispiel hierfür: Im Rahmen der Erfindung kann eine Operation vorhanden sein, die es ermöglicht, Dimensionsveränderungen zu erkennen. Am einfachsten lässt sich dies anhand von Quellcode erläutern. Man stelle sich ein Modul *F* vor, das den verschiedenen Dimensionen 1, 2 und 3 zugeordnet ist. Nach dem Durchführen von Refactorings und / oder der Weiterentwicklung wurde eine Dimension 1 in ein weiteres Modul G ausgegliedert. Aufgrund von Detektoren kann nun festgestellt werden, dass *F* nun nur noch in Dimension 2 und 3 vorkommt. Somit bewegt sich ein Fragment aus Dimension 1 heraus. Aufgrund der Historie ist diese Dimensionsveränderung nun sichtbar. Eine solche Analyse ermöglicht es, die "Bewegung" eines Fragmentes durch die Dimensionen zu erkennen. Desweiteren könnte auch erkannt werden, welche Fragmente ausgegliedert wurden. Beispielsweise ist Fragment *G* dem früheren Code von *F* wahrscheinlich sehr ähnlich, oder es existieren Daten über die durchgeführte Aufspaltung in einem Issue Tracking System. Somit kann festgestellt werden, wohin die Dimension 1 "abgewandert" ist.

Komplexe Operationen zur Dimensionskollisionserkennung: Besonders bevorzugt wird auch zumindest eine komplexe Operation zur Verfügung gestellt, um Kollisionen zu erkennen. Dafür kann folgende Theorie verwendet werden: Dokumente aus der Datenbasis 305 stellen hyperdimensionale Gebilde dar. Durch Änderungen in den Dokumenten bewegen sich diese Gebilde in einem mehrdimensionalen Raum. Bewegungen können auch Wachstum eines solchen Gebildes sein. Beispielsweise kann ein Fragment in einer Weiterentwicklung auch eine weitere Dimension beinhalten. Am Beispiel des Blogposts (siehe oben) könnte dies eine Änderung eines Blogposts sein, so dass dieser in einer neuen Version ein Zitat enthält. Der Raum in dem sich die hyperdimensionalen Gebilde befinden, kann beispielsweise durch Schemata aufgespannt sein. In diesem Raum können mehrdimensionale Ebenen installiert werden. Es kann dann untersucht werden, ob ein hyperdimensionales Gebilde eine Kollision mit einer solchen Ebene hat. Zum Beispiel ist eine Klasse bei der Programmierung der Dimension des Service Layers zuzuordnen. Eine Ebene, die nun definiert wird, ist die Ebene des Datenbankzugriffes. Dabei werden alle Dimensionen, von denen es erlaubt ist einen Datenbankzugriff durchzuführen, zum Aufspannen der Ebene verwendet. Sobald die Klasse weiterentwickelt wird und einen Datenbankzugriff durchführt, schneidet die Klasse die Ebene des Datenbankzugriffs. Es findet eine Kollision statt.

Unscharfe Dimensionskollisonserkennung: Wie zuvor beschrieben können Kollisionen erkannt werden. Dabei könnten auch unscharfe Körper und Ebenen verwendet werden. Die Kollisionen können dabei abhängig von der Schärfe einer Dimension berechnet werden.

Kollisionserkennung durch Computerspieltechnologie: Sofern die Sichtweise von mehrdimensionalen Körpern angewandt wird, ähnelt diese einem Computerspiel. Beispielsweise könnte die Ausprägung von unscharfen Dimensionen als Elastizität gesehen werden. Oder Dimensionen könnten verschieden stark in verschiedenen Dimensionen ausgeprägt sein. Dies könnte die Größe eines solchen Körpers beeinflussen. Eine Ebene, die elastisch ist, könnte einer Gummifolie, die bei einem Durchstoß gedehnt werden kann und irgendwann reißt, als ähnlich angesehen werden. Somit können dort eingesetzte Erkenntnisse und Technologie auch im Hyperadapter 300 eingesetzt werden. Beispielsweise kann die Kollisionserkennung durch einen Physikbeschleuniger oder eine Physikengine durchgeführt werden (siehe oben).

Schreiboperationen: Bevorzugt stellt der Hyperadapter 300 auch Operationen, speziell für Schreibvorgänge in Dimensionen oder Dimensionsteile, bereit. Diese Operationen können alle bisher vorgestellten Operationen, wie auch weitere Operationen nutzen, um in einzelne Dimensionen zu schreiben. Beispielsweise können über Olap-Operationen Dimensionen für einen Schreibvorgang spezifiziert werden. Besonders bevorzugt in diesem Kontext können auch Transformationen und Typenumwandlungen verwendet werden, um Daten in eine passende Form für den Schreibvorgang zu bringen. Dabei können diese, wie bei anderen Operationen, implizit oder explizit verwendet werden. Besonders bevorzugt sind auch Schreiboperationen, die es ermöglichen, durch das Zugriffsdokument 302 zu spezifizieren, wie in eine Dimension geschrieben wird. Als optionale Erweiterung können auch Daten, wie in eine Dimension geschrieben wird, direkt an den Klienten übermittelt werden, damit dieser direkt in eine Dimension schreiben kann.

Transaktionsoperationen: Dadurch, dass mehrere Dimensionen angesprochen werden können, bietet der Hyperadapter 300 Operationen für Transaktionen an. Oftmals muss oder soll die Konsistenz der Daten in der Datenbasis gewahrt bleiben. Bei einem Schreibvorgang kann es beispielsweise sinnvoll sein, dass mehrere Dimensionen gefüllt werden. Daher können Transaktionen eingesetzt werden. Diese ermöglichen es, zuerst die zu schreibenden Dimensionen zu befüllen und den Schreibvorgang als Transaktion durchzuführen. Zur Realisierung kann hierfür beispielsweise ein Caching-Layer verwendet werden. Die Transaktionssteuerung kann dabei explizit durch das Zugriffsdokument 302 geschehen, oder durch implizit ausgelöste Transaktionen.

Operationen zur Grafikerzeugung: Besonders bevorzugt bietet der Hyperadapter 300 Operationen an, die es ermöglichen, Grafiken zu erstellen. Beispielsweise könnten Netzdiagramme ausgegeben werden, wie stark unterschiedliche Dimensionen in der Datenbasis selbst oder einem Teil dieser vorhanden sind. Besonders bevorzugt können diese Operationen mit anderen Operationen kombiniert werden. Beispielsweise können OLAP-Operationen ausgeführt werden, und aufgrund derer Resultate 301 kann dann eine Grafik erzeugt werden. Solche Operationen können jedoch auch aus dem Hyperadapter 300 ausgelagert werden. Beispielsweise auf den Klienten 307 selbst. Besonders bevorzugt kann zum Erzeugen von Grafiken spezialisierte Hardware verwendet werden. Beispielsweise kann die Transformation eines Resultates 301 in eine Grafik durch eine Grafikkarte/GPU beschleunigt werden.

Regelmäßige Analyse: Oftmals ist es sinnvoll, zeitgesteuerte Analysen oder die Erzeugung von Resultaten 301 durchzuführen. Daher werden Operationen bereitgestellt, die es ermöglichen, regelmäßig Analysen durchzuführen. Somit können beispielsweise Berichte über die Datenbasis 305 automatisiert erstellt werden.

Alert Operationen: Im Bezug auf regelmäßige Analysen können auch Alert-Operationen (Alarme) eingesetzt werden. Solche Operationen ermöglichen es, aufgrund von Regeln Aktionen durchzuführen. Beispielsweise kann bei einer regelmäßigen Analyse aufgrund von unerwarteten Ergebnissen automatisch eine E-mail oder SMS oder ähnliches versendet werden.

MDX-Operationen: In einer besonders bevorzugten Erweiterung unterstützt der Hyperadapter 300 alle oder zumindest einen Teil der MDX-Ausdrücke (vgl. "Wikedpia Artikel MDX", http://de.wikipedia.org/wiki/MDX.).

MDX-Erweiterungen: Besonders bevorzugt werden auch die weiteren hier vorgestellten Operationen als Erweiterungen für MDX vom Hyperadapter 300 zumindest zum Teil unterstützt. Dies heißt, dass beim Verwenden von MDX im Hyperadapter 300 neue Ausdrücke wie Beispielsweise ein Hypercut verwendet werden können.

Operationen, um Zugriffe zu speichern und / oder um gespeicherte Zugriffe erneut durchzuführen: Besonders bevorzugt sind auch Operationen vorhanden, die es ermöglichen, Zugriffe zu speichern. Dabei werden nicht die Daten, die in einem Zugriff geschrieben und / oder gelesen worden sind gespeichert, sondern die Spezifikation des Zugriffs selbst. Beispielsweise kann ein Zugriff, der alle Fragmente, die in Dimension 1 und Dimension 2 sind, als Resultat 301 erzeugt, gespeichert werden. Danach kann dieser Zugriff erneut durch spezielle Operationen angesprochen und durchgeführt werden.

Operationen für Trainingsimpulse: Da im Hyperadapter 300 selbst an verschiedenen Stellen Techniken eingesetzt werden können, die aus dem Bereich der künstlichen Intelligenz oder anderer Intelligenzen, wie beispielsweise Neuronale Netze stammen, kann der Hyperadapter 300 Operationen für Trainingsimpulse bereitstellen. Solche Trainingsimpulse können dazu verwendet werden, um diese Mechanismen zu trainieren. Beispielsweise können dadurch Neuronale Netze trainiert werden, oder unscharfe Dimensionsdaten oder Dimensionszuordnungen können durch Feedback-Impulse verstärkt und / oder vermindert werden.

Data Mining Operationen: Besonders bevorzugt bietet der Hyperadapter 300 Operationen, die Data Mining Algorithmen (z.B. A* und weitere), aufgrund der Dimensionen und Schemata durchführen können. Dabei ist es aber auch möglich, dass Data Mining nicht im Hyperadapter 300 selbst, sondern in einem ihm ähnlichen Gerät durchgeführt wird. Dabei ist es möglich, dass die Algorithmen direkt auf den Erkenntnissen dieser Erfindung arbeiten, beispielsweise auf den Dimensionsdaten.

Zugriffsauswerter / Zugriffsübersetzer

Im Folgenden werden bevorzugte Ausführungsbeispiele des erfindungsgemäßen Zugriffsübersetzers 303 (auch Zugriffsauswerter genannt) erläutert.

Zugriffsauswerter-Verfahren: Um die im Zugriffsdokument 302 geforderte Anfrage zu bearbeiten, führt der Zugriffsauswerter 303 bevorzugterweise die folgenden Schritte zumindest zum Teil durch:

1. Analyse des Zugriffsdokumentes 302 zum Erkennen von zumindest einer implizit und / oder explizit angeforderten Operation.

2. Durchführen der zumindest einen angeforderten Operation.

3. Rückgabe der Resultates 301.

In diesem Verfahren ist es zu beachten, dass die Schritte in einer Implementierung auch vertauscht werden können, oder teilweise durch Kombinationen realisiert werden können. Beispielsweise kann es sinnvoll sein, zuerst die Grunddimensionen, die in der Anfrage 302 zu bearbeiten sind, zu bestimmen und eine Ergebnismenge zusammenzustellen, auf die erst dann weitere Operationen angewendet werden.

Optimierte Implementierung für verschiedene Einsatzzwecke: Es ist zu beachten, dass es in vielen Fällen sinnvoll ist, ein weiter optimiertes Verfahren für bestimmte Einsatzzwecke zu nutzen, beispielsweise bei einem Streaming-Zugriff auf eine Dimension. Hierbei ist es sinnvoll, fertige Komponeten zu verwenden, deren Operationen festgeschrieben sind. Dadurch kann der obige Schritt 1 in manchen Ausführungsformen entfallen. Desweiteren ist es auch möglich, dass nicht immer ein Resultat 301 zurückgeliefert wird. Es ist hierbei auch denkbar, dass Zugriffsdokumente 302, die kein Resultat 301 erfordern dazu führen, dass Schritt 3 entfällt.

Zugriffsübersetzer 303: In Fig. 16 ist ein beispielhafter Zugriffsübersetzer 303 dargestellt. Dieser weist zumindest einen Dokumentenanalysator (Dokumentenauswerter) auf, der Mittel zur Verfügung stellt um zu analysieren, welche Operationen aufgrund des Zugriffsdokumentes 302 durchgeführt werden. Die ermittelten Operationen werden dann von dem Operationsausführer durchgeführt. Dabei kann der Operationsausführer auch vordefinierte Operationen nutzen. Aufgrund der Operationen, die durchgeführt werden, erzeugt der Operationsausführer das Resultat 301. Dabei können durch vordefinierte Operationen, die Dimensionsdaten 304, Datenbasis 305, Detektoren und / oder andere Mittel des Hyperadapters 300 zur Resultaterzeugung genutzt werden. Optimalerweise erzeugt der Zugriffsübersetzer 303 einen Durchführungsplan. Für einen solchen Fall besitzt der Zugriffsübersetzer 303 Mittel, um diesen Plan optimieren zu können, beispielsweise eine Durchführungsplanungseinheit. Es sei an dieser Stelle erwähnt, dass sofern die Inhalte des Zugriffsdokuments 302 dem Operationsausführer direkt verständlich sind, dieser Aufgrund seiner Operationen durchführen kann, und der Dokumentenanalysator nicht benötigt wird.

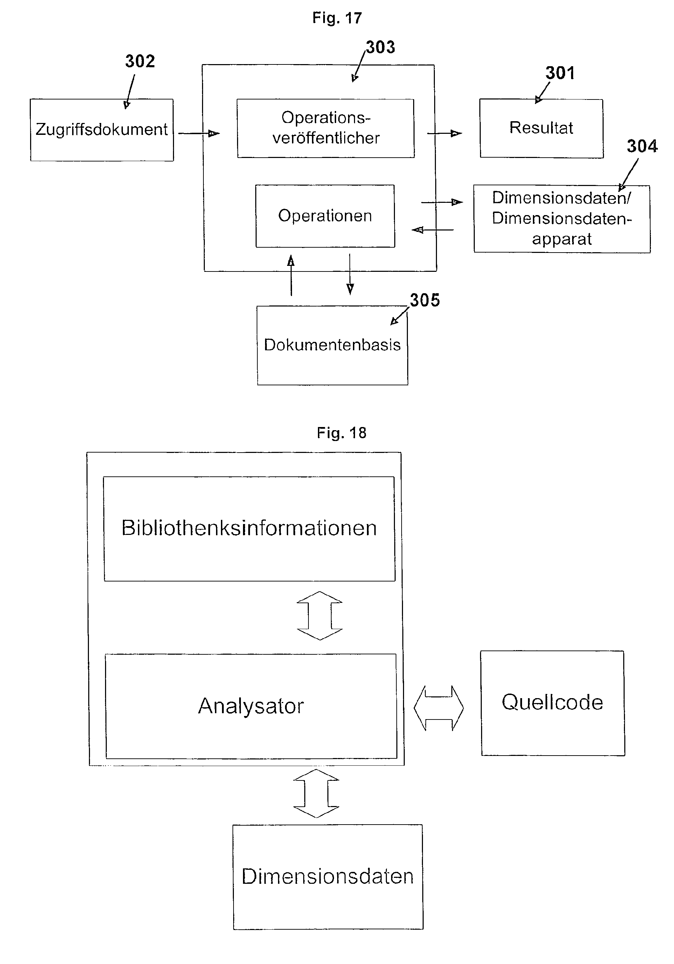

Ein alternativer Zugriffsübersetzer 303 ist in Fig. 17 dargestellt. Dieser Zugriffsübersetzer 303 weist zumindest einen Operationsveröffentlicher auf, der es ermöglicht, Operationen oder Kombinationen von diesen zu veröffentlichen. Desweiteren kann er auch gespeicherte Zugriffe veröffentlichen. Veröffentlichen bedeutet, dass diese Operationen direkt vom Klienten ansprechbar sind. Zum Beispiel kann die Operation zum Schreiben und / oder Lesen in eine bestimmte Dimension als virtuelle Datei veröffentlicht werden. Damit wäre es möglich, mit einem normalen Dateistream in diese Dimension zu schreiben und / oder aus ihr zu lesen.

Kombination der verschiedenen Zugriffsübersetzer 303: Besonders bevorzugt können die oben beschriebenen Ausführungsformen des Zugriffsübersetzers 303 kombiniert eingesetzt werden. Dabei können durch die erste Ausführungsform (Zugriffsübersetzer mit Operationen und / oder gespeicherten Zugriffen) Operationen und / oder gespeicherte Zugriffe festgelegt werden, die veröffentlicht werden sollen. Beispielsweise kann im Zugriffsdokument 302 dieses Zugriffsübersetzers 303 der Zugriff auf eine bestimmte Dimension 1 in einer Datei gefordert werden. Dabei kann spezifiziert werden, dass dieser Zugriff als Dateistream zur Verfügung gestellt werden soll. Dadurch kann beispielsweise die Veröffentlichung dieser Dimension als Dateistream veranlasst werden. Im Resultat 301 könnte beispielsweise stehen, wie dieser Stream erreichbar ist.

Zugriffsübersetzer zum Schreiben und / oder Verändern von Dimensionsdaten: Ein alternativer Zugriffsübersetzer 303 ermöglicht es zudem, Daten in Dimensionsdaten zu verändern und / oder zu erzeugen.

Dokumentenanalysator: Der Dokumentenanalysator (vgl. Fig. 16) kann aus einem oder mehreren bei Compile- und / oder Interpretiervorgängen eingesetzten Verfahren und / oder Apparaten realisiert werden. Es ist daher möglich, sämtliche Techniken wie AST (abstract syntax tree), Bytecode-interpreter, Lexer, Parser, Jitter, inkrementelle Kompilierung, Tokens und weitere bekannte Techniken zu verwenden. Dabei ist es auch möglich, Erkenntnisse die beim Entwickeln von Suchmaschinen eingesetzt werden, zu verwenden. Insbesondere aus dem Bereich der Linguistik und Expertensystemen können Erkenntnisse eingesetzt werden, um das Zugriffsdokument 302 in eine "ausführbare" Form zu überführen. Desweiteren könnten Erkenntnisse von der Entwicklung von SQL Compilern verwendet werden. Die Aufgabe des Dokumentenanalysators ist es, das Zugriffsdokument 302 nach durchzuführenden Aktionen zu Parsen und eine Operationsliste zu erzeugen. Besonders bevorzugt wird im Rahmen der Erfindung ein hybrides Verfahren verwendet, bei dem Operationen, die durchgeführt werden, schon in kompilierter Form vorliegen.

Sofern neue Operationen hinzugefügt werden, ist es im Rahmen der Erfindung desweiteren möglich, dass diese kompiliert werden, damit bei weiteren Aufrufen die Ausführungszeit gesteigert wird. Es ist desweiteren möglich, dass der Dokumentenanalysator auch einen Cross-Compiler und / oder Transformator enthält, um auch weitere Konstrukte, die im Zugriffsdokument 302 stehen, in eine dem Hyperadapter 300 verständliche Sprache umzuwandeln.

Query by example: Eine Spezialisierung des Dokumentenanalysators kann Beispiele in Zugriffsdokumenten 302 auswerten. Beispielsweise soll die Dimension der Zitate als Resultat zurück gegeben werden. Im Zugriffsdokument 302 selbst wird ein Beispiel für ein Zitat angegeben. Durch Detektoren kann ein solcher Dokumentenanalysator feststellen, welche Dimensionen durch das Beispiel gefordert wurden. Ein weiteres Beispiel für eine solche "Query by example" könnte auch aus Bildern, Videos, Sprache, Melodien und / oder Musik bestehen. Dabei könnten diese auch verknüpft werden. Zum Beispiel könnte das erste Bild einen Gegenstand anzeigen, das zweite Bild eine Hand, die für den Hyperadapter bedeuten könnte, die Dimensionen des nächsten Bildes sollen ausgenommen werden und dazu das weitere Bild mit den ausgeschlossenen Dimensionen. Somit könnte die Suche durch rein grafische Beispiele und / oder Logik erfolgen. Als Alternative zu der Logik durch ein Bild einer Hand könnten auch Bilder von Gegenständen, wie zum Beispiel einer Schere dienen. In diesem Kontext sind unzählige weitere Beispiele denkbar. Daher kann der Hyperadapter über weitere, für solche Anwendungsfälle spezialisierte, Mittel verfügen. Auch ist es möglich, dass diese Mittel spezielle, dafür optimierte, Techniken, Chips, zum Beispiel GPUs und / oder Verfahren verwenden. Auch könnte es sein, dass eine solche Bildsprache durch den Benutzer selbst definiert und / oder trainiert wird. Hierbei kann durch den Benutzer selbst eine Bildsprache erstellt oder erzeugt werden. Es ist auch möglich, dass die Deutung einer solchen Bildsprache durch einen oder mehrere Benutzer durch auf diesen Anwendungsfall spezialisierte Mittel, wie zum Beispiel künstliche Intelligenz, trainiert werden. Ähnlich würden sich solche Beispiele bei Musik, Sprache und / oder Videos umsetzen lassen.

Dokumentenanalysator für MDX: Eine weitere Ausführung des Dokumentenanalysators unterstützt MDX. Dabei werden optimalerweise bei einer Implementierung bekannte Erkenntnisse benutzt, um einen solchen Interpreter oder Compiler zu erstellen.

Dokumentenanalysator für Sprache: Eine Spezialform des Dokumentenanalysators, die bevorzugt für Suchmaschinen verwendet wird, ist ein Analysator, der menschliche Sprache versteht. Dabei können Dimensionsmetadaten verwendet werden, um festzustellen, welche Dimensionen im Zugriffsdokument 302 gefordert wurden.

Operationsausführer: Der Operationsausführer ist dafür zuständig, die angeforderten Operationen durchzuführen und das Resultat 301 zu erzeugen. Besonders bevorzugt unterstützt der Operationsausführer alle Operationen oder Ausdrücke in jeglicher Kombination, die hierin beschrieben sind. Eine erweiterte Variante des Operationsausführers kann im Zugriffsdokument 302 vorhandene Operationen ausführen. Diese können in allen möglichen Programmiersprachen vorhanden sein. Eine weitere Spezialisierung des Operationsausführers kann Resultate von einzelnen Operationen zwischenspeichern. Dies kann dazu dienen, weitere Operationen zu beschleunigen.

Detektoren

Im Folgenden werden bevorzugte Detektoren erläutert, die Teil des Hyperadapters 300 sein können oder alternativ als externe Detektoren vorgesehen werden können, deren Ausgaben der Hyperadapter 300 nutzt.

Lernender Detektor: Ein lernender Detektor ist dadurch gekennzeichnet, dass er über Bewertungen seiner Dimensionsidentifikation lernen kann. Beispielhaft umgesetzt könnte ein solcher Detektor ein Neuronales Netz sein.

External Information Detektor: Ein solcher Detektor ermöglicht es, Dimensionen aufzudecken, indem externe Daten benutzt werden. Beispielsweise kann durch einen solchen Detektor der Google Pagerank einer Website genutzt werden.

Task Detektor: Durch einen solchen Detektor kann für Dokumente oder Fragmente die Aufgabenzugehörigkeit bestimmt werden. Beispielsweise, wie hoch der "degree of interest" eines Dokumentes für verschiedene Aufgaben ist, sofern als Datenbasis für Dokumente beispielsweise Mylyn Tasks verwendet werden. Oder es können die verschiedenen Inhalte einer Aufgabe als Dimensionen wahrgenommen werden, wie Beschreibung, Zeitrahmen und / oder weitere Metainformationen.

XML-Detektor: Ein XML Detektor erkennt Dimensionen in einem XML Dokument. Beispielsweise sind in einem XML Dokument typischerweise verschiedene Namensräume (Namespaces) vorhanden. Aufgrund von diesen können Elemente aus den verschiedenen Namespaces Dimensionen zugeordnet werden. Desweiteren haben XML Dokumente typischerweise XML Schemata, deren Bedeutung im Normalfall bekannt ist. Dadurch können weitere Dimensionen erkannt werden. Desweiteren kann es ein solcher Detektor erlauben, Dimensionen durch XPATH Ausdrücke zu bestimmen.

Human-Detektor: Eine Alternative zu Detektoren, die Dimensionen aufgrund von Maschinen oder Computerprogrammprodukten identifizieren, sind Detektoren. die von Menschen ausgeführt werden. Beispielsweise kann ein Mensch eine Region in einem Dokument identifizieren und sie einer Dimension zuordnen. Dabei können diese Detektoren auch von mehreren Menschen bedient werden. Somit kann beispielsweise festgestellt werden, wie viele verschiedene Menschen eine Region einer bestimmten Dimension zuordnen. Ein solcher Detektor kann beispielsweise auch klientseitig implementiert werden und die von Menschen detektierten Dimensionen an den Hyperadapter 300 melden. Für eine Realisierung können Plugin Technologie, Javascript, Silverlight, Flash und / oder weitere Technologien dienen.

Regexp-Detektor: Ein Regexp-Detektor kann Dimensionen aufgrund von regulären Ausdrücken ("regular expressions") erkennen. Dabei erlaubt es ein solcher Detektor, dass reguläre Ausdrücke mit einer Dimensionszuordnung in ihm gespeichert werden können. Dies erlaubt eine schnelle und einfache Anpassung durch den Benutzer.

File Property Detektor: Dateien besitzen typischerweise Metainformationen wie z.B. Größe, Name, Typ, Version, Verzeichnis, Bewertung, Tags, usw.. Desweiteren haben beispielsweise Bilder sogenannte Exif-Daten, die beispielsweise Geopositionen enthalten. Dieser Detektor erfasst die verschiedenen Daten oder Teile derselben als Dimensionen.

Die folgenden Detektoren sind besonders im Bereich der Softwareentwicklung von Nutzen. Aufgrund des vielfältigen Inhaltes können jedoch alle weiteren, in diesem Dokument vorgestellten Detektoren, auch zur Softwareentwicklung verwendet werden.

Concernmapper Dimensionsdetektor: Durch das Tool Concernmapper ist es möglich, einzelne Fragmente bei der Softwareentwicklung Concerns zuzuordnen (siehe oben). Ein Detektor kann diese Informationen erkennen, damit diese Dimensionen zusammen mit den Dimensionen, die durch andere Detektoren aufgedeckt worden sind, verarbeitet werden können.

Hardware Befehlszugriffsdetektoren aufgrund von kompiliertem Code: Hardware Zugriffsdetektoren werden dazu genutzt um festzustellen, an welchen Stellen ein Programm auf spezielle Funktionen von Hardware zugreift. Dies kann beispielsweise das Ausführen einer oder mehrerer Funktionen eines Microchips sein. Zum Beispiel das Ausführen von MMX Befehlen wie PMADDWD. Dabei durchsucht dieser den kompilierten Code durch Parsen nach einem speziellen Befehl. Danach wird bestimmt, durch welche Quellcodedateien dieser Befehl an welchen Stellen erzeugt wurde. Diese Zuordnung wird z.B. durch Zuordnungsregeln vorgenommen. Zuordnungsregeln können beispielsweise ein einfaches Mapping von Dateinamen der kompilierten Datei zu dem Namen der Quellcodedatei sein. Eine andere Möglichkeit ist das Nutzen von Compilerfunktionen.

Zugriffsdetektoren aufgrund von Bibliotheksnutzung: Eine andere Möglichkeit, Informationen über Quellcode aufzudecken ist das Nutzen des Wissens über Bibliotheken. Dabei nutzt der Detektor Bibliotheksinformationen, um Fragmente aufzudecken, welche die Bibliothek nutzen. In den Bibliotheksinformationen können beispielsweise Klassen oder Interfacenamen und die zugehörige Dimension festgelegt sein. Somit können die Dimensionen von abgeleiteten Klassen oder Interfaces bestimmt werden. Oder es ist möglich zu sehen, wie oft ein Fragment auf die Fragmente aus der Bibliothek oder daraus abgeleitete Elemente zugreift.

Aufgrund der Tatsache, dass abgeleitete Klassen auch die Dimension der Mutterklasse erben, kann der Analysator auch beim Aufdecken Bibliotheksinformationen ergänzen. Beispielsweise durch das Hinzufügen einer Klasse, die eine Schnittstelle implementiert. Dies hat den Grund, dass somit Konsumenten der Klasse indirekt die Bibliothek nutzen. Ein solcher Bibliotheksdetektor ist in Fig. 18. Dabei ist der Analysator der Teil des Detektors, der die Bibliotheksinformationen nutzt und / oder ergänzt und den Detektionsalgorithmus durchführt.

Alternativ kann der Bibliotheksdetektor Informationen über abgeleitete Klassen auch in die Dimensionsdaten schreiben und / oder Informationen daraus nutzen. Beispielsweise kann ein anderer Detektor eine Klasse einer Dimension zugeordnet haben, die aus einer Bibliothek stammt. Der Detektor kann in diesem Fall diese Information nutzen.

Mit solchen Detektoren kann auch die Nutzung von externer Hardware bestimmt werden. Beispielsweise werden Netzwerkzugriffe in der Regel nicht von Hand programmiert, sondern es werden dazu Bibliotheken verwendet. Im Falle des Betriebssystems Windows beispielsweise die Bibliothek WinPcap. Somit wäre es möglich, technisch zu detektieren, an welchen Stellen ein Programm auf das Netzwerk zugreift. Diese Stellen würden dann in der Dimension Netzwerk liegen. Ein weiteres Beispiel wäre der Zugriff auf die Kamera eines Mobiltelefons oder eine Webcam eines Computers. Da auch diese Funktionen über eine Bibliothek zur Verfügung gestellt werden, wäre es auch hier möglich zu bestimmen, welche Softwarefragmente auf die Kamera zugreifen. Ein anderes Beispiel wären Zugriffe auf die Druckfunktion. Auch dies wird in der Regel durch Bibliotheken programmiert.

Oftmals wird auch der Zugriff auf einen Sensor über die Nutzung einer Bibliothek programmiert. Beispielsweise wird bei Windows die Klasse Win32_TemperatureProbe zur Verfügung gestellt, die es im Zusammenhang mit anderen Funktionen möglich macht, die Temperatur des Prozessors auszulesen. Durch ein Hinterlegen der Befehlsequenz in den Bibliotheksdaten wäre es so möglich zu bestimmen, wo auf einen Sensor zugegriffen wird.

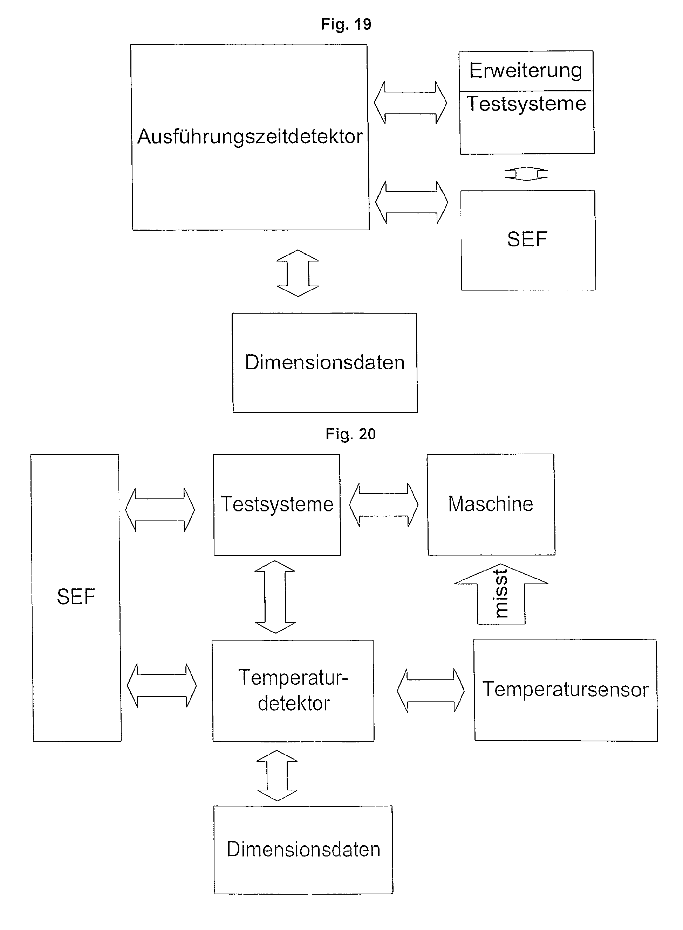

Fragment Ausführungszeitdetektor: Dieser Detektor erkennt die Dimension der Ausführungszeit von Softwareentwicklungsfragmenten. Fig. 19 zeigt exemplarisch einen solchen Detektor. Dieser nutzt ein Testsystem, um die Ausführungszeiten von Softwareentwicklungsfagmenten (SEF) zu bestimmen. Oftmals werden in Testsystemen nicht die Ausführungszeiten von einzelnen Funktionen gemessen oder gespeichert, welche Fragmente genau in welcher Zeit ausgeführt wurden. Für diesen Fall besteht der Detektor aus dem Detektor selbst und einer Erweiterung für das Testsystem. Diese Erweiterung misst die Ausführungszeit einzelner Funktionen der Software auf dem Testsystem. Der Detektor kann auch mit mehreren Testsystemen verwendet werden. Dies hat den Grund, dass verschiedene Testsysteme verschiedene Ausführungszeiten liefern können. Zum Beispiel kann ein Testsystem einen Mehrkernprozessor besitzen und ein anderes nur einen Einzelkemprozessor. Die Daten in diesem Zusammenhang könnten dann Testsystem, SEF, Testfall und Ausführungszeit in Relation setzen. Dabei könnten verschiedene Testsysteme als verschiedene Dimensionen wahr genommen werden.

Temperaturdetektor: Ähnlich wie der Ausführungszeitdetektor ist der Temperaturdetektor. Er könnte ebenfalls teilweise als Erweiterung eines Testsystems dienen. Der Temperaturdetektor prüft die Temperatur eines Systems vor dem Ausführen eines SEF, beispielsweise bei einem Testfall. Nach der Ausführung wird die Temperatur erneut gemessen. Diese Daten und die zugehörige Veränderung können als Dimensionen wahrgenommen werden. Dabei wird die zugehörige Veränderung beispielsweise wie folgt berechnet:

$$|(Temperatur\ zuvor - Temperatur\ danach)| / Grundtemperatur\ des\ Systems = Veränderungsdelta$$

Ein anderer Fall des Temperaturdetektors ist das Messen der Temperaturveränderung einer Maschine oder eines technischen Geräts. Oftmals werden Maschinen durch Software gesteuert und dort werden Aktionen durchgeführt, z. B. das Bewegen eines Roboterarmes oder das Steuern eines Lagersystems. Durch einen solchen Detektor wird die Temperaturveränderung der Maschine gemessen, wenn Softwarefragmente ausgeführt werden.

Fig. 20 zeigt einen Aufbau, wie ein solcher Detektor realisiert werden kann. Dabei ist an den Temperaturdetektor ein Temperatursensor angeschlossen. Durch diesen misst der Temperaturdetektor die Temperatur der Maschine. Desweiteren hat der Temperaturdetektor eine Verbindung zu dem Testsystem, das die Softwareartefakte ausführt. Dadurch kann der Temperaturdetektor feststellen, welche Softwarefragmente auf dem Testsystem ausgeführt werden. Auf diese Weise kann der Temperaturunterschied vor und nach dem Ausführen von Softwareartefakten gemessen werden. Diese kann dann den entsprechenden Softwareartefakten zugeordnet werden. Ebenso wie zuvor kann der Detektor auch durch eine Erweiterung im Testsystem realisiert werden. Ähnlich wie der beschriebene Temperaturdetektor kann auch ein Detektor für die Lautstärkenmessung funktionieren. Hierbei wird ein Sensor eingesetzt, der die Lautstärke misst.

Energieverbrauchsdetektor: Ähnlich wie ein Temperpaturdetektor (siehe oben) kann auch ein Energiedetektor bereitgestellt werden. Durch einen Sensor am Testsystem kann die Strom- und / oder anderweitige Energieaufnahme beim Durchführen von SEF ermittelt werden. Ebenso wie zuvor kann auch die Energie einer Maschine gemessen werden.

Eine weitere Möglichkeit wäre es, sofern das Testsystem über einen Akku verfügt, vor und nach dem Durchführen von Softwarefragmenten die Energie zu messen. Danach könnte die Energie für eine Funktion über

$$Verbrauchter\ Strom - durchschnittlicher\ Stromverbrauch = Energie\ der\ Funktion$$

berechnet werden. Bei Temperatur- und Energiedetektoren können wie beim Ausführungszeitdetektor die Parameter der Testsysteme als weitere Dimensionen dienen.

Mehrmaliges Durchführen von Temperatur- und / oder Energiemessungen: Oftmals ist der Energieverbrauch oder die Temperaturentwicklung von Softwarefragmenten sehr gering. Daher kann es in diesem Kontext von Nutzen sein, solche Tests mehrmals durchzuführen und darüber den Mittelwert zu bilden.

Ein solcher Energiedetektor kann dabei auch für andere Energieformen jeder Art eingesetzt werden. Zum Beispiel könnte ein solcher Energiedetektor auch einen Kraftstoffverbrauch messen. Dies könnte für Codefragmente wie zum Beispiel Steuerungsprogramme auf Mikrochips durchgeführt bzw. gemessen werden. Denkbar sind hierbei auch Messungen in der Kombination mit Simulationen. Als Anwendungsbeispiel kommt hierbei ein Kraftfahrzeug, das inzwischen von unzähligen Mikrochips gesteuert wird, deren Funktionen sich auf den Kraftstoffverbrauch auswirken, in Betracht.

Ähnlich wie Energie-, Temperatur-, oder Ausführungszeitdetektor sind weitere Detektoren vorstellbar, die andere physikalische Größen, wie z.B. Druck und / oder Kraft nutzen.

Aspekt Detektor: Der Aspekt Detektor deckt auf, welche Klassen, Funktionen oder andere SEF von einem Aspekt betroffen sind. Dazu analysiert er Quellcode, kompilierten Code, nutzt dafür ein weiteres Programm und / oder ein hybrides Vorgehen. Als Programm kann im Falle von AspectJ beispielsweise das XREF Tool verwendet werden.

Hardware exposed functions Detektor: Oftmals werden in einem Programm auch Eingabeschnittstellen für den Benutzer oder eine andere Maschine zur Verfügung gestellt. Der Detektor kann aufdecken, welche Teile direkt angesprochen werden können. Beispielsweise könnte ein Detektor aufdecken, welche SEF durch eine WSDL-Datei als Webservice über ein Computernetzwerk zur Verfügung gestellt werden. Dazu kann dieser WSDL-Dateien untersuchen und zugehörige Funktionen aus dem Quelltext bestimmen. Ein anderes Beispiel wären Funktionen, die bei einem Touchpad nach dem Drücken einer virtuellen Taste ausgeführt werden. Beispielswiese können Oberflächen für Touchpads durch MS XAML beschrieben werden. In einer solchen XAML Datei wird festgelegt welche Funktionen aus dem Quellcode aufgrund des Drückens einer Taste ausgelöst werden.

DSL Detektor: Oftmals werden in der Softwareentwicklung domänenspezifische Sprachen verwendet. Dabei repräsentieren solche Sprachen Aspekte eines Systems. Da die Bedeutung der DSL typischerweise bekannt ist, kann somit ein Detektor bereitgestellt werden, der es ermöglicht, die Dimensionen in einem Modell einer DSL zu erkennen. Oftmals interagieren DSLs auch mit Quelltext. Beispielsweise, dass sie interpretiert werden oder aus ihnen Quelltext generiert wird, der mit handgeschiebenen Quelltext interagiert (siehe oben). Dadurch kann bestimmt werden, mit welchen DSLs Quelltext interagiert. Somit kann eine DSL auch als Dimension, oder je nach ihrem Inhalt als mehrere Dimensionen aufgefasst werden. Die Interaktionen von Quellcode mit dieser DSL sind somit Interaktionen mit dieser Dimension. Oftmals gibt es auch DSLs die mit anderen DSLs interagieren. In einem solchen Fall kann eine DSL selbst die Position von Quellcode einnehmen.

Bean Detektor: Ein Beispiel für einen DSL Detektor ist ein Bean-Detektor. Beispielsweise besteht im Spring Framework die Möglichkeit, Klassen als Beans verfügbar zu machen. Die Definition, welche Klasse als Bean verfügbar ist, kann über eine oder mehrere XML Dateien vorgenommen werden. Der zugehörige Detektor kann dann die Informationen aus dieser auswerten und erkennen, welche Klassen als Bean verfügbar sind.

Spring Webflow Detektor: Ein weiteres Beispiel für eine DSL ist Spring Webflow. Diese Sprache ermöglicht es, einen Fluss von Aktionen zu definieren. Dabei referenziert sie Beans und Funktionen, die bei diesen ausgeführt werden. Der zugehörige Detektor kann erkennen welche Klassen, Funktionen und Beans zu dieser Dimension gehören. Hierbei ist das Zusammenspiel zwischen verschiedenen Detektoren zu sehen. Beispielsweise kann es in diesem Fall von Vorteil sein, die Ergebnisse des Bean Detektoren zu nutzen, um die entsprechenden Klassen zu identifizieren.

Annotationsdetektor: Eine Spezialform einer DSL sind Annotationen. Annotationen werden als interne DSL bezeichnet. Oftmals werden dadurch strukturierte Meta-Informationen im Quelltext abgelegt, beispielsweise der Autor eines Softwarefragments. Oder auch Beans können darüber definiert werden. Durch einen Annotationsdetektor können die verschiedenen Dimensionen, die durch Annotationen aufgespannt werden, bestimmt werden.

Persistency Detektor: Ein Beispiel für einen weiteren Detektor ist das Feststellen von Fragmenten, die zu der Dimension der Persistenz eines Softwaresystems gehören. Beispielsweise können solche Fragmente, die mit der Persisenz eines Systems zusammenhängen, dadurch bestimmt werden, dass sie von Klassen aus einer bestimmten Frameworksbibliothek erben, oder dass sie bestimmte Annotationen besitzen. Desweiteren ist es auch möglich, dass persistente Klassen durch eine XML Datei definiert werden.

Autor Detektor: Ein solcher Detektor erkennt den Autor eines SEF, beispielsweise durch eine Author-Annotation. Optimalerweise kann ein solcher Detektor aufgrund solcher Informationen den Autor in weiteren Systemen identifizieren und somit Verweise erzeugen oder weitere Informationen über den Autor aufdecken. Beispielsweise dessen Personalidentifikationsnummer und / oder entsprechende Cubes in einem Data Warehouse. Diese Informationen können dann beispielsweise als Verweis oder Referenz auf das Data Warehouse, Cubes und / oder Personalidentifikationsnummer in den Dimensionsdaten gespeichert werden. Sofern diese dann bei einem Zugriff genutzt werden sollen, kann die Bridge des Hyperadapters 300 aufgrund der hinterlegten Informationen die Cubes im Data Warehouse mitnutzen.

Beispielsweise können, sofern in einem Fremdsystem Informationen darüber vorhanden sind, welche Mitglieder ein Team hat, Berechungen oder Zugriffe aufgrund des Teams durchgeführt werden. Zum Beispiel könnte dadurch die Fehleranzahl von verschiedenen Teams vergleichen werden. Man beachte hierbei, dass diese Funktionalität sich auch auf weitere Informationen übertragen lässt.

Security Detektor: Ein weiteres Beispiel ist das Feststellen abgesicherter Funktionen eines Softwaresystems. Oftmals werden durch Konfigurationsdateien oder Annotationen bestimmt, welche Klassen oder Funktionen mit bestimmbaren Parametern gesichert sind. Somit können die gesicherten Fragmente und deren Parameter bestimmt werden. Einen großen Nutzen erhält dieser Detektor in dem Zusammenspiel mit denjenigen Detektoren, die feststellen, welche Funktionen eines Systems von außen zugänglich sind. Dadurch kann mit einer Abfrage bestimmt werden, welche Fragmente von außen zugänglich und nicht gesichert sind, beispielsweise ungesicherte Webservices.

Transaktionsdetektor: Ein weiterer Detektor ist dafür zuständig, Transaktionen im Quelltext aufzudecken. Transaktionen werden oftmals durch DSLs definiert. Dabei kommen oft Konfigurationsdateien und/oder Annotationen zum Einsatz. Der Detektor erkennt welche SEF Teil einer Transaktion sind.

Deprecated Consumer Detektor: Oftmals werden durch Annotationen veraltete Funktionen/Klassen in einer API oder einem Framework gekennzeichnet. Dieser Detektor nutzt diese Informationen/Annotationen, um die Dimension der Konsumenten von veralteten Funktionen aufzudecken.

Metric Detektor: Bei der Softwareentwicklung werden oftmals Metriken eingesetzt. Ein Metrik Detektor ordnet Metriken Softwarefragmenten zu. Dabei kann ein solcher entweder die Metriken selbst berechnen, oder er nutzt Systeme, in denen die Metriken berechnet wurden und ordnet diese dann als Dimensionen den SEF zu.

Issue Tracking and Version Control Detector: Bei der Softwareentwicklung werden oftmals Issue Tracking und Versionskontrollsysteme verwendet. Ein solcher Detektor kann die Informationen aus solchen Systemen nutzen, beispielsweise um die Version, zu der ein SEF gehört festzustellen. Desweiteren sind mit Versionen oder konkreten SEF oftmals Issues verknüpft. Dies kann der Detektor ebenfalls aufdecken und zuordnen. Besonders bevorzugt kann dieser Detektor auch darüber ersetzt werden, dass eine Brücke zu diesen Systemen eingesetzt wird, die eine gleich mächtige Funktionalität bereit stellt, als wenn der Detektor verwendet werden würde.

Fehlerklassen Detektor: Im Bereich der Metriken können auch Fehlerklassen als Dimension erkannt werden. Diese Fehlerklassen lassen sich somit mit weiteren Dimensionen kombinieren.

Test Case und Test Result Detektor: Dieser Detektor kann erkennen, für welche SEF Testfälle vorhanden sind und erkennt deren Resultate. Dazu kann er selbst Tests durchführen oder ein Testframework oder System nutzen. Eine weitere Möglichkeit ist, dass dieser die Ergebnisse eines Testsystems oder Frameworks nutzt. Man beachte, dass durch die Kombination von Metriken und Testfällen in den Dimensionsdaten, z.B. in einem mehrdimensionalen Schema, Data Mining durchgeführt werden könnte. Dadurch würden sich Zusammenhänge zwischen Metriken und Testergebnissen aufdecken lassen. Beispielsweise, welche Metriken führen oftmals zu fehlgeschlagenen Testfällen.

Kommentar und Kommentarinhalt Detektor: Ein solcher Detektor kann aufdecken, welche Kommentare zu einem SEF gehören. Dadurch kann zum Beispiel die Abfrage gestellt werden alle SEF zu zeigen, deren Kommentar bestimmte Wörter enthält. Desweiteren könnte ein solcher Detektor dazu dienen, Kommentare, die Dimensionen beschreiben, zu den Dimensionsmetadaten hinzuzufügen.

Design Pattern Detektor: Hiermit könnten sich Design Patterns (Entwurfsmuster) aufdecken lassen. Durch dieses Wissen könnte dann beispielsweise die Abfrage durchgeführt werden, an welchen Stellen im Quellcode bestimmte Design Patterns vorkommen.

Coding Conventions Detektor: Oftmals gibt es bei der Softwareentwicklung Projektrichtlinien die bestimmen, wie bestimmte Fragmente zu benennen sind. Beispielsweise, dass ein Data-Access-Object auch den String "DAO" in seinem Namen enthalten muss. Solche Konventionen ermöglichen es, einen Detektor bereitzustellen, der aufgrund von Coding Conventions Dimensionen von SEF aufdecken kann. Man beachte, dass dieser Detektor von großem Nutzen im Zusammenspiel mit anderen Detektoren und Abfragen ist. Oftmals werden zur Programmierung Bibliotheken verwendet. Dabei werden beim Programmieren von Klassen aus den Bibliotheken neue Klassen abgeleitet. So bietet das Spring Framework beispielsweise Klassen, die es erleichtern DAOs zu programmieren. Sofern von einer solchen Klasse abgeleitet wird, ist die abgeleitete Klasse ein DAO. Kombiniert mit einem Detektor für Coding Conventions, der DAOs erkennt, kann nun eine Abfrage erstellt werden, die es prüft, wo DAOs vorhanden sind, die nicht der Coding Convention Folge tragen und im Namen DAO enthalten.

Bundle / Komponentendetektor: Oftmals wird ein Softwaresystem durch Komponenten erstellt, beispielsweise OSGi mit Bundles im Fall von Java. Ein solcher Detektor erkennt die Informationen, die über die Bundleinformationen bereit gestellt werden. Dadurch kann identifiziert werden, welche SEF zu den einzelnen Komponenten gehören.

Plattformdetektor: Ein solcher Detektor erkennt, auf welcher Plattform Software lauffähig ist, beispielsweise durch Informationen in Bundles. Beispielsweise im Falle von OSGI ist festgelegt, unter welcher Java Version ein Bundle lauffähig ist. Eine andere Vorgehensweise, eine Plattform zu erkennen, kann durch die Analyse des Quelltextes erfolgen. Beispielsweise bieten verschiedene Plattformen unterschiedliche APIs. Somit kann aufgrund der genutzten API-Funktionen bestimmt werden, für welche Plattform verschiedene Quelltextteile lauffähig sind.

Runtimedetektor: Ein Runtimedetektor stellt Dimensionen im Laufzeitverhalten von Quellcode fest. Beispielsweise kann ein solcher Detektor feststellen, welcher Code wie oft bei der Benutzung von verschiedenen Benutzern durchgeführt wird. Dieser Detektor kann vor allem bei Auswertungen im Bezug auf die Temperaturentwicklung und / oder den Energieverbrauch nützlich sein. Beispielsweise kann durch die Ergebnisse dieses Detektors kombiniert mit dem Temperaturdetektor aufgedeckt werden, welche Fragmente besonders stark für die Hitzeentwicklung verantwortlich sind. Beispielsweise durch folgende Abfrage: Welche Fragmente werden besonders oft ausgeführt und haben eine hohe Temperaturveränderung. Dieses Vorgehen würde sich analog auch auf Dinge wie Energieaufnahme anwenden lassen. Als Beispiel für den Energieverbrauch kann sich unter anderem ein Kraftfahrzeug vorgestellt werden. Hierbei könnte während des Fahrens von Testpersonen auf Mikrochips die Häufigkeit von ausgeführten Codefragmenten gemessen werden. Unterdimensionen könnten dabei Fahrertypen, wie zum Beispiel "sportlicher Fahrer" und / oder "normaler Fahrer" sein. Diese Messungen können mit dem Energieverbrauchsdetektor gemeinsam benutzt werden. Somit kann auch für diesen Fall der besonders stark kraftstoffverbrauchende Quellcode, ähnlich der Abfrage zuvor, bestimmt werden. In diesem Kontext könnten auch Programme, die nach dem "AUTOSAR"-Standard (vgl. http://www.autosar.org/) entwickelt sind, auf den Energieverbrauch untersucht werden. Ähnlich lässt sich der Hyperadapter auch für weitere Bereiche einsetzen, zum Beispiel bei Flugzeugen, Schiffen oder Raketen.

Developer interaction Detektor: Ein solcher Detektor zeichnet Interaktionen des Entwicklers auf und ordnet sie den entsprechenden SEF zu, beispielsweise, wie oft eine bestimmte Datei angeschaut wurde, oder an welchen Stellen Breakpoints gesetzt wurden.

Detektoren im Bereich des Internets, des Intranets und / oder der Desktopsuche: In diesen Bereichen werden spezialisierte Detektoren bereitgestellt. Aufgrund des vielfältigen Inhaltes können auch Detektoren von der Codesuche und weitere hierin vorgestellte Detektoren verwendet werden. Dies hat den Grund, dass auch viele Dokumente im Internet Quellcode enthalten. Sofern der Hyperadapter als Suchmaschine eingesetzt wird, wird es besonders bevorzugt, dass Nutzer der Suchmaschine selbst Detektoren erstellen können.

Detektor für Microformate: Dieser Detektor dient dazu, Mikroformate (vgl. "Wikipedia Artikel Mikroformate", http://de.wikipedia.org/wiki/Mikroformate) und deren Inhalte zu erkennen.

Detektor für logische Strukturen: Durch diesen können logische Strukturen aufgedeckt werden, beispielsweise Überschriften. Diese könnten anhand der Schriftgröße erkannt werden. Ein weiteres Beispiel ist das Erkennen von Adressen.

Detektor für Strukturen: Ein solcher Detektor kann aufgrund der Bekanntheit des Inhaltes und dessen Bedeutung von "großen Formen" erstellt werden. Mit großen Formen ist hierbei die Bedeutung von Strukturen gemeint. Beispielsweise kann eine solche Struktur ein Social Network wie Myspace sein. Hierbei ist die Bedeutung der Inhalte der Profilseiten der Mitglieder bekannt. Somit kann ein Detektor für diese Struktur erstellt werden. Desweiteren sind oftmals Webseiten mit der gleichen Software realisiert. Ein solcher Detektor kennt den Aufbau von verschieden Implementierungen und deren Datenmodell. Dadurch kann er deren Dimensionen erkennen. Ein Beispiel hierfür sind Webshops. Dadurch könnte er Produkte und deren Eigenschaften wie den Preis, Hersteller usw. erkennen. Dasselbige lässt sich auf Foren, Webblogs, Twitter, Studivz, XING, Wordpress, OScommerce, CIAO und weitere Software oder Plattformen anwenden, die im Internet eingesetzt werden.

Kommentardetektor: Oftmals enthalten Webseiten Kommentare von Nutzern. Ein solcher Detektor kann Kommentare erkennen. Dabei kann er auch weitere Dimensionen wie beispielsweise die Anzahl der Kommentare berechnen.

Bildinhalt Detektor: Dieser Detektor erkennt Inhalte von Bildern. Dies kann durch künstliche Intelligenz, eine andere Maschine, System und / oder Computerprogrammprodukt geschehen. Bevorzugt wird im Bereich des Internets aber die Tatsache genutzt, dass Nutzer Personen auf Bildern oftmals innerhalb einer Community markieren ("taggen") können. Dabei wird auf einem Bild markiert, wer darauf zu sehen ist. Desweiteren können User oftmals Tags als Beschreibung für ein Bild eingeben. Dadurch können beispielsweise die Dimensionen der Tags und der Bildkommentare erkannt werden. Eine besonders bevorzugte Version dieses Detektors nutzt desweiteren die Ergebnisse eines oder mehrerer Human Detektoren und entscheidet in Kombination mit diesen über den Inhalt eines Bildes.

Erfahrungsbericht Detektor: Dieser Detektor ermöglicht es, Erfahrungsberichte und zugehörige Daten zu erkennen. Beispielsweise, für welches Produkt ein Erfahrungsbericht ist. Besonders hilfreich ist dieser Detektor in Kombination mit einem Produkt Detektor. Durch diesen Detektor können zum Beispiel Produkte in einem mehrdimensionalen Schema Erfahrungsberichten zugeordnet werden.

News Detektor: Dieser Detektor erkennt Neuigkeitsmeldungen und deren Inhalt. Beispielsweise Artikel auf der N-TV Homepage. Dabei werden bevorzugt Dimensionen wie das Datum erkannt. Dies ermöglicht es beispielsweise, bei einer Abfrage gezielt nach Nachrichten in gewissen Zeiträumen mit bestimmten Inhalten zu suchen. Besonders bevorzugt kann dieser Detektor in Ausführungsformen auch RSS oder Atom Feeds verarbeiten.

Link Detektor: Dieser Detektor erkennt Verweise auf einer Webseite. Er kann zum Beispiel erkennen, in welcher Dimension sich ein Link befindet. Beispielsweise zu einer anderen Seite oder einem Autorenprofil. Dabei kann er unterschieden, wie ein Link zustande gekommen ist. Zum Beispiel ein "normaler Link" oder ein "Trackback link". Diese Unterscheidung ist sehr wichtig, da immer mehr Links automatisiert erzeugt werden. Moderne Suchmaschinen nutzen nur die Dimension eines normalen Links bei ihrem Ranking, was aufgrund von der Weiterentwicklung des Internets zu immer schlechteren Suchergebnissen führt. Zusätzlich kann ein solcher Detektor noch weitere Dimensionen berechnen. Zum Beispiel, wie das Verhältnis zwischen Links und Trackbacks ist. Oder die Anzahl der Links.

Detektor für Tags: Dieser Detektor erkennt die Dimension der Tags. Tags stellen nicht anderes im Gedankenmodell des Hyperadapters als Dimensionsklassifikatoren für bestimmte Inhalte dar. Dadurch können getaggte Inhalte Dimensionen zugeordnet werden. Besonders bevorzugt lassen sich durch diesen Detektor auch Hierarchien in Tags selbst aufdecken. Das Aufdecken solcher Hierarchien kann beispielsweise wie in "Collaborative OLAP with tag clouds" (http://arxiv.org/PS_cache/arxiv/pdf/0710/0710.2156v2.pdf) durchgeführt werden. Diese Hierarchien, können zum Beispiel dazu dienen, automatisiert neue mehrdimensionale Schemata zu erstellen.

Verwendung des Hyperadapters als Suchmaschine für das Internet, Intranet, Expertensuche und / oder für die Suche auf weiteren technischen Geräten

Der Hyperadapter 300 kann als Suchmaschine eingesetzt werden oder als eine Erweiterung für eine Suchmaschine dienen. Durch ihn können Dimensionen identifiziert und mehrdimensionalen Schemata zugeordnet werden. Desweiteren können auch Dimensionen, die nicht explizit bekannt sind, durch Detektoren erkannt werden. Dies bedeutet neue Informationen für eine Suchmaschine. Außerdem existiert durch den Hyperadapter 300 die Möglichkeit, komplexere Abfragen als mit einer herkömmlichen Suchmaschine zu erstellen.

Besonders bevorzugt kann ein Hyperadapter 300, der als Suchmaschine oder deren Erweiterung eingesetzt wird, eine Schnittstelle aufweisen, die zu derzeit eingesetzten Suchmaschinen kompatibel ist. Man beachte hierbei, dass eine solche Schnittstelle dazu dienen kann, eine herkömmliche Suchanfrage in eine mehrdimensionale Anfrage zu übersetzen.

Besonders bevorzugt kann auch eine Schnittstelle angeboten werden, die es ermöglicht natürlichsprachliche Anfragen zu beantworten. Aus solchen Anfragen kann mit Mitteln des Hyperadapters 300 bestimmt werden, welche Dimensionen, deren Kreuzungen, Unterdimensionen und / oder Schemata durch die natürlichsprachliche Anfrage bestimmt werden sollen. Dies kann z.B. anhand von Wahrscheinlichkeiten, Dimensionsmetadaten, Dimensionsdaten 304 und / oder der Datenbasis 305 geschehen.

Besonders bevorzugt werden bei dem Einsatz des Hyperadapters 300 als Suchmaschine spezielle dafür optimierte Schemata, Dimensionsdaten 304 und / oder Speichereinheit(en) verwendet. Diese speziell angepassten Schemata lassen sich natürlich auch bei dem Einsatz des Hyperadapters 300 in anderen Bereichen, wie beispielsweise der Quellcodeentwicklung verwenden.

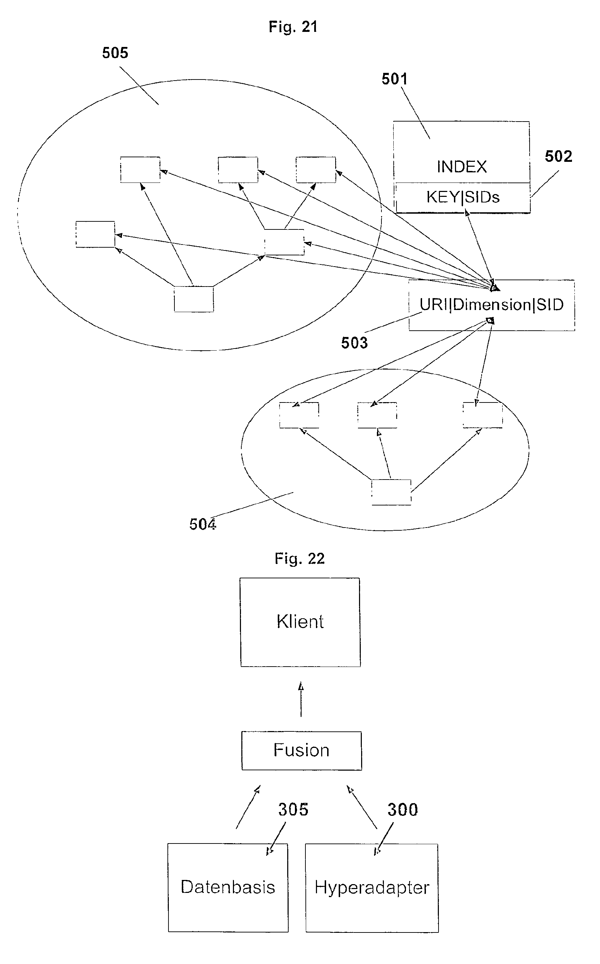

Ein Beispiel für solche mehrdimensionale Schemata ist in Fig. 21 zu sehen. Dabei werden mehrdimensionale Schemata 504, 505 und Indexinformationen 501, 503 verwendet, um in die Detektoren Informationen eintragen. Um Speicherplatz zu sparen und nicht für jede Dimension einen eigenen Index zu benötigen, werden Surrogatschlüssel (SIDs) verwendet. SIDs ordnen einer Dimension zusammen mit einer eindeutigen Ressource (URI) einen Bezeichner 503zu. Dadurch können Ressourcen auch mehrere SIDs erhalten, um es zu ermöglichen, dass eine Ressource in mehreren Dimensionen gleichzeitig ist. Einträge im Index 502 verweisen auf diese SIDs. Die SIDs werden in mehrdimensionalen Schemata eingeordnet.

Besonders bevorzugt werden bei dem Aufbau eines Indexes bekannte Erkenntnisse eingesetzt, insbesondere aus der Suchmaschinen- und Datenbankentwicklung. Desweiteren könnte als Datenstruktur ein speziell angepasster Patricia Trie, HAT Trie oder Brust Trie (vgl. "HAT-trie: A Cache-conscious Trie-based Data Structure for Strings", http://crpit.com/confpapers/CRPITV62Askitis.pdf) dienen. Sofern weitere Dimensionen eingesetzt werden, die beispielsweise nicht textuell sind, wie Bilder, Videos, Geodaten oder Zahlen, können hierfür spezialisierte Indexe eingesetzt werden. Die Schemata und das SID-System enthalten für einen solchen Fall spezielle Anpassungen. Desweiteren werden für solche Fälle spezialisierte Operationen angeboten, beispielsweise zu einer Umkreissuche, sofern Geodaten vorkommen.

Beispiel für eine Suche anhand eines Blog Schemas: Das zuvor Erläuterte wird im Folgenden anhand einer beispielhaften Abfrage dargestellt. Wie bereits oben erläutert, weist ein Blog typischerweise Kommentare auf, die einzelnen Posts zu geordnet sind. Die Suchmaschine bekommt nun eine Abfrage mit der Forderung, Blogposts die den Text "xxx" enthalten und im Kommentar des Posts den Text "yyyy" zu bestimmen. Dabei werden zuerst die SIDs (Erg. 1) für den Text "xxx" bestimmt. Gleichzeitig oder danach werden die SIDs (Erg.2) für den Text "yyyy" bestimmt. Optionalerweise werden nun aus beiden Resultaten die SIDs eliminiert, die nicht den entsprechenden Dimension(en) zugeordnet sind (Blogpost-Kommentar bzw. Blogpost). Danach wird ein Schema eines Blogs konsultiert. Es wird aufgrund der Ergebnisse bestimmt, auf welche Blogposts Erg. 1 und Erg.2 zutreffen (Erg.3, Erg.4). Dabei wird bestimmt, welche Blogposts in Erg.3 und Erg.4 vorhanden sind (Erg.5). Aufgrund der SIDs von Erg.5 der Blogposts können diese wiederum in die eigentlichen Identifikatoren aufgelöst und als Resultat 301 zurück gegeben werden. Man beachte, dass es vor der Rückgabe noch denkbar ist, dass Transformationen des Resultates 301 durchgeführt werden (siehe oben).

Weiterer Einsatz der Suchmaschine: Da Intranet und / oder Internet oftmals mit gleicher Technologie realisiert sind, lässt sich eine solche Suchmaschine auch im Intranet einsetzen.

Da sich eine Desktopsuchmaschine nicht wesentlich in der heutigen Zeit von einer Internetsuchmaschine unterscheidet, kann diese auch auf dem Desktop verwendet werden. Besonders bevorzugt kann eine Desktopsuchmaschine auch mit einer Suchmaschine für das Internet zusammengeschlossen werden. Dies kann zum Beispiel darüber geschehen, dass eine Desktopsuchmaschine auch Informationen der Internetsuchmaschine mit in die Abfragen integrieren kann.

Besonders bevorzugt verfügt eine Desktopsuchmaschine über bestimmte Detektoren, die für diese Art der Suche nützlich sind. Beispielsweise Detektoren, die Informationen über das Dateisystem des Computers erfassen, wie beispielsweise den Pfad eines Objektes und / oder Detektoren, die Inhalte von Dokumenten erfassen.

Ähnlich und / oder gleich lässt sich mit den obigen Konzepten der Desktop- und / oder Internetsuche eine solche Suchmaschine für Mobiltelefone, PDAs, mobile tragbare Computer oder weitere computerähnliche Geräte und / oder Systeme realisieren.

Expertensuche: Besonders bevorzugt kann diese Suchmaschine auch als Expertensuchmaschine verwendet werden. Eine Expertensuchmaschine stellt eine Suchmaschine für einen bestimmten Wissensbereich dar, z.B. für Reisen, Fertigungsmaterial, Börseninformationen, Medizinisches Wissen und Behandlungsmethoden, Rechts- oder Urteilswissen, Patentrecherche, Unterrichtsmaterialsuche, Bildersuche, Videosuche, Musiksuche, Regionalsuche, Bücher- oder Artikelsuche, Partnersuche aufgrund von Interessen, Personensuche, Quellcodesuche, Blogsuche, Auktionssuche, Auto- oder Motorradsuchmaschine, Fahrradsuchmaschine und weitere Anwendungsfälle. Desweiteren lässt sich eine solche Suchmaschine auch als Metasuchmaschine benutzen, indem Ergebnisse von weiteren Suchmaschinen als verschiedene Dimensionen aufgefasst werden.

Optimierung: Besonders bevorzugt werden im Falle der Suchmaschine weitere hierfür optimierte Schemata und / oder Operationen unterstützt.

Auslagern der Suche einer Internetseite: In einer erweiterten Ausführungsform kann die Suchmaschine auch dazu genutzt werden, um die Suche bzw. Suchfunktion oder -system einer Internetseite auszulagern. Dazu können z.B. in einer solchen Suchmaschine Informationen vom Internetseitenbetreiber hinterlegt werden, wie die Schemata der Seite aussehen können. Zudem kann hinterlegt werden, wie die Dimensionen auf der Website erkannt werden können. Optionalerweise kann auch angegeben werden, wie die erkannten Dimensionen Schemata zugeordnet werden können. In diesem Zusammenhang ist es auch denkbar, dass der Hyperadapter 300 Detektoren enthält, die es direkt ermöglichen, auf eine Datenbank einer Internetseite zuzugreifen, um Zeit beim Dimensionsaufdecken zu sparen.

Ranking: Durch mehrdimensionale Schemata ist es möglich, in einer solchen Suchmaschine komplexe Ranking-Operationen zu verwirklichen. Dabei können auch Ranking-Ergebnisse von anderen Suchmaschinen oder bekannten Algorithmen verwendet werden. Sofern Ranking-Ergebnisse von weiteren Suchmaschinen verwendet werden, können diese beispielsweise als Dimensionen von verschiedenen Schemata aufgefasst werden. Vorzugsweise kann diese Suchmaschine auch bei einer Anfrage 302 übermittelt bekommen, welche Ranking-Operationen bei den Ergebnissen angewendet werden sollen. Besonders bevorzugt besitzt die Suchmaschine Operationen und / oder Ranking-Algorithmen, die es aufgrund von benutzererzeugten Inhalten, möglich machen, bessere Bewertungen als die heutzutage eingesetzten Suchmaschinen zu erzielen. Beispielsweise kann zur Bewertung einer Internetseite die Anzahl der Kommentare eine Rolle spielen. Oder es kann Bezug darauf genommen werden, wer einen Artikel geschrieben und / oder kommentiert hat. Desweiteren ist es durch die mehrdimensionalen Schemata auch möglich, Zeitfaktoren bei der Berechnung einer Reihenfolge zu berücksichtigen. Durch einen Zeitfaktor im Ranking kann beispielsweise berücksichtigt werden, dass eine neue Seite nicht so viele Kommentare enthalten kann wie eine ältere. Oder auch, dass auf eine neue Seite nicht so viele andere Seiten verweisen können, wie bei einer länger bestehenden.

Dimensionsmap einer Internetseite: In einer besonders bevorzugten Ausführungsform können auf Internetseiten Informationen hinterlegt werden. Diese können z.B. Daten für Detektoren enthalten, wie Dimensionen auf ein Internetseiten aufgedeckt werden können und / oder wie Schemata aussehen, die z.B. der logischen mehrdimensionalen Struktur der Internetseite entsprechen. Zusätzlich könnten Informationen über die Zuordnungen von Dimensionen zu Schemata vorhanden sein. Desweiteren ist es denkbar, dass in diesen Informationen auch vordefinierte Abfragen für eine Internetseite oder verschiedene Internetseiten angegeben werden können. Diese Informationen können z.B. von einem Crawler genutzt werden.

Domain knowledge cubes: Besonders bevorzugt ist es auch möglich, dass Benutzer einer Suchmaschine selbst Schemata anlegen und / oder ihnen Dimensionen zuordnen. Somit kann beispielsweise ein Benutzer, der Experte in einer speziellen Fachdomäne ist und daher die mehrdimensionalen Strukturen kennt, die dort vorkommen, auf Basis des Hyperadapters 300 mehrdimensionale Schemata anlegen. Hierbei ist es denkbar, auch desweiteren vom Benutzer definierte Abfragen zu hinterlegen. Dies könnte dazu verwendet werden, neue Suchmaschinen durch Benutzer zu entwickeln.

Operationen, die für das Internet benutzt werden können: Besonders bevorzugt stellt eine Hyperadapter-Suchmaschine 300 eine oder mehrere Operationen bereit, die nützlich für eine Suche sind. Dabei können beispielsweise Operationen für eine Umkreissuche enthalten sein. Solche Operationen können auch darüber realisiert werden, dass externe Dienste dazu benutzt werden. Besonders bevorzugt werden desweiteren Transformationsoperationen zur Verfügung gestellt. Beispielsweise können solche Operationen dazu dienen, das Resultat aufzubereiten. Zum Beispiel bei der Bildersuche. Oftmals sind Personen auf Bildern markiert. Durch Detektoren und Schemata ist bekannt, wo sich welche Personen auf einem Bild befinden (z.B. durch Koordinaten). Bei einer Suche nach Bildern einer Person wäre es somit möglich, durch eine Transformation die weiteren Bereiche, auf der die Person nicht zu sehen ist, zu schneiden und nur den Teil der Bilder im Resultat 301 zu liefern, auf der die Person zu sehen ist.

Werbung: Eine Erweiterung der Hyperadapter-Suchmaschine 300 ermöglicht es, Werbung mit Zuordnungen von Dimensionen und Schemata im Hyperadapter 300 zu hinterlegen. Dadurch kann z.B. ermöglicht werden, Werbung in einem Resultat 301 zu integrieren. Eine weitere Möglichkeit ist es, Werbung selbst aufgrund mehrdimensionaler Schemata zu klassifizieren. Dadurch könnte Werbung aufgrund von Abfragen gefunden werden. Hierbei wäre es auch denkbar, Abfragen aus mehrdimensionalen Schemata, in denen Werbung klassifiziert ist, mit Dimensionen, Schemaelementen und / oder Abfragen 302 zu verknüpfen.

Schreibmaschine: Aufgrund eines Zugriffs 302 auf eine solche Hyperadapter-Suchmaschine 300 können auch Schreibvorgänge durchgeführt werden. Besonders bevorzugt bietet die Hyperadapter-Suchmaschine 300 hierfür eine REST-Schnittstelle, die Zugriffsdokumente entgegen nimmt. Durch die REST-Operationen wird dann entschieden, ob es sich um Schreib-, Lese-, Lösch- und / oder Änderungsvorgänge handelt. Beispielsweise kann eine Dimension durch mehrdimensionale Ausdrücke spezifiziert werden, in die geschrieben werden soll und mit der REST Operation PUT angesprochen werden. Man beachte, dass die Schreiboperation im Internet schwierig direkt zu verwirklichen ist und der Hyperadapter 300 bei einer solchen Anwendung vorzugsweise weiter spezialisierte Mittel aufweist, die solche Operationen ermöglichen.

Anwendungsfall: Yourweb

Grundkonzept: Die Grundidee ist es, den Hyperadapter 300 zu nutzen, damit Benutzer im Internet Dimensionen markieren können. Desweiteren soll der Hyperadapter 300 es Benutzern ermöglichen, Inhalte zu ändern und / oder Dimensionen hinzuzufügen. Beispielsweise kann der Benutzer durch den Hyperadapter 300 einen oder mehrere Links in einer Internetseite hinzufügen, d.h. die Internetseite, durch erhält durch den Benutzer neue Links zu weiteren Ressourcen. Oder er kann einen Textabschnitt markieren und einen Kommentar zu diesem hinzufügen. Sobald der Benutzer die Seite wieder besucht, sieht er die Internetseite mit dem veränderten und bereicherten Inhalt. Dadurch, dass der Hyperadapter 300 dimensionsorientiert arbeitet, kann dabei die Dimension des Benutzers genutzt werden. Somit erhält der Benutzer seine eigene Art von Internet. Das Internet ist somit für den Benutzer eine Art editierbare Wissensbasis ähnlich Wikipedia, in dem er Änderungen durchführen kann. Beispielsweise könnten so Adressen markiert werden. Diese könnten einer Dimension Adresse zugeordnet werden oder auch der Dimension des Landes, aus dem die Adresse stammt. Oder es könnten Personen auf Bildern markiert werden.

Bisher ist es nur möglich, innerhalb vorgegebener Communities Personen auf Bildern zu markieren. Durch einen Hyperadapter 300 ist es möglich, Informationen über Bilder oder auch jegliche andere Inhalte überall hinzuzufügen. Ein weiteres wesentliches Unterscheidungsmerkmal zu bisherigen existierenden Ansätzen ist hierbei, dass die mehrdimensionalen Operationen des Hyperadapters 300 aufgrund der erzeugten Information (z.B. Dimensionsmarkierungen) benutzt werden können. Beispielsweise kann die vorher genannte Hyperadapter-Suchmaschine 300 damit benutzt werden. Dieses Grundkonzept ist in Fig. 22 dargestellt. Dabei werden aus den Mitteln und / oder Daten des Hyperadapters 300 zusammen mit der Datenbasis 305 eine Fusion gebildet, mit der ein Klient arbeiten kann.

Dimensionsmarkierungen: Die Funktionalität, Dimensionen zu markieren kann im Hyperadapter 300 beispielsweise durch einen Human-Detektor verwirklicht werden. Ein solcher Detektor kann eine oder mehrere Komponenten aufweisen, die auf einem Klienten ausgeführt werden, die mit den weiteren Komponenten des Hyperadapters 300 zusammenarbeiten. Diese Teile erlauben es auf dem Klienten, verschiedene Dimensionen zu markieren. Ein solches Markieren von Dimensionen kann beispielsweise über Tags/Stichworte geschehen. Als Beispiel könnte der Benutzer nach dem Markieren von Teilen eines Dokumentes die Möglichkeit bekommen, eine Dimension einzugeben. Eine weitere Möglichkeit wäre es, dass der Benutzer Personen und Gegenstände auf Bildern markieren kann. Das Markieren von Personen oder Gegenständen auf Bildern und die Verteilung über verschiedene Systeme, könnte dabei durch bereits bekannte Methoden geschehen.

Mehrdimensionale Schemata: Die aufgrund von Dimensionsmarkierungen erkannten Dimensionen können im Hyperadapter 300 in mehrdimensionale Schemen eingeordnet werden. Dabei besteht die Möglichkeit, dass der Benutzer spezifiziert, zu welchen Schemata eine aufgedeckte Dimension gehört. Eine Alternative hierzu ist es, weitere Mittel, die der Hyperadapter 300 bereit stellt, in Kombination oder als Alternative zu nutzen, um erkannte Dimensionen Schemata zuzuordnen.

Markierte Dimensionen: Informationen über markierte Dimensionen können für mehrdimensionale Abfragen 302 verwendet werden. Beispielsweise in der im obigen Anwendungsfall "Nutzung als Suchmaschine für das Internet, Intranet, Expertensuche, oder für die Suche auf weiteren technischen Geräten" gezeigten Suchmaschine. Somit ist es beispielsweise möglich, dass der Nutzer Dimensionen markiert und dass beim Nutzen der Suchmaschine Ergebnisse mit Dimensionen, die er selbst markiert hat, besonders bevorzugt behandelt werden. Desweiteren ist es durch menschlich markierte Dimensionen möglich, festzustellen, wie viele Menschen eine Dimension markiert haben. Durch die Anzahl der Menschen, die ein Fragment einer Dimension zugehörig betrachten, könnte eine Prozentzahl der Zugehörigkeit berechnet werden. In diese Prozentzahl der Zugehörigkeit könnten noch weitere Faktoren einfließen. Beispielsweise, wie oft ein Mensch, der eine Dimension markiert, mit anderen übereinstimmt. Somit könnten die von bestimmten Menschen markierten Dimensionen stärker in die Berechnung einfließen. Die berechnete Zugehörigkeitszahl könnte zudem als unscharfe Angabe verwendet werden.

Hinzufügen und / oder Ändern von Daten in Dimensionen: Das Schreiben und / oder Ändern von Daten in Dimensionen kann über eine Dimensionsschreibfunktionen des Hyperdapters 300 durchgeführt werden. Zum Beispiel kann der Nutzer einen ergänzenden Text hinzufügen. Dies würde bedeuten, er schreibt in die Dimension der Internetseite an einer bestimmten Stelle.

Hinzufügen von Dimensionen: Durch den Hyperadapter 300 ist es möglich, Dimensionen zu einem Dokument hinzuzufügen. Beispielsweise könnte die Dimension eines Kommentars hinzugefügt werden. Oder ein Benutzer kann einen bereits bestehenden Text mit einem Link auf eine weitere Website hinterlegen. Man beachte hierbei, dass auch der Benutzer, der in die Dimension schreibt, als Dimension aufgefasst werden kann. Das bedeutet, dass in die Dimension der Internetseite mit der Dimension des Benutzers geschrieben wird. Selbiges könnte mit weiteren Dimensionen durchgeführt werden. Zum Beispiel könnte die Dimension des Datums eines Schreibvorgangs genutzt werden.

Speicher-Verwendung: Optimalerweise kann der im Hyperadapter 300 vorhandene Speicher und / oder zugehörige Funktionen für das Schreiben in Dimensionen verwendet werden. Dies kann beispielsweise dazu genutzt werden, dass ein Benutzer Daten einer Internetseite ändert und / oder Dimensionen hinzufügt. Der Besitzer des Dokumentes der Datenbasis kann diese Informationen abrufen und darüber entscheiden, ob sie übernommen werden sollen. Zusätzlich können die Informationen aus diesem Speicher und / oder den Dimensionsdaten 304 dazu genutzt werden, um diese bei Zugriffen zu verwenden.

Anreichern von Daten: Der Hyperadapter 300 kann auch dazu verwendet werden, Daten aus einer Datenbasis 305 beim Klienten aufgrund der Dimensionsdaten 304 und / oder Daten im Speicher anzureichern und / oder zu verändern. Beispielsweise können so Adressen, die ursprünglich nicht durch ein Microformat gekennzeichnet sind, aber durch Detektoren erkannt wurden, durch entsprechende Anreicherungsprozesse im Klienten durch ein solches Format annotiert sein. Oder es können Hyperlinks eingefugt werden, die von einem Nutzer hinzugefügt wurden. Ein weiteres Beispiel sind von Benutzern hinzugefügte Kommentare, die dann im Klienten des Benutzers, bei dem erneuten Besuchen einer Website, verfügbar sind. Der Benutzer legt fest was verändert werden kann. Bei den Vorgängen, wie dem Schreiben in Dimensionen, kann der Benutzer festlegen, wer Zugriff auf dessen Informationen haben kann. Dadurch ist es möglich, dass der Benutzer auch seine Daten anderen Benutzern zur Verfügung stellt. Eine solche Funktionalität kann durch das Sicherheitssystem des Hyperadapters 300 realisiert werden.

Technik: Als Technik zur Realisierung einer solchen Version des Hyperadapters 300 können beispielsweise folgende Technologien genutzt werden: Java, Javascript, Javascript das durch den Verweise auf eine URL eingebunden ist, Flash, .Net, Silverlight, normales Plugin, beispielsweise in C++, und / oder weitere aus bekannte Mittel. Dabei können diese auch in Kombination genutzt werden.

Anwendbarkeit in weiteren Einsatzgebieten: Das hier vorgestellte Beispiel ist natürlich auch auf andere Bereiche übertragbar, in denen der Hyperadapter 300 eingesetzt wird.

Verwendung des Hyperadapters für Grass-Root Dimensional Tagging Sorting/Routing

Ein weiteres Einsatzgebiet des Hyperadapters 300 ist es, Massenintelligenz zu kombinieren. Beispielsweise können dadurch Informationen wie Nachrichtenmeldungen (News) an interessierte Benutzer "geroutet" werden.

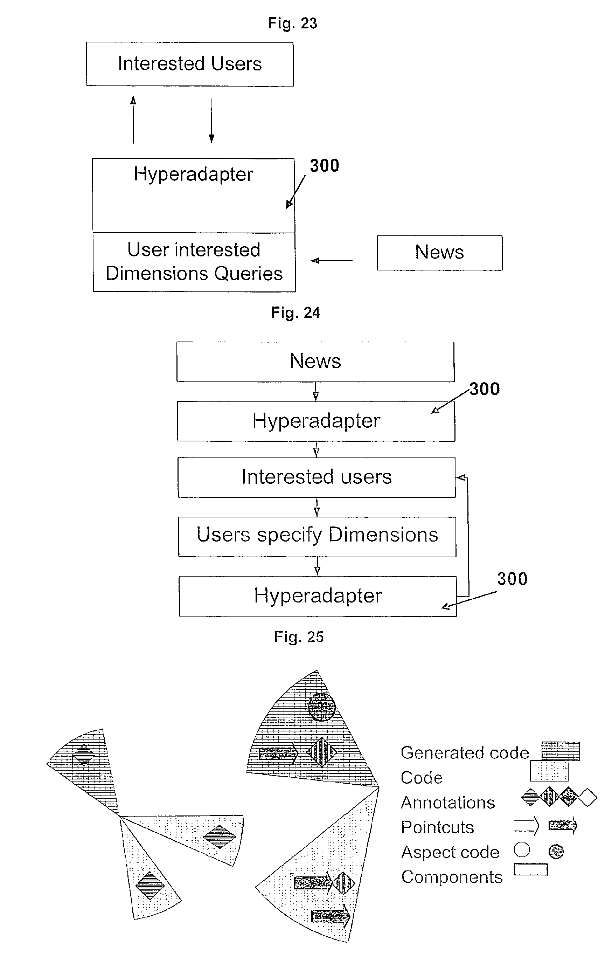

Fig. 23 zeigt hierfür ein Beispiel. Benutzer haben im Hyperadapter 300 eine oder mehrere Abfragen 302 hinterlegt, an welcher Dimension oder an welchen Dimensionen sie interessiert sind. Der Hyperadapter 300 bekommt eine Newsmeldung zugeschickt und / oder deckt eine solche auf, beispielsweise durch einen Crawler. Dabei kann der Hyperadapter 300 noch weitere Dimensionen der Meldung aufdecken und / oder sie nur als der Dimension "Newsmeldung" zugehörig klassifizieren. Aufgrund der hinterlegten Abfragen 302 wird bestimmt, welche Benutzer an der Newsmeldung Interesse haben. Diese Benutzer bekommen die Meldung zugestellt. Dabei kann das Zustellen eine Push-Sendung sein, oder auch durch den Benutzer abgerufen werden (Pull), beispielsweise auf das Handy und / oder den Computer der Benutzer. Hierfür können bekannte Mittel wie E-Mail, SMS oder weitere hierin erläuterte Mittel (z.B. Ausgabekanäle) genutzt werden. Hierbei besteht die Möglichkeit, dass ein Benutzer bei der Abfrage 302 hinterlegen kann, auf welchem Ausgabekanal er das Ergebnis 301 seiner Abfrage zugestellt bekommen will. Die Benutzer können dabei die Newsmeldung lesen und sie Dimensionen zuordnen. Diese Zuordnung kann an den Hyperadapter 300 rückgemeldet werden. Aufgrund der neuen Dimensionen kann es sein, dass neue Benutzer die Newsmeldung erhalten. Dies kann dazu führen, dass diese wiederum neue Dimensionen aufdecken und so die Newsmeldung Stück für Stück klassifiziert und verteilt wird.

Fig. 24 zeigt den hierfür entsprechenden Prozess. Durch dieses Verfahren sei exemplarisch gezeigt, wie Detektoren (z.B. Human-Detektoren) dazu beitragen können, um Informationen zu klassifizieren und wie verschiedene Ausgabekanäle genutzt werden können.

Eine weitere Möglichkeit, die sich aus diesem Verfahren ergibt ist, dass durch die Anzahl, wie viele Menschen eine Dimension markieren, eine unscharfe Bewertung erzeugt werden kann. Diese kann dazu genutzt werden, dass Benutzer in ihren hinterlegten Abfragen angeben, wie viele Benutzer eine Dimension erkannt haben müssen oder wie hoch die unscharfe Angabe einer Dimension sein muss, z.B. muss eine Newsmeldung zu 80% der Dimension 1 zugeordnet sein, bevor sie zugestellt wird, oder eine Newsmeldung muss von 250 Personen zu der Dimension 1 zugeordnet worden sein, bevor sie zugestellt wird. Dabei ist es natürlich denkbar, weitere komplexere Bedingungen durch die weiteren Mittel des Hyperadapters 300 zu formulieren.

In diesem Kontext könnten auch Detektoren oder Inferenzregeln genutzt werden. Beispielsweise könnten Detektoren aufgrund von erkannten Dimensionen neue Dimensionen aufdecken. Oder es existieren Inferenzregeln als Detektor, wenn genügend Benutzer eine Newsmeldung einer Dimension als zugehörig betrachten, dass diese auch zu einer weiteren Dimension gehört.

In dieser Anwendung ist es natürlich denkbar, auch weitere Fähigkeiten des Hyperadapters 300 zu nutzen. Beispielsweise könnten Benutzer die erhaltene Newsmeldung verändern oder einen Kommentar hinzufügen. Dies könnte z.B. dazu führen, dass im Hyperadapter 300 Abfragen 302 hinterlegt sind, die nur von einem bestimmten Benutzer veränderte Newsmeldungen erhalten möchten und somit die veränderte Newsmeldung weiter geroutet wird.

Des weiteren ist es in diesem Kontext denkbar, dass aufgrund von erkannten Dimensionen, z.B. durch Menschen Wahrscheinlichkeitswerte von Dimensionszugehörigkeiten erkannt werden, z.B. wenn etwas in Dimension 3 ist, so ist es auch zu 80% in Dimension 4. Dies könnte dazu genutzt werden, Detektoren zu verbessern und / oder zu trainieren.

Nutzung dieses Verfahrens um mehrdimensionale Schemata zu erstellen: Dieses Verfahren kann auch dazu genutzt werden, um Unterdimensionen zu erkennen. Beispielsweise erhalten Benutzer die Newsmeldung für bestimmte Dimensionen. Aufgrund dessen fügen sie der Newsmeldung neue Dimensionen hinzu. Aufgrund dieser Dimensionen erhalten neue Benutzer die Newsmeldung und fügen wiederum neue Dimensionen hinzu.

Dies könnte dazu genutzt werden, neu entdeckte Dimensionen von Benutzern als Unterdimensionen zu ihrer Abfrage zu betrachten. Dadurch könnten mehrdimensionale Schemata erzeugt werden. Desweiteren könnten auf diese Daten Analysen angewendet werden, die noch weitere Faktoren in Betracht ziehen. Auch aufgrund dieser Analysen könnten dann Schemata erstellt werden.

Aktionen aufgrund von Abfragen: Aufgrund hinterlegter Abfragen 302 können im Hyperadapter 300 auch weitere Aktionen ausgelöst werden, beispielsweise das Ausführen von externen Programmen. Eine mit einer Aktion hinterlegte Abfrage könnte beispielsweise aussagen, wenn eine Newsmeldung der Dimension "Terrorismus" zugeordnet wird, ein Programm oder System aufgerufen wird, das alle Aktien verkauft.

Anwendbarkeit bei weiteren Einsatzgebieten: Das hier vorgestellte Beispiel ist natürlich auf andere Bereiche als News übertragbar und erweiterbar. Beispielsweise auch auf neu erstellte Internetseiten, Bilder, Videos, Quellcode und / oder jegliche andere computerverarbeitbare Informationen. Eine Erweiterung wäre es beispielsweise, dass die Abfragen des Benutzers ändern, je nachdem welche Dimensionen er markiert/erkennt, und wie er die Information bewertet. Zum Beispiel könnten Benutzer Videos, bei deren Anschauen Dimensionen zuordnen. Nachdem ein Video bei einem Benutzer zu Ende gelaufen ist oder der Benutzer es abgebrochen hat, wird ihm, aufgrund der Dimensionen, die er beim Schauen spezifiziert hat, seinen persönlichen Präferenzen, seiner Historie, den Daten weiterer Benutzer und / oder aufgrund dessen ob das Video bis zu Ende betrachtet wurde, ein neues Video zur Verfügung gestellt. Hat der Benutzer beispielsweise das Video abgebrochen, ist davon auszugehen, dass verschiedene Dimensionen ihn nicht mehr interessieren und es könnte durch das Zufallsprinzip, vorzugsweise kombiniert mit den persönlichen Präferenzen und / oder den Daten weiterer Benutzer, ein neues Video gewählt werden. Wenn dieses zu Ende geschaut wurde, kann ein Video mit ähnlichen Dimensionen bestimmt werden. Somit könnte eine Art interaktives Fernsehprogramm durch den Hyperadapter 300 geschaffen lassen, dessen Inhalte immer genauer spezifiziert werden und bei dem der Benutzer nur Inhalte sieht, die ihm gefallen.

Verwendung des Hyperadapters zur Quelltextentwicklung

Besonders bevorzugt kann der Hyperadapter 300 zur Softwareentwicklung verwendet werden. Hierbei ist er für alle Programmiersprachen einsetzbar, z.B. Java, AspectJ, JRuby, Groovy, Visual Basic, C#, ABAP, C++, Phyton, PHP, Javascript usw.. Grundsätzlich kann der Hyperadapter 300 auch bei der Softwareentwicklung mit domänenspezifischen Sprachen genutzt werden. Der Hyperadapter 300 kann in der Softwareentwicklung in unterschiedlichen Bereichen eingesetzt werden, z.B. in der Softwareentwicklung für Mobiltelefone und / oder andere mobile mikroprozessorgesteuerte Geräte wie Notebooks. Hierbei ist es besonders nützlich, den Energieverbrauch und die Temperaturentwicklung messen zu können (siehe oben). Das Ermitteln des Energieverbrauchs kann desweiteren in der Automatisierungstechnik genutzt werden. Hierbei kann beispielsweise festgestellt werden, wie viel Energie eine Steuerung beim Ausführen von oft durchgeführten Aktionen verbraucht. Ein weiteres Einsatzgebiet für den Hyperadapter 300 ist die Automobilindustrie. Beispielsweise besitzen heutzutage Autos Mikroprozessoren, die verschiedene Funktionen steuern. Durch speziell dafür optimierte Detektoren könnten die Rahmenbedingungen, die Software beim Ausführen in einem Automobil erzeugt, gemessen werden. Somit wäre es möglich, die Software unter der Nutzung des Hyperadapters 300 unter völlig neuartigen Gesichtspunkten zu untersuchen. Ein weiteres Beispiel, wofür der Hyperadapter 300 genutzt werden kann, ist die Softwareentwicklung von betriebswirtschaftlichen Anwendungen. Durch den Hyperadapter 300 kann beispielsweise geprüft werden ob alle Funktionen, die von außen zugänglich sind, auch gesichert sind.

Beispiele für Abfragen, die ein Hyperadapter durchführen kann

Im Folgenden werden Fähigkeiten und Abfragen, die sich durch die Funktionen des Hyperadapters 300 im Hinblick auf Dokumente und / oder SEF ergeben, erläutert. Besonders bevorzugt weist der Hyperadapter Optimierungen auf die es ermöglichen, Abfragen effizienter zu bearbeiten als dies in den nachfolgenden vereinfachten Erläuterungen der Fall ist.

Berechnen einer Modularitätskennzahl: Eine Modularitätskennzahl kann beispielsweise dadurch berechnet werden, dass die Anzahl der Dimensionen eines Dokumentes und / oder eines SEF gemessen wird und das Verhältnis zu den gesamten, beispielsweise in einem Dice vorkommenden Dimensionen berechnet wird. Beispielsweise könnte ein solcher Dice ein komplettes Softwaresystem sein. Es ist hierbei auch denkbar, die Modularität eines Softwaresystems zu messen. Beispielsweise könnte die Modularität von allen Klassen und Interfaces berechnet werden. Diese Kennzahl aller Klassen könnte zusammengezählt und durch die Anzahl der Klassen und Interfaces geteilt werden. Somit würde dieser Mittelwert aussagen, wie modular ein Softwaresystem im Schnitt ist.

Wie hoch ist die Qualität der Klassen, die auf die Kamera des Mobiltelefons zugreifen? Durch Detektoren würden sich die SEF aufdecken lassen, die auf die Kamera zugreifen, beispielsweise durch Bibliotheksnutzung. Desweiteren würden sich alle Klassen bestimmen lassen. Nun könnte eine Vereinigungsmenge aus den Klassen und den Zugreifern gebildet werden. Die Qualität könnte über Metriken bekannt und SEF zugeordnet sein. Somit könnten alle Metriken für die entsprechenden SEF zusammengerechnet und ein Mittelwert gebildet werden.

Welche SEF, die von vielen anderen referenziert werden, haben Fehler? Durch eine Metrik wäre die Dimension, wie häufig SEF referenziert werden bestimmbar. Durch Fuzzy Logic wäre bestimmbar, ab wann die Häufigkeit "vielen" entspricht. Durch die Testergebnisse wären die Fehlerhaften SEF bestimmbar, und aus diesen zwei Ergebnissen würde sich eine Vereinigungsmenge bilden lassen.

Vereinigungsmengen von Suchergebnissen: Dies ist einfach möglich, da im Hyperadapter 300 verschiedene Suchen über Mengenoperationen auf deren Ergebnissen verknüpft werden können.

Welche Fragmente sind beim durchschnittlichen Benutzen am stärksten für die Temperaturentwicklung verantwortlich? Durch den Detektor für die Temperaturentwicklung würden sich die SEF bestimmen lassen, die besonders hohe Veränderungen der Temperatur verursachen. Durch den Runtimedetektor würde sich die Aufrufshäufigkeit und somit eine Reihenfolge der aufgerufenen SEF bestimmen lassen. Durch die Berechnung von Aufrufhäufigkeit*Temperaturveränderung würde sich ein Schätzwert für die Verantwortlichkeit der Temperaturentwicklung ergeben. Dies könnte als Reihenfolge für die Temperaturentwicklung dienen. Mit Fuzzy Logic würde sich hierbei noch klassifizieren lassen, ab wann der Wert "stark verantwortlich" ist. Eben selbiges Vorgehen würde sich analog für eine Maschine anwenden lassen, um deren Temperaturentwicklung zu berechnen.

Energieverbrauch: Das zuvor beschriebene Beispiel kann, sofern Temperatur durch Strom und / oder Energieaufnahme ersetzt wird, analog angewendet werden. Man beachte hierbei, dass durch die Multidimensionalität noch weitere Faktoren für solche Berechungen hinzugezogen werden können. Beispielsweise unterscheiden sich die Prozessoren typischerweise in der Energieaufnahme. Dies könnte bei der Berechung berücksichtigt werden.

Nutzt ein Programm ein Computernetzwerk? Durch Detektoren für Netzwerksbibliotheken könnte festgestellt werden, ob bestimmte Funktionen, die den Zugriff auslösen, aufgerufen werden.

Welcher Autor hat den Quellcode geschrieben, der am meisten von anderen Komponenten genutzt wird? Durch den Autorendetektor können alle SEF bestimmt werden, die von verschiedenen Autoren stammen. Aufgrund eines Komponentendetektors würden sich die Komponenten identifizieren lassen. Dadurch könnte der Code eines jeden Autors auf die Aufrufe der verschiedenen Komponenten überprüft werden. Dies kann zur Laufzeit geschehen und / oder durch Detektoren und / oder Metriken schon bekannt sein. Aufgrund der Anzahl würde sich ein Ranking der Autoren ergeben, und derjenige mit dem höchsten Ranking wäre das Resultat 301.

Wie hat sich eine Metrik gegenüber einer anderen über eine gewisse Zeit hinweg Entwickelt? Da die Metriken durch den Hyperadapter 300 mit der Versionsdimension verknüpft sein können, kann somit einfach eine solche Analyse durchgeführt werden.

Welche weiteren Sourcecodefragmente sind indirekt von Fehlern betroffen (Aufrufe des fehlerhaften Sourcecodefragmentes)? Durch Testergebnisse können fehlerhafte SEF identifiziert werden. Diese Dimension kann als Eingabe für eine weitere Analyse dienen, die aufrufende SEF identifiziert.

Identifikation des indirekt betroffenen Quelltext eines Aspektes, wenn dessen Test fehlschlägt. Durch Tests kann der defekte Aspekt aufgedeckt werden. Durch den Aspektdetektor können dessen durch Advices betroffene SEF identifiziert werden.

Welcher Teil eines Programmes ist über einen Webserver erreichbar? Aufgrund von Bibliotheks-, Frameworks- und / oder Komponentendetektoren kann diese Dimension aufgedeckt werden.

Welcher Teil eines Programmes ist über einen Webserver erreichbar und wurde von Autor XY geschrieben? Ähnlich wie zuvor, jedoch wird aufgrund der Ergebnismenge eine Vereinigungsmenge mit dem bestimmten Autor gebildet.

Welche Teile eines Programmes nutzen veraltete Bibliotheken? Aufgrund dessen, das die veralteten Bibliotheken bekannt sind, können deren Aufrufer bestimmt werden.

Wie viel Code eines Programmes ist von Bibliothek XY abhängig? Dies kann zum Beispiel darüber berechnet werden, dass zuerst die Anzahl der Quelltextzeilen bestimmt wird, die Teile der Bibliothek nutzen. Aufgrund der Metrik der Quelltextzeilen des gesamten Programmes können nun diese zwei Angaben ins Verhältnis gesetzt werden. Man beachte hierbei, dass für solche Berechnungen auch weitere Informationen für einen aussagekräftigeren Wert einfließen können.

Welche SEF gehören zu einer Komponente? Durch Komponentendetektoren lassen sich zugehörige SEF bestimmen.

Eine Klasse mit dem Namen xx, in der eine Funktion mit dem Namen YYY vorkommt: Dies kann dadurch bestimmt werden, dass die Dimension der Klassen mit dem Namen xx mit der Dimension der Funktionen, die den Namen YYY, geschnitten wird.

Vereinigungsmengen von Inhalten von Aufgaben: Durch die mehrdimensionalen Operationen und / oder durch Fuzzy Logic lassen sich somit alle komplexen Vereinigungsmengen bilden, die vorstellbar sind.

Blog eines Autors, dessen Standort in einem Umkreis von 100 Km von Stuttgart liegt: Aufgrund eines Blog-Schemas können alle Autoren von Blogs bestimmt werden. Aus deren Dimension "Wohnort" kann dann bestimmt werden, wer näher als 100 km zu der Stadt Stuttgart lebt. Von diesen Autoren sind somit die Blogs bestimmbar.

Produkthändler im Umkreis von 10 km Stuttgarts, die Produkt XY verkaufen, das nur 10% teurer ist, als das billigste Web Angebot: Der erste Teil ist wie zuvor bestimmbar und liefert Erg1. Auf grund einer Frage, nach dem Produkt, kann dessen günstigster Preis bestimmt werden, zu welchem 10% hinzugerechnet wird (Erg2). Aufgrund eines Schemas kann die Ergebnismenge Erg1 mit den Händlern geschnitten werden, die das Produkt verkaufen, das weniger oder gleich teuer als Erg2 ist.

Bilder auf denen die Person XXX und die Person YYY zu sehen sind: Aufgrund von Detektoren und / oder Tags können alle Bilder, auf denen Person XXX ist bestimmt werden. Diese Ergebnismenge wird mit der Ergebnismenge von Bildern, auf denen Person YYY ist, geschnitten.

Dies lässt sich ebenso auf Fragen wie: "alle Seiten, die von 2 verschiedenen Internetseiten verlinkt wurden" und "alle Blogposts die durch Tag 1 und Tag 2 markiert sind", anwenden.

Person Tim Frey, dessen Nachbar Person xy ist: Bestimmen der Adressen aller Personen mit dem Namen Tim Frey. Aufgrund der Ergebnismenge bestimmen aller Nachbarn, aller Tim Freys die den Namen xy tragen. Durch eine Assoziation, der beiden Resultate, lassen sich somit alle Tim Freys mit dem Nachbarn xy bestimmen.

Alle Videos die von Autor XY sind, die den Kommentar XXXXX enthalten: Bestimmen aller Videos von Autor XY. Prüfen der Kommentare alle Videos der Ergebnismenge auf XXXXX.

Data Mining: Aufgrund der mehrdimensionalen Schemata lassen sich sämtliche Beziehungen, die in den Schemata beschrieben werden und / oder durch Detektoren aufgedeckt werden können, durch Data Mining untersuchen. Zum Beispiel: Taskassoziierte Elemente von verschiedenen Tasks und / oder Aspekten und / oder die Anzahl der Bugs in einem System.

Beispiel der Verwendung eines Hyperadapters in einer IDE zur Softwareentwicklung

Im Folgenden werden einzelne Operationen des Hyperadapters 300 anhand des exemplarischen Beispiels eines bereits oben erläuterten Softwaresystems aufgezeigt. Dabei wird oftmals der Begriff "betrachten" verwendet. Betrachten hat in diesem Kontext dieselbe Bedeutung wie "ausgewählt" oder "selektiert". Der Ausdruck "betrachten" wurde im Bezug auf den später vorgestellten Prototyp gewählt, weil in diesem das Resultat 301 gefiltert werden kann.

Slice: Die Slice-Operation ermöglicht, ein Softwaresystem nur von einem Blickwinkel aus zu betrachten. Dabei werden nur die anderen Artefakte betrachtet, die direkt mit dieser Dimension verknüpft sind. In Fig. 25 wird dies dargestellt. Dabei zeigt der erste (in Fig. 25 linke) Ausschnitt eines Softwaresystems einen Slice für eine spezielle Annotation. Die verkleinerte Codeansicht soll zeigen, dass nur noch der Code mit dieser Annotation betrachtet wird. Im zweiten (rechten) Ausschnitt wurde nach einem speziellen Aspekt gefiltert. Nur noch dessen Quellcode und der Quellcode, auf den die Pointcuts des Aspektes zutreffen, wird angezeigt. Da Pointcuts auch durch Annotations definiert werden können, ist natürlich die zutreffende Annotation auch noch vorhanden.

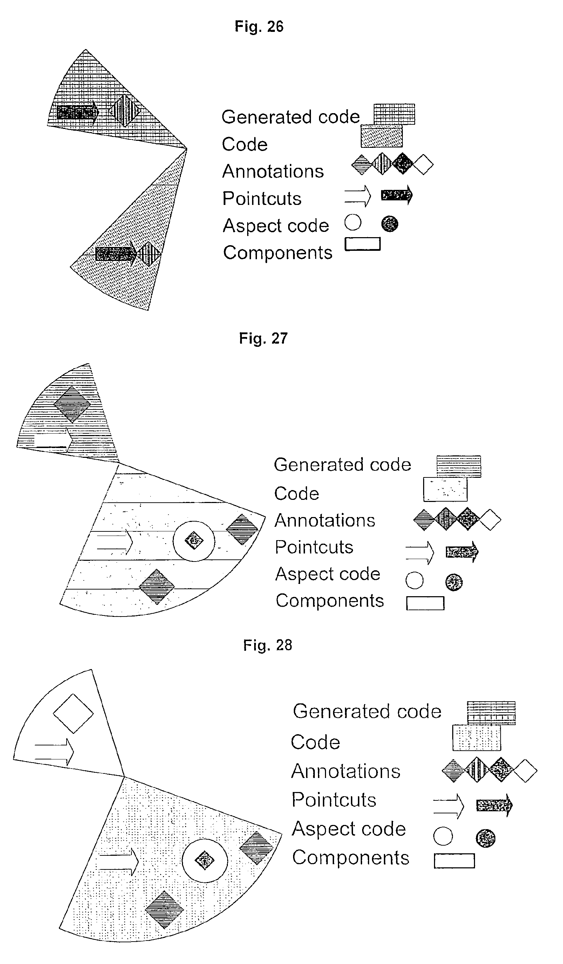

Slice mit einem weiteren Slice durch ein Hyperand verknüpft: Das verknüpfen von zwei Slices durch ein AND wird in Fig. 26 exemplarisch gezeigt. AND ist hierbei der logische AND-Operator. Damit werden Artefakte bestimmt, die zu den zwei verschiedenen Dimensionen gehören. Ein Hyperand kann somit dazu genutzt werden, um Slices zu kombinieren. Dies hilft, einen Slice genauer zu spezifizieren. Nur noch Quellcode, der in zwei verschiedenen Dimensionen ist, wird betrachtet. Dabei enthält der Quellcode in diesem Beispiel einen Pointcut und eine spezielle Annotation.

Dice: Dice ist die Kombination von mehreren Slices. Dies bedeutet, dass das Softwaresystem aus verschiedenen Perspektiven gleichzeitig betrachtet wird. In Fig. 27 wird ein solcher Dice des Systems angezeigt. Nur noch Code, der mit dem Aspekt (in Fig. 27 durch den Kreis mit Raute dargestellt) und der Annotation (die Raute) zu tun hat, wird betrachtet.

Hypercut: Ein Hypercut ist die Operation, eine Dimension bewusst auszuschließen. Beispielsweise könnte man somit ein komplettes System betrachten und nur die die Dimension "Persistenz" ausschließen. Fig. 28 zeigt einen solchen Schnitt, auf dem zuvor vorgestellten Dice (vgl. Fig. 27). Die Dimension des generierten Codes wurde ausgeschlossen (siehe den weißen Teilbereich oben links in Fig. 28). Somit wird nichts mehr betrachtet, was damit zu tun hat. Ein Hypercut kann somit dazu benutzt werden, eine bessere Übersichtlichkeit zu ermöglichen, sofern ein Dice zu groß ist.

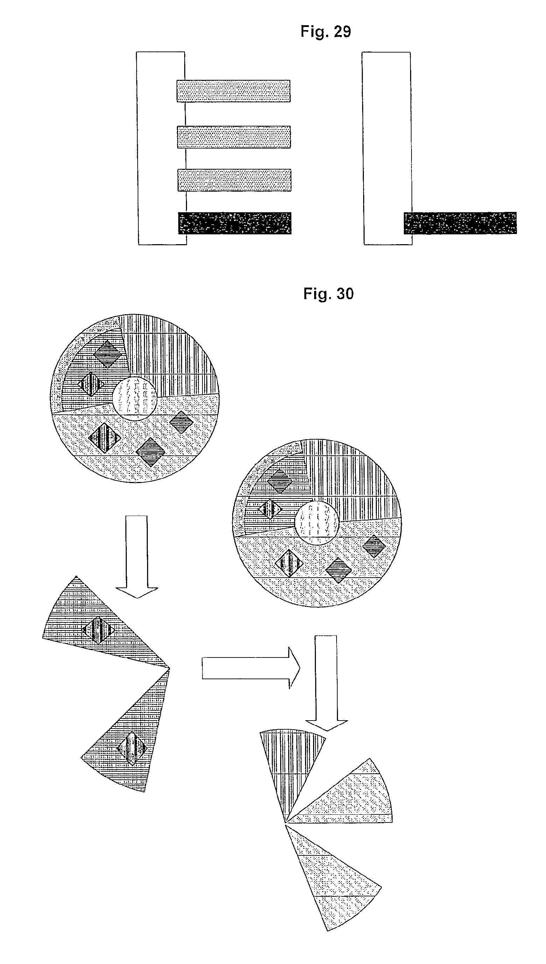

Durch die Hypercut-Operation werden noch weitere Möglichkeiten geschaffen: Das folgende Beispiel betrifft ein System mit einem Service Layer. Eine abstrakte Darstellung zeigt Fig. 29. Dabei ist der Service Layer durch die beiden vertikalen Flächen und die Methoden, die er zur Verfügung stellt durch die hellen und dunklen horizontalen Flächen dargestellt. Die dunkel eingezeichneten Methoden sind ungesichert, die hell gezeichneten gesichert. Links ist das System ohne Hypercut dargestellt, rechts mit Hypercut.

Nun soll festgestellt werden, welche Methoden im Service Layer verfügbar sind. Dazu wird ein Hyper-Slice gebildet. Danach soll analysiert werden, welche Methoden ungesichert sind. Durch einen Hypercut können alle gesicherten Methoden bestimmt werden. Somit kann sofort die unsichere Methode gefunden werden.

Rekursive Operationen: Eine Beispiel für das "rekursive Abfragen" ist das Nutzen einer oder mehrerer Ergebnismengen einer Operation für eine weitere Operation. Dabei dient diese Ergebnismenge selbst als Dimension. Dadurch können beispielsweise Konsumenten der Ergebnismenge bestimmt werden. Zur besseren Verständlichkeit ein Beispiel: Es sollen alle Konsumenten von veralteten, mit "@Deprecated" gekennzeichneten/annotierten Elementen, bestimmt werden. Daher werden zuerst alle veralteten Elemente bestimmt. Danach können alle Konsumenten dieser Elemente bestimmt werden. Dadurch ist die letztendliche Ergebnismenge jedes Artefakt, das diese als veraltet gekennzeichneten Elemente benutzt. Grafisch veranschaulicht ist dies in Fig. 30. Eine Hyperkaskade ist ein Synonym für eine rekursive Operation, die im Hyperadapter 300 eingesetzt wird.

Anwendbarkeit auf Modelle und deren Hierarchien: Bisher wurden nur Fälle mit Quellcode aufgezeigt. Jedoch ist der Hyperadapter 300 auch auf Modelle und / oder DSLs anwendbar. Sogar für den Fall, in welchem Modelle auf Modelle zugreifen. Dies ist ebenso lösbar, indem zuerst die DSL, auf die zugegriffen wird, als Code behandelt wird. Hierzu ein Beispiel: Das Springframework spezifiziert durch eine DSL Spring Beans. Darin wird angegeben, welche Java Klassen als Bean verfügbar sind. Spring Webflow definiert einen Ablauf. Dabei wird angegeben, welche Funktionen von einer Spring Bean aufgerufen werden. Zum Beispiel:

Modell A ist eine Definition einer Menge von Spring Beans: A1, A2, A3. Wobei die zugehörigen Klassen A1 (C1), A2 (C2), A3 (C3) sind. Jede der Klassen besitzt die Funktion F. Modell B ist eine Definition eines Flows, der auf die Funktion F von A2 zugreift. Zuerst wird A als Sourcecode behandelt. Dadurch kann die entsprechende Bean (A2) identifiziert werden. Nach diesem Vorgehen kann die entsprechende Klasse identifiziert werden.

Prototypische Implementierung

Im Folgenden wird ein Prototyp erläutert, in welchem ein Hyperadapter 300 in einer grafischen Entwicklungsumgebung (IDE) eingesetzt wird. Dieses Beispiel ist in der Eclipse IDE realisiert. Jedoch kann ein solche oder auch umfangreichere Umsetzung beispielsweise auch in anderen IDEs wie Visual Studio, Netbeans oder weiteren IDEs umgesetzt werden. Aufgrund der prototypischen Umsetzung werden nur einige wenige Detektoren genutzt, und es werden nur einige ausgewählte der bisher beschreiben Funktionalitäten gezeigt. Desweiteren ist nur ein mehrdimensionales Schema vorhanden, das als imperatives Konstrukt im Quellcode der Anwendung umgesetzt wurde. Die Präsentation des Resultates 301 wird durch Filter unterstützt. Die Dimensionen, die gewählt werden können, sind in dem Prototyp als "Concerns" benannt.

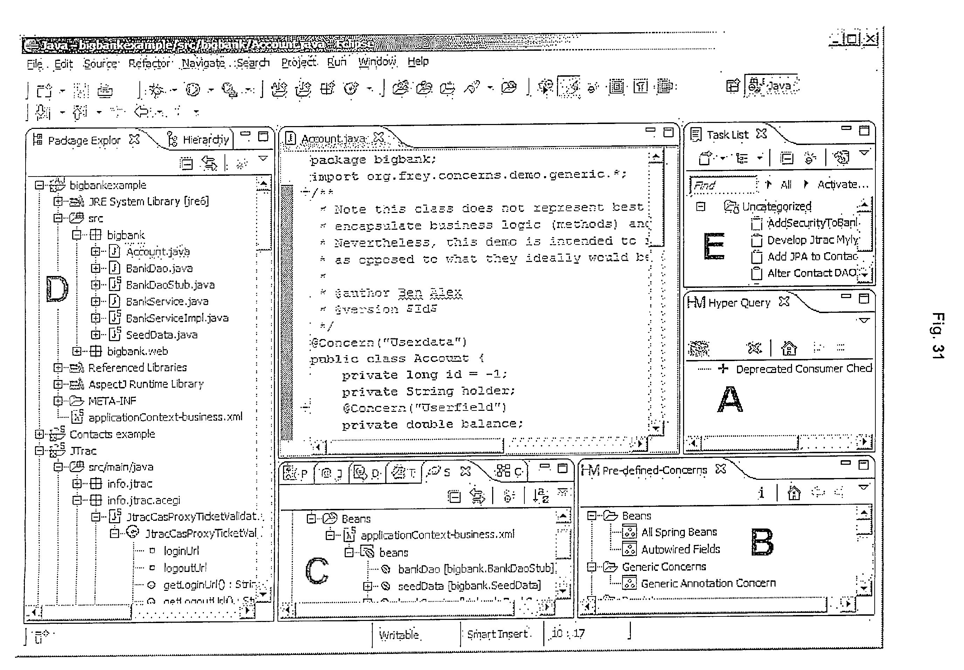

Der Prototyp besteht aus zwei neuen Views für die Eclipse IDE. Zu sehen ist ein Screenshot in Fig. 31 ("Hyper Modelling Plugin Views"). Dabei stellt ein View (vgl. den Bereich "A" in Fig. 31) den Abfrage-Designer zur Verfügung.

Dieser stellt eine Umsetzung des Zugriffsdokumenterstellers dar, mit dem Zugriffsdokumente 302 erzeugt werden können. Dieser Prototyp unterstützt nur den Zugriff der Abfrage von Daten. Daher wird im weiteren Verlauf auch nur noch vom Abfragedokument 302 und nicht mehr vom Zugriffsdokument 302 gesprochen. Dabei werden alle Elemente, die durch den Hyperadapter 300 bestimmt werden sollen, per drag-and-drop (DND) in diesen View (A) verschoben. Nach dem Erstellen einer Abfrage 302 kann diese ausgeführt werden (siehe das Blitz-Symbol im Bereich "A" von Fig. 31). Dabei führt der Hyperadapter 300 intern die Berechung der Ergebnismenge durch.

Nach dem Ausführen ist es möglich, den Package Explorer nach dem Ergebnis zu filtern. Der View "A" ermöglicht es hierfür, einen Filter für die Ergebnismenge einer Abfrage 302 zu aktivieren (buntes Symbol in Fig. 31). Da der Prototyp über keine weitere Darstellung des Resultates 301 verfügt, sind in den im Folgenden erläuterten Figuren daher immer die gefilterten Elemente aufgrund eines Resultates 301 zu sehen.

Der zweite View "B" (vgl. Fig. 31) dient dazu, Dimensionen zur Verfügung zu stellen. Diese sind in Kategorien unterteilt. Sofern eine Kategorie verschoben wird, werden alle darin enthaltenen Dimensionen der Abfrage 302 hinzugefügt. Eine solche Kategorie kann somit als Überdimension für verschiedene Unterdimensionen verstanden werden. Die weiteren Views "C", "D" und "E" dienen dazu, weitere Dimensionen für die Abfrage 302 hinzufügen zu können. Dabei können verschiedene Elemente von diesen Views zur Abfrage 302 per drag-and-drop hinzugefügt werden.

View "C" zeigt dabei den Spring Explorer an, der Spring Beans anzeigt. Spring Beans sind einzelne Java Klassen, die einem Komponentenmodell folgen. Nähere Informationen finden sich in "Spring Framework Dokumentation" (http://www.springsource.org/documentation). View "D" zeigt einen View, in dem Javaelemente verschiedener Art angezeigt werden, beispielsweise Pakete, Klassen und / oder Aspekte. View "E" zeigt Task-Inhalte von einem Mylyn-Plugin. Mylyn ermöglicht es, Aufgaben zu definieren und legt für die Elemente eine Interessensbewertung fest.

Alle einzelnen Dimensionen, die zu der Abfrage 302 hinzugefügt wurden, lassen sich durch einen Doppelklick in eine negierte Operation verwandeln (Hypercut). Somit wird der entsprechende Slice ausgeschlossen (siehe oben). Dabei werden Elemente, die Im Hypercut-Modus sind, in der grafischen Oberfläche durch ein Minus gekennzeichnet. Der Prototyp unterstützt dabei Dimensionen aus verschiedenen Bereichen, die aufgespürt und bei einer Abfrage 302 gewählt werden können: Verschiedene Annotationen, Spring Beans, Namenskonventionen, Aspekte, Javaelemente, Taskinhalte und Compilerausgaben, Nutzung von Frameworkklassen. Der Prototyp ermöglicht es dabei, einzelne Dimensionen durch weitere Parameter genauer zu spezifizieren. Beispielsweise die Parameter einer Annotation. Dies hat den Grund, dass oftmals Slices aufgrund von genaueren Angaben bestimmt werden sollen.

Interne Funktionsweise: Intern ist die Funktionsweise des Prototyps, dass er keine Dimensionsdaten besitzt, sondern Detektoren direkt auf der Datenbasis 305 ausführt, um Dimensionen auf zu decken. Der Zugriffsauswerter führt hierbei, die in der Anfrage geforderten Detektoren aus und berechnet daraus das Resultat.

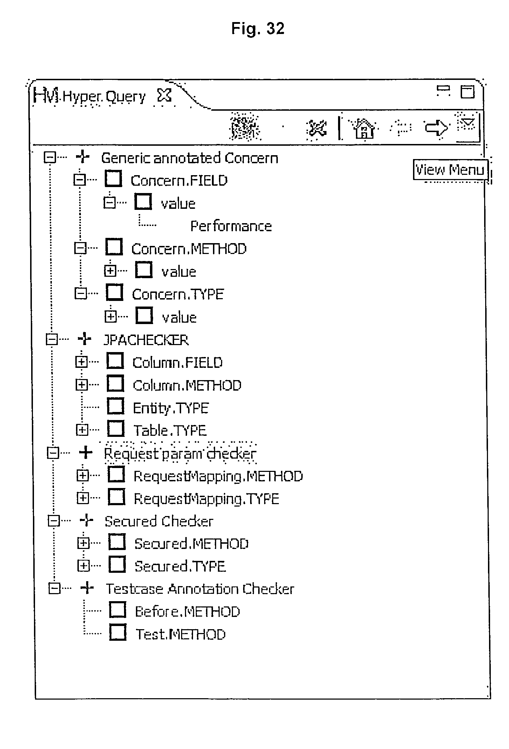

DemoProjekte in den Screenshots: In den dargestellten Screenshots in den Fig. 31-43 sind Demoprojekte vorhanden. Damit dies besser verständlich ist, werden die Demoprojekte zunächst beschrieben:

Bigbankexample: Dieses Projekt ist ein Beispiel von Spring Security. Dabei sind einzelne Methoden durch die "@Secured" Annotation von Spring Security gesichert. Die Schnittstelle zum Web wird in der Anwendung dadurch geschaffen, dass die entsprechenden Klassen das Controller Interface des Spring Frameworks implementieren. Als Datenbank dient in der Applikation ein Dummy Objekt. Die Beans dieses Projektes werden durch eine Beankonfiguration in XML Dateien vorgenommen

Contacts example: Dieses Projekt ist ebenfalls ein Beispiel von Spring Security. Auch hier werden die Beans in einer XML Konfigurationsdatei definiert und verwebt. Der Datenbankzugriff geschieht in diesem Projekt über das Ableiten von der JdbcDaoSupport Klasse des Spring Frameworks. Die Schnittstelle zum Web wird ebenfalls, wie zuvor, durch das Implementieren des Controller Interfaces vom Spring Framework bewerkstelligt.

JTrac: JTrac ist eine Umsetzung des bekannten Trac Issue Tracking Systems mit Hilfe des Spring Frameworks. Dabei wird die Absicherung des Projektes über Spring Security realisiert. Der Datenbankzugriff ist über Hibernate unter Nutzung des HibernateDaoSupports des Spring Frameworks programmiert. Das Mapping der persistenten Objekte wird über eine Hibernate Mapping Datei und nicht über JPA Annotationen vorgenommen.

Petclinic: Die Petclinic ist ein bekanntes Beispielprojekt des Spring Frameworkes. Dabei werden eine Reihe von verschiedenen Persistenztechnologien unter der Nutzung von Spring Templates zur genutzt. Das ORM Mapping wird durch eine Mapping Datei durchgeführt. Das Verknüpfen der einzelnen Beans geschieht in diesem Beispiel über den Spring Autowiring Mechanismus. Die Schnittstelle zum Web wird über eine @Controller Annnotation und mit @RequestMapping Annotationen vorgenommen.

swf-booking-mvc: swf-booking-mvc ist ein Beispielprojekt des Spring Webflow Projekts. Dabei werden die Controller durch Annotationen gekennzeichnet. Die Persistenz wird durch JPA realisiert.

Spacewar Example: Das Spacewar Example ist ein Spiel, das in Aspect/J programmiert ist. Die Koordination der einzelnen Programmteile wird durch Aspekte gewährleistet.

Unterstützte Annotationen: Die Annotationen sind im Prototyp zur besseren Auswahl in Gruppen eingeteilt.

Dies hat den Grund, dass verschiedene Annotationen zusammen zu einer größeren Dimension gehören. Diese wird im weiteren Verlauf Gruppe genannt. Die einzelnen zugehörigen Annotationen zu einer Gruppe stellen dabei Unterdimensionen dar. In einer Gruppe sind die Annotationen mit einem AND verknüpft. Dies bedeutet, dass alle Annotationen in einer Gruppe vorkommen müssen, um einen Slice zu markieren. Beispielsweise unterstützt die Dimension des JPA mehrere Unterdimensionen wie @Table oder @Entity.

Innerhalb einer Gruppe können einzelne Annotationen durch eine Checkbox aktiviert und deaktiviert werden. Ebenso wird durch eine Checkbox bestimmt, welche Parameter einer Annotation aktiv sein sollen. Zu sehen ist dies beispielhaft in der nachfolgenden Tabelle 1:

| Gruppe | Beschreibung |
| --- | --- |
| JPA Annotationen Secured | Durch diese Gruppe wird die Dimension der Persistenten Objekte ausgewählt. Diese Gruppe stellt die Dimension der mit @Secured gesicherten Elemente dar. |
| Request param checker | Diese Gruppe stellt die Dimension, der über eine URL verfügbaren Quellcodefunktionen oder Klassen dar. |
| Test | Diese Gruppen stellt die Dimension der Testfälle, die durch Annotationen gekennzeichnet, sind dar. |
| Autowired Fields | Diese Gruppe stellt die Dimension der Felder, die automatisch verbunden werden dar. |

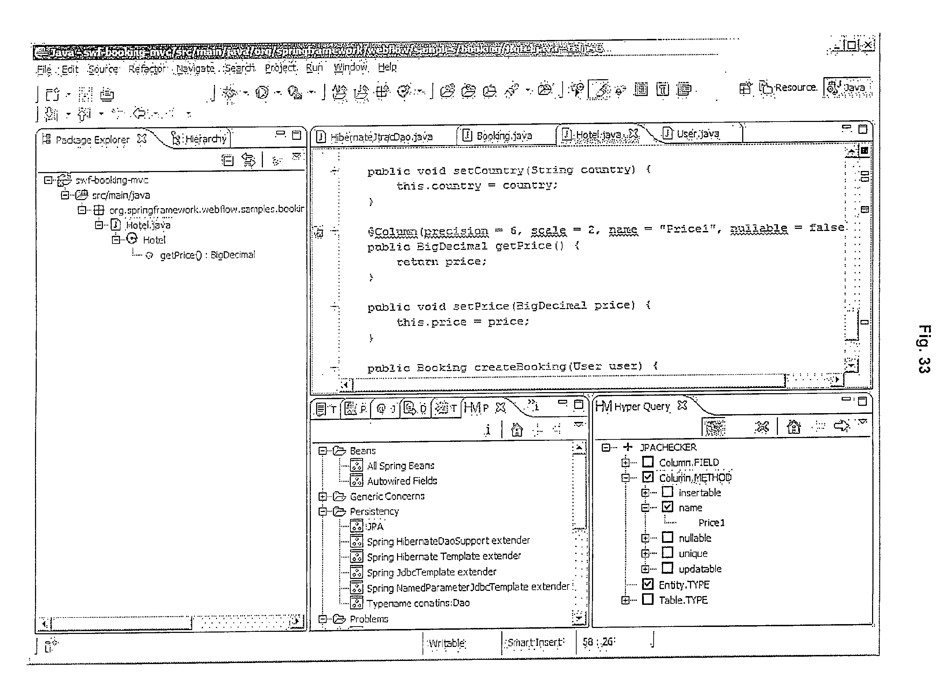

Ein Beispiel für eine Abfrage 302 zeigt Fig. 33 ("Hyper Query mit JPA Annotationen"). Dort wurde die Abfrage 302 nach Fragmenten, die durch JPA Annotationen gekennzeichnet sind, durchgeführt. Dabei muss die Klasse eine Entity sein und eine Spalte der Entity muss den Namen "Pricel" aufweisen.

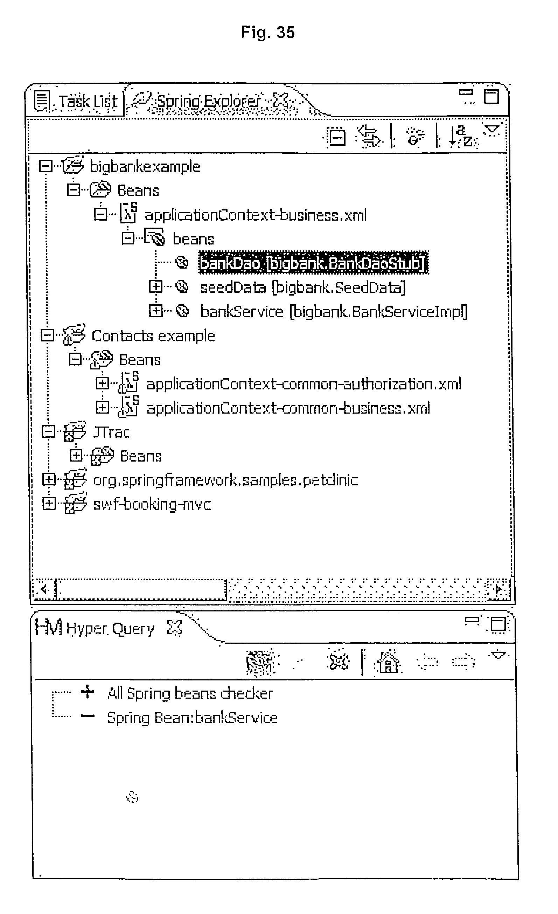

Beans: Bei Beans werden Java Elemente unterstützt, die als Spring Beans definiert wurden. Da diese Beans auf verschiedene Weise definiert werden können, werden verschiedene Möglichkeiten unterstützt. Zum einen existiert eine Dimension, die sich auf alle Beans bezieht, die durch eine XML Konfiguration definiert sind. Diese Dimension ist in den vordefinierten Dimensionen enthalten. Eine weitere Dimension ermöglicht es, einzelne Beans aus dem Spring Explorer per drag-and-drop der aktuellen Anfrage hinzuzufügen (siehe hierzu Fig. 35 - "Annotationen im Hyperquery View").

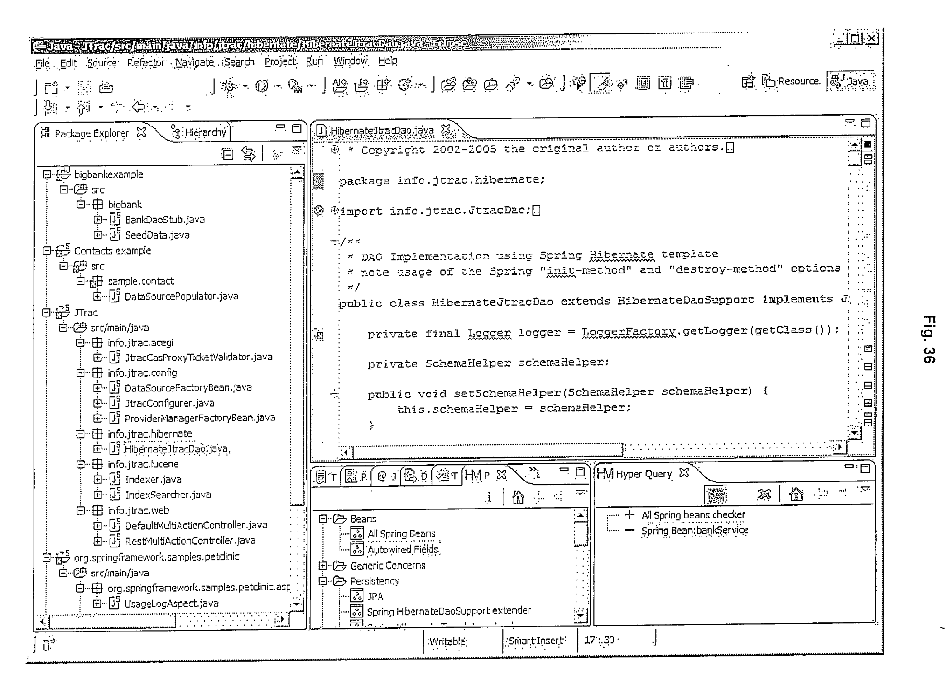

In Fig. 36 ("Eine Hyperquery nach Spring Beans") wurde eine Abfrage aller Spring Beans durchgeführt. Dabei wurde eine spezielle Bean durch den Spring Explorer als Hypercut markiert. Diese ausgeschlossene Bean ist der bankService Bean.

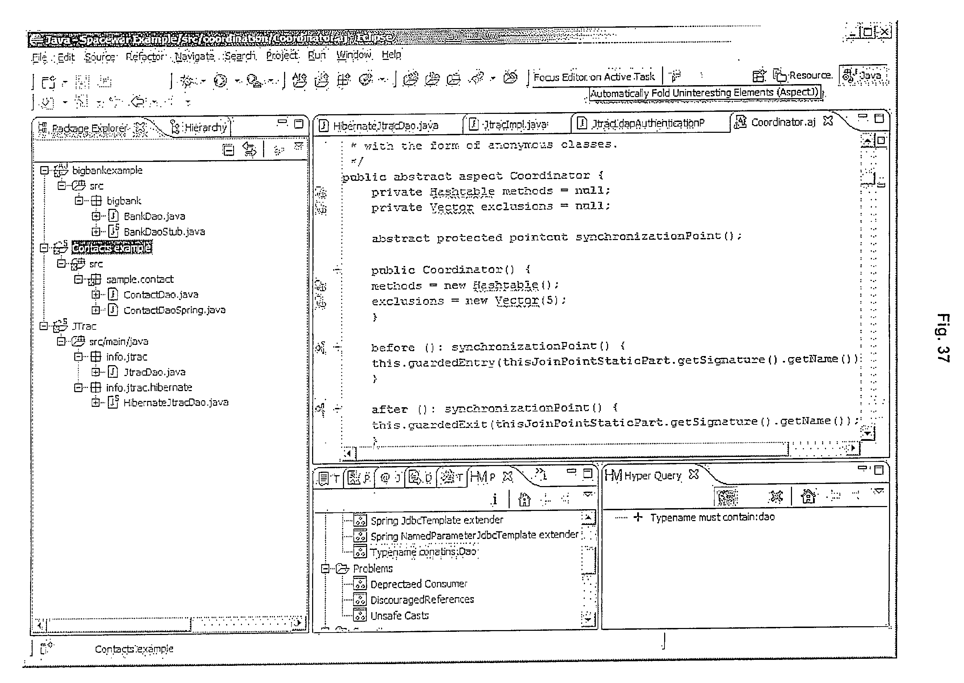

Namenskonventionen: Für Namenskonventionen werden im Prototyp die Namen "dao" und "service" unterstützt. Werden diese in einer Abfrage 302 benutzt, so wird geprüft ob der Klassen- oder Interfacename "dao" oder "service" enthält. Beispielhaft wird das Ergebnis 301 einer solchen Abfrage 302 in Fig. 37 ("Namenskonventionsunterstützung an Typen mit DAO") dargestellt.

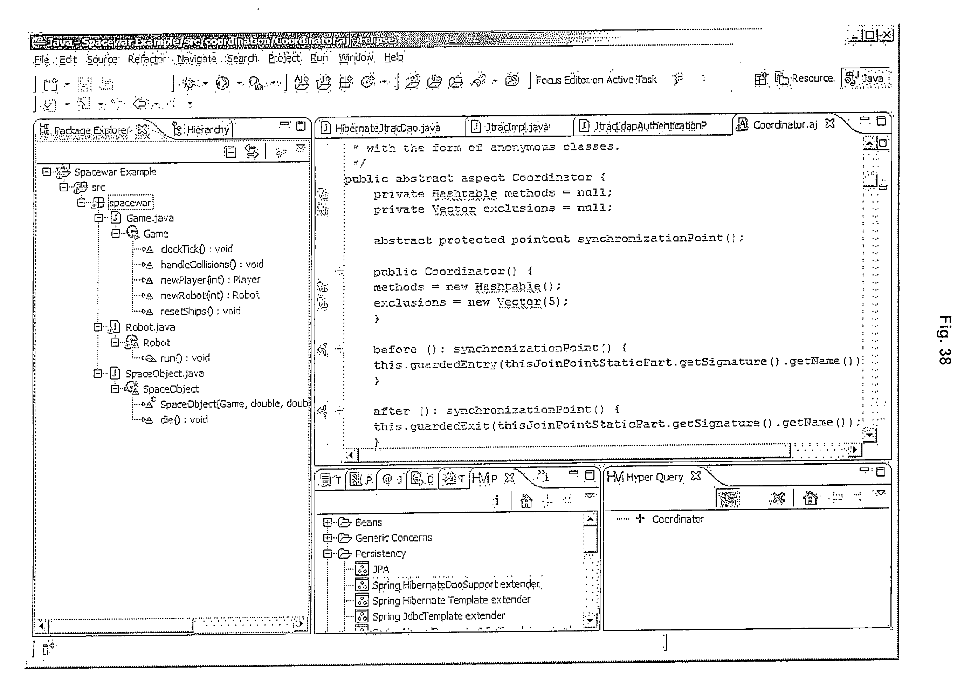

Aspekte: Aspekte können direkt per drag-and-drop aus verschiedenen Views einer Abfrage hinzugefügt werden. Beispielsweise aus dem Package Explorer. Beim Ausführen einer Abfrage werden die Pointcuts bestimmt, und diese werden dem Resultat hinzugefügt. In Fig. 38 ("Affektierte Elemente von Coordinator Aspekt im Spacewar example") wird eine Abfrage 302 nach den beeinflussten Elementen des Coordinator Aspektes gezeigt.

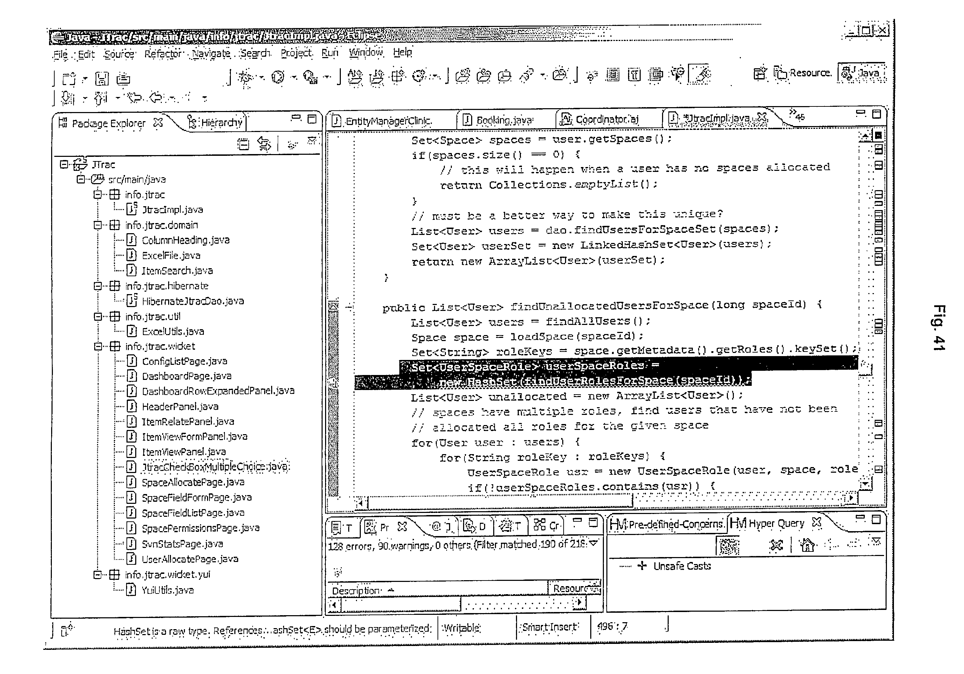

Compilerausgaben: Bei Compilerausgaben 301 wird das Bestimmen von unsicheren Typenwandlungen und Konsumenten von veralteten Artefakten unterstützt. Fig. 41 ("Unsichere Casts") zeigt eine Ergebnismenge mit aktiviertem Filter. Dabei werden im Package Explorer nur noch Java Dateien gezeigt, die unsichere Typenwandlungen enthalten. Beispielhaft ist eine Java Datei geöffnet, in der unsichere Typecasts durchgeführt werden (vgl. den markierten Quellcodeteil in Fig. 41).

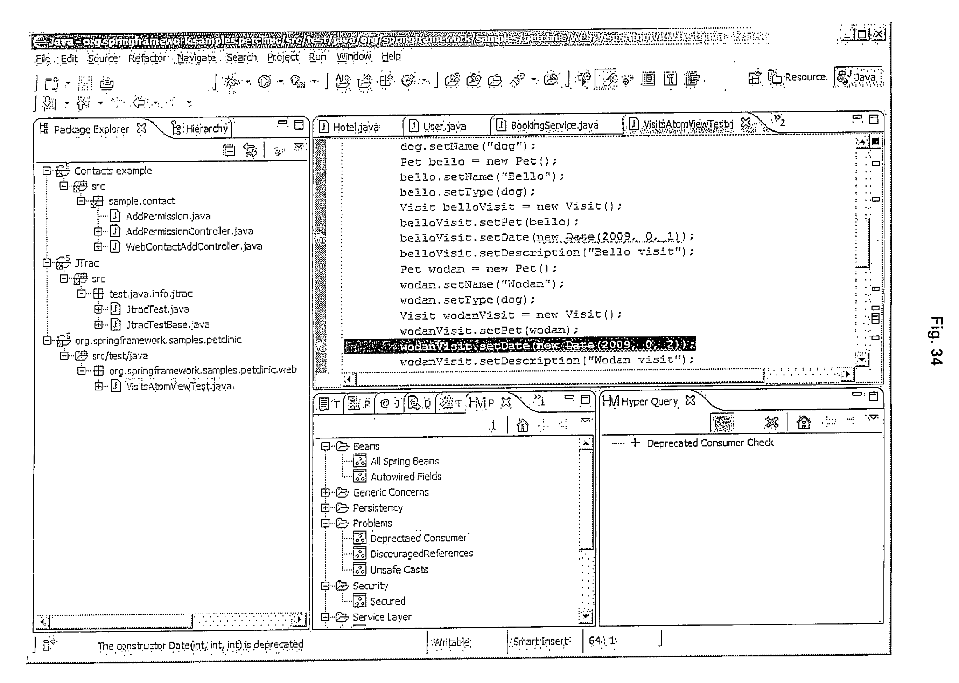

Fig. 34 ("Hyperquery nach deprecated Consumers") zeigt eine Anfrage 302 nach Elementen, die als veraltet gekennzeichnete Elemente nutzen. Dabei wurde exemplarisch eine Datei der Ergebnismenge 301 geöffnet, und man sieht, dass in diesem Fall die "Date" Klasse veraltet ist.

Tasks: Lokale Tasks können per drap-and-drop einer Hyper Query hinzugefügt werden. Beim Errechnen des Resultates 301 werden Klassen, Java Dateien, Methoden und Felder unterstützt, die im Kontext des Tasks enthalten sind und eine Interessensbewertung über der Anzeigeschwelle von Mylyn besitzen. Dabei kann eine Abfrage 302, die auch einen Task enthält, natürlich auch mit anderen Dimensionen kombiniert werden. Interessant ist hier auch die Kombination von Tasks. So kann der Inhalt eines Tasks beispielsweise durch ein Hypercut von einem anderen Task entfernt werden.

Beispielsweise enthält ein Task die Überarbeitung der DAOs im Contacts Beispiel (change contact dao). Zum Kontext dieses Tasks gehören auch die entsprechenden Entities. Ein anderer Task umfasst die Überarbeitung der Entities (change contact entities). Nun werden diese Tasks kombiniert.

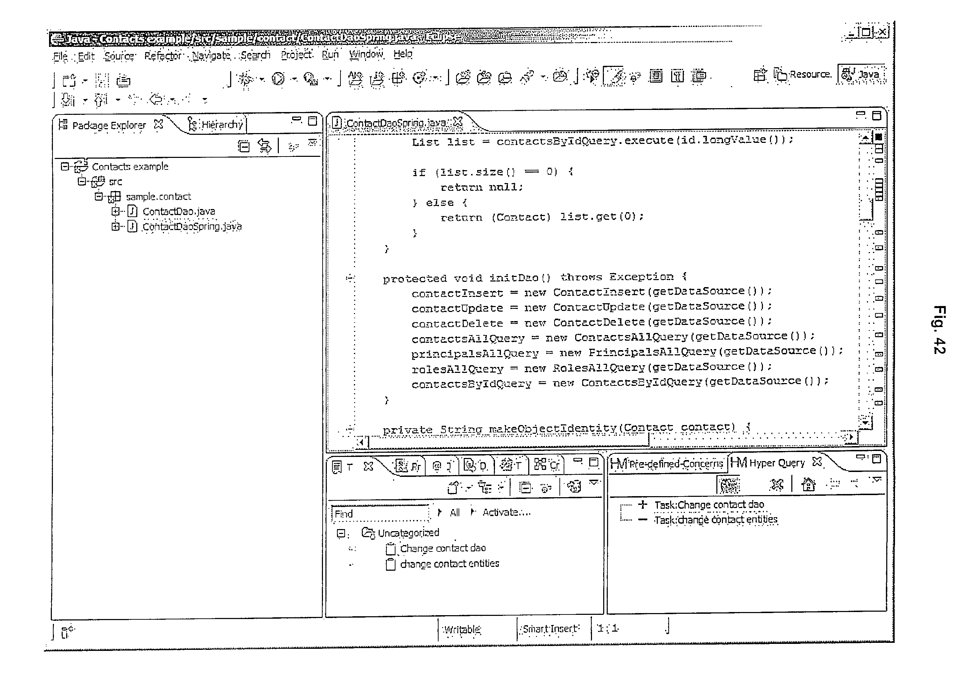

Dabei wird der Inhalt von "change contact entities" durch einen Hypercut entfernt. Dadurch ergibt sich eine Ergebnismenge von allen Elementen, die nur zur Bearbeitung der Aufgabe "change contact dao" gehören und nicht zu der Aufgabe "change contact entities". Die Ergebnismenge ist in Fig. 42 ("Hyperquery mit zwei verschiedenen Tasks") zu sehen.

Nutzung von Frameworkklassen: Die Nutzung von Frameworkklassen oder Interfaces ist durch vordefinierte Concerns bestimmbar. In der nachfolgenden Tabelle ("Vordefinierte Frameworkklassen und Interfaces") werden die einzelnen unterstützten Klassen und Interfaces gezeigt. Dabei stammen alle Klassen aus dem Spring Framework:

| Klasse oder Interface Name | Typ |
| --- | --- |
| HibernateDaoSupport | Klasse |
| HibernateTemplate | Klasse |
| JdbcTemplate | Klasse |
| NamedParameterJdbcTemplate | Klasse |
| Controller | Interface |

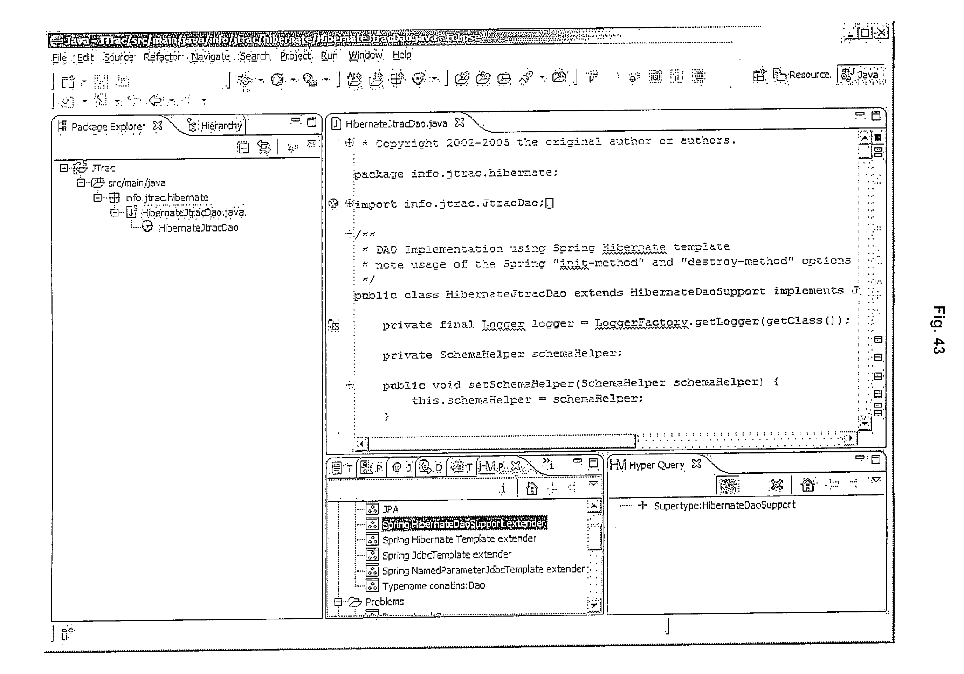

Fig. 43 ("Hyperquery mit der Nutzung von Frameworkinformationen") zeigt eine Ergebnismenge der Beispielprojekte für die Klassen, die vom HibernateDaosupport des Spring Frameworks abgeleitet sind.

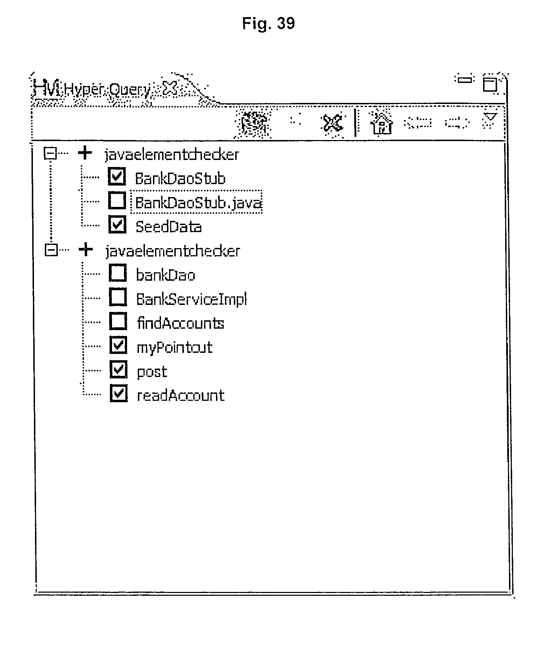

Javaelemente: Alle Javalemente können per drag-and-drop einer Abfrage 302 hinzugefügt werden. Beispielsweise aus Suchergebnissen oder dem Outline View. Beim Hinzufügen wird ein Kopfelement in der Hyperquery erstellt. Alle Elemente, die markiert verschoben wurden, gehören zu diesem Kopfelement. Dabei besteht die Möglichkeit, einzelne Elemente durch Entfernen des Hakens in der Checkbox zu deaktivieren (vgl. Fig. 39 - "Java Elemente im Hyperquery View"). Diese Möglichkeit, normale Elemente hinzuzufügen und als Dimension bei einer Abfrage zu nutzen, stellt das Nutzen der Funktionalität einer Erweiterung dar. Hierbei werden bei der Abfrage 302 Daten angegeben, die der Hyperadapter 300 beim Berechnen der Ergebnismenge 301 nutzt.

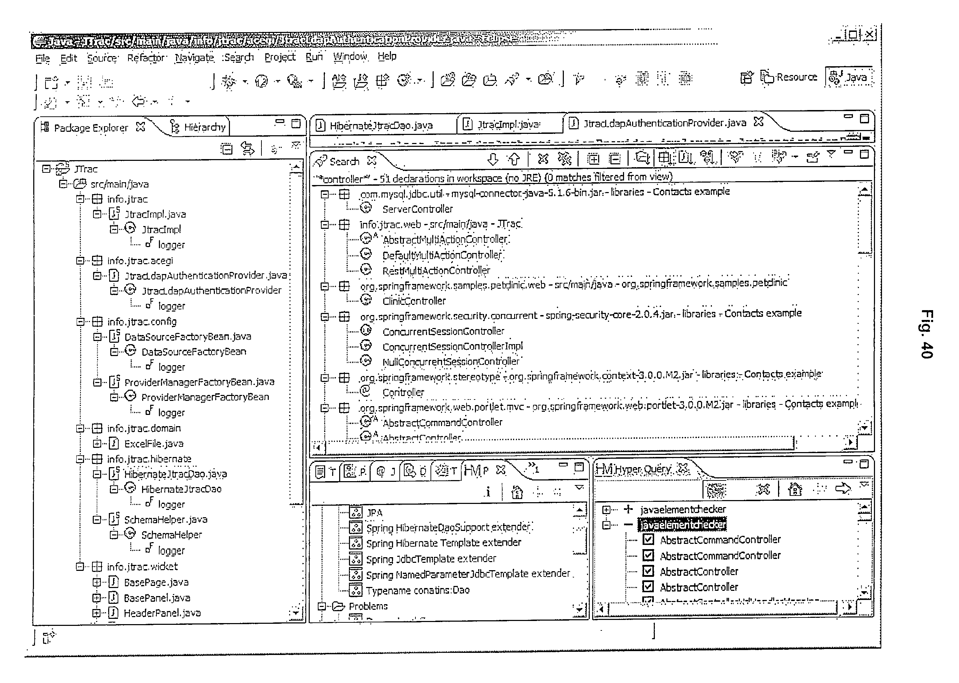

Dies kann beispielsweise dazu genutzt werden, verschiedene Suchergebnisse einer normalen Suchfunktion zu einer Abfrage 3020 hinzuzufügen. In Fig. 40 ("Hyperquery mit Suchergebnissen") wird dies exemplarisch dargestellt. Dabei wurden zuerst alle Projekte nach der Benutzung der Logger Klasse durchsucht. Das Ergebnis wurde der Abfrage 302 hinzugefügt. Danach wurden alle Typdeklarationen, die den String "Controller" enthalten durch eine weitere Suche bestimmt. Auch dieses Ergebnis wurde hinzugefügt und in den Hypercut Modus geschaltet. Das Resultat 301 sind somit alle Elemente, welche die Klasse Logger nutzen und nicht Controller in ihrem Namen haben.

Eine weitere wichtige Anwendung von Java Elementen in einer Abfrage ergibt sich nach deren Ausführung. Oftmals werden als Ergebnis 301 auch Elemente auftauchen, die der Benutzer nicht benötigt. Er kann diese dann einfach in den Abfrage View ziehen und deren Anzeige in den Hypercut Modus schalten, und sie so bei der nächsten Abfrage 302 ausschließen.

## Weitere Einsatzmöglichkeiten des Hyperadapters

Semantic Web Dokumentenumwandler: Der Hyperadapter 300 kann dazu dienen, als Semantic Web Dokumentenumwandler genutzt zu werden. Dazu können Dokumente aus der Datenbasis 305 durch Dimensionsinformationen als Semantic Web Dokumente umgewandelt werden.

Dimension Explorer: Auf Basis des Hyperadapters 300 kann ein Dimension Explorer entwickelt werden. Dieser kann es ermöglichen, grafisch durch die Dimensionsstrukturen zu "zoomen" und / oder zu navigieren.

Mehrdimensionale Operationen auf Taskcontent: Aufgrund des Hyperadapters 300 können auch mehrdimensionale Operationen auf Taskcontent ermöglicht werden. Beispielsweise ist es dadurch möglich, Mengenoperationen auf mit Aufgaben assoziierten Elementen durchzuführen. Zum Beispiel ist es heutzutage mit Mylyn nur möglich, den Inhalt von Aufgaben gleichzeitig anzuzeigen. Jedoch ist es nicht möglich, Mengenoperationen durchzuführen. Beispiel: Aufgabe 1 und Aufgabe 2 ohne Elemente, die in Aufgabe 3 vorhanden sind, ist nicht möglich. Sofern der Hyperadapter 300 angewendet wird, wäre es möglich, auch alle möglichen Operationen auf Aufgaben anzuwenden. Dabei könnten auch die Fuzzy Operationen angewandt werden, da das Taskmodell eine Interessensbewertung von Elementen nutzt, die auch als unscharfe Dimension aufgefasst werden kann.

Erzeugen von Daten: Durch die Detektoren kann der Hyperadapter 300 dazu genutzt werden, um Dimensionsdaten zu erzeugen und diese weiteren Maschinen oder Computerprogrammprodukten zur Verfügung zu stellen. Beispielsweise könnten dadurch Dateien für den Concernmapper erzeugt werden.

Verbesserung und Erweiterung von Werkzeugen zur Fehlerklassenanalyse: Aufgrund des Hyperadapters 300 können wesentlich komplexere Zuordnungen von Metriken zu Fehlerklassen durchgeführt werden. Desweiteren könnten auch solche Fehlerklassen als weitere Dimension bei einer Analyse benutzt werden. Zusätzlich ist es denkbar, dass der Hyperadapter 300 intern desweiteren eine Regelbasis enthält, die es ermöglicht, aufgrund von Abfragen 302 oder Dimensionsinhalten Fehlerklassen für SEF festzulegen.

3D Browser: Der Hyperadapter 300 kann zudem verwendet werden, um 3D- und / oder höherdimensionale Darstellungen von Sourcecode zu erzeugen und / oder zu filtern. Beispielsweise können Darstellungen aus "Java 3d Browser Homepage" (http://1s10-www.cs.uni-dortmund.de/index.php?id=105) verwendet und / oder gefiltert werden. Desweiteren könnte er dazu benutzt werden, in solche 3D-Darstellungen neue Dimensionen einfließen zu lassen. Zum Beispiel könnten besonders Fragmente in der 3D-Darstellung die Farbe rot erhalten, sofern ihre Temperatur besonders hoch ist.

Filterung der Benutzerschnittstelle: Besonders bevorzugt kann ein Hyperadapter 300 auch dazu verwendet werden, die Inhalte einer Benutzerschnittstelle zu filtern. Ein Beispiel hierfür wurde im obigen Prototyp gegeben. Diese Filterung ist jedoch in weiteren Bereichen, wie beispielsweise einem Browser einsetzbar. Zum Beispiel könnten alle Fragmente gefiltert werden, die nicht zu einer bestimmten Dimension gehören. Man beachte hierbei zusätzlich, dass es bisher keine Technologie gibt, die es ermöglicht die Benutzerschnittstelle aufgrund von den Ergebnissen von Olap-Operationen zu filtern. Mit dem Hyperadapter 300 ist dies möglich.

Data Mining: Der Hyperadapter 300 könnte dazu verwendet werden, um Data Mining aufgrund komplexer Zusammenhänge durchzuführen. Beispielsweise aufgrund von Task, Temperatur, Fehler und / oder den Autoren von Fragmenten. Hierbei gilt es zu beachten, dass Data Mining sich bisher nur auf einzelne Bereiche von Software bezieht. Der mehrdimensionale Gedanke, besonders durch die Schemata, ermöglicht es weitaus größere Zusammenhänge zu erfassen als bisher.

Aspect Mining: Um Aspekte zu identifizieren, werden oftmals Aspect Mining Tools verwendet. Sofern Aspect Mining mit dem Hyperadapter 300 kombiniert wird, können Aspect Miner in ihrer Qualität verbessert werden.

**Patentansprüche**

1. Ein Hyperadapter (300) für den Zugriff auf Dokumente (400) und / oder Dokumententeile (410), die in einer Dokumentenbasis (305) gespeichert sind, wobei der Hyperadapter (300) aufweist:

   a. einen Zugriffsübersetzer (303), der ausgebildet ist, um zumindest ein vom Hyperadapter (300) empfangenes Zugriffsdokument (302) zu verarbeiten, wobei das Zugriffsdokument (302) eine oder mehrere Klassen (402) von Dokumenten (400) und / oder Dokumententeilen (410) spezifiziert;
   b. wobei der Hyperadapter (300) ausgebildet ist, die in der Dokumentenbasis (305) gespeicherten Dokumente (400) und / oder Dokumententeile (410) anhand von im Zugriffsdokument (302) spezifizierten Klassifikationsmitteln einer oder mehreren Klassen (402) zuzuordnen.

2. Der Hyperadapter (300) nach Anspruch 1, wobei der Hyperadapter (300) ausgebildet ist, um die im Zugriffsdokument (302) spezifizierten Klassifikationsmittel zu speichern und bei der Verarbeitung von zumindest einem zweiten empfangenen Zugriffsdokument (302) zu verwenden.

3. Der Hyperadapter (300) nach Anspruch 1 oder 2, wobei die Klassifikationsmittel zumindest ein Schema, zumindest eine Zuordnungsregel und / oder zumindest ein Mapping aufweisen.

4. Der Hyperadapter (300) nach einem der vorhergehenden Ansprüche, wobei der Zugriffsübersetzer (303) eine Mehrzahl von vordefinierten Operationen zum Zugriff auf die in der Dokumentenbasis (305) gespeicherten Dokumente (400) und / oder Dokumententeile (410) aufweist und wobei das zumindest eine Zugriffsdokument (302) zumindest eine der vordefinierten Operationen referenziert.

5. Der Hyperadapter (300) nach einem der vorhergehenden Ansprüche, wobei die Klassifikationsmittel (304) ausgebildet sind, um ein Dokument (400) und / oder einen Dokumententeil (410) zu einer gewissen Wahrscheinlichkeit einer oder mehreren Klassen (402) zuzuordnen.

6. Der Hyperadapter (300) nach einem der vorhergehenden Ansprüche, wobei das zumindest eine Zugriffsdokument (302) eine Anfrage nach zumindest einer Klasse (402) von Dokumenten (400) und / oder Dokumententeilen (410) spezifiziert und wobei der Hyperadapter (300) ausgebildet ist, um zumindest ein Resultat (301) zu erzeugen, welches die zumindest eine angefragte Klasse von Dokumenten (400) und / oder Dokumententeilen (410) aufweist.

7. Der Hyperadapter (300) nach dem vorhergehenden Anspruch 6, wobei die Anfrage (302) zumindest ein Beispieldokument aufweist und wobei der Hyperadapter (300) ausgebildet ist, zumindest ein Resultat (301) zu erzeugen, welches diejenige zumindest eine Klasse von Dokumenten (400) und / oder Dokumententeilen (410) aufweist, der das Beispieldokument zugeordnet ist.

**8.** Der Hyperadapter (300) nach einem der vorhergehenden Ansprüche, wobei das Zugriffsdokument (302) eine Schreibanforderung spezifiziert, die zusätzliche Informationen zu einem oder mehreren Dokumenten (400) und / oder Dokumententeilen (410) in der Dokumentenbasis (305) aufweist und wobei der Hyperadapter (300) ausgebildet ist, um die zusätzlichen Informationen in einen internen Speicher des Hyperadapters (300) zu speichern.

**9.** Der Hyperadapter (300) nach dem vorhergehenden Anspruch 8, wobei der Hyperadapter (300) ausgebildet ist, bei der Verarbeitung zumindest einer zweiten Anfrage (302) zumindest ein Resultat (301) zu erzeugen, wobei das Resultat (301) die angefragte Klasse von Dokumenten (400) und / oder Dokumententeilen (410) aus der Dokumentenbasis (305) und die zusätzlichen Informationen aus dem internen Speicher des Hyperadapters (300) aufweist.

**10.** Der Hyperadapter (300) nach einem der vorhergehenden Ansprüche, wobei der Hyperadapter (300) zumindest einen Detektor (306, 401) aufweist, der ausgebildet ist, um die Dokumentenbasis (305) zu analysieren und daraus ein oder mehrere Klassifikationsmittel (304) zu erzeugen.

**11.** Der Hyperadapter (300) nach dem vorhergehenden Anspruch 10, wobei die in der Dokumentenbasis (305) gespeicherten Dokumente (400) Quellcode enthalten und wobei der zumindest eine Detektor (306, 401) ausgebildet ist, um den Quellcode (400) in Klassen einzuordnen, die den Energieverbrauch angeben, den eine oder mehrere Maschinen benötigen, um Instruktionen (410) des Quellcodes (400) auszuführen.

**12.** Ein Verfahren zum Zugreifen auf Dokumente (400) und / oder Dokumententeile (410), die in einer Dokumentenbasis (305) gespeichert sind, wobei das Verfahren die folgenden Schritte aufweist:

a. Verarbeiten zumindest eines Zugriffsdokuments (302), wobei das Zugriffsdokument (302) eine oder mehrere Klassen (402) von Dokumenten (400) und / oder Dokumententeilen (410) spezifiziert;
b. wobei Schritt a. das Zuordnen der in der Dokumentenbasis (305) gespeicherten Dokumente (400) und / oder Dokumententeile (410) zu einer oder mehreren Klassen (402) anhand von im Zugriffsdokument (302) spezifizierten Klassifikationsmitteln aufweist.

**13.** Das Verfahren nach Anspruch 12, ferner aufweisend die Schritte des Speicherns der im Zugriffsdokument (302) spezifizierten Klassifikationsmittel und der Verwendung der gespeicherten Klassifikationsmittel bei der Verarbeitung von zumindest einem zweiten Zugriffsdokument (302).

**14.** Das Verfahren nach Anspruch 12 oder 13, ferner aufweisend die Schritte des Analysierens der Dokumentenbasis (305) durch zumindest einen Detektor (306, 401) und des Erzeugens eines oder mehrerer Klassifikationsmittel (304) durch den zumindest einen Detektor (306, 401).

**15.** Ein Computerprogramm, das Instruktionen aufweist um ein Verfahren nach einem der vorhergehenden Ansprüche 12-14 auszuführen.

**Geänderte Patentansprüche gemäss Regel 137(2) EPÜ.**

**1.** Ein Hyperadapter (300) für den Zugriff auf Dokumente (400) und / oder Dokumententeile (410), die in einer Dokumentenbasis (305) gespeichert sind, wobei der Hyperadapter (300) aufweist:

a. einen Zugriffsübersetzer (303), der ausgebildet ist, um zumindest ein vom Hyperadapter (300) empfangenes Zugriffsdokument (302) zu verarbeiten,
**dadurch gekennzeichnet, dass**:
b. das Zugriffsdokument (302) eine oder mehrere Klassen (402) von Dokumenten (400) und / oder Dokumententeilen (410) spezifiziert;
c. wobei der Hyperadapter (300) ausgebildet ist, die in der Dokumentenbasis (305) gespeicherten Dokumente (400) und / oder Dokumententeile (410) anhand von im Zugriffsdokument (302) spezifizierten Klassifikationsmitteln einer oder mehreren Klassen (402) zuzuordnen.

**2.** Der Hyperadapter (300) nach Anspruch 1, wobei der Hyperadapter (300) ausgebildet ist, um die im Zugriffsdokument (302) spezifizierten Klassifikationsmittel zu speichern und bei der Verarbeitung von zumindest einem zweiten empfangenen Zugriffsdokument (302) zu verwenden.

**3.** Der Hyperadapter (300) nach Anspruch 1 oder 2, wobei die Klassifikationsmittel zumindest ein Schema, zumindest eine Zuordnungsregel und / oder zumindest ein Mapping aufweisen.

**4.** Der Hyperadapter (300) nach einem der vorhergehenden Ansprüche, wobei der Zugriffsübersetzer (303) eine Mehrzahl von vordefinierten Operationen zum Zugriff auf die in der Dokumentenbasis (305) gespeicherten Dokumente (400) und / oder Dokumententeile (410) aufweist und wobei das zumindest eine Zugriffsdokument (302) zumindest eine der vordefinierten Operationen referenziert.

**5.** Der Hyperadapter (300) nach einem der vorhergehenden Ansprüche, wobei die Klassifikationsmittel (304) ausgebildet sind, um ein Dokument (400) und / oder einen Dokumententeil (410) zu einer gewissen Wahrscheinlichkeit einer oder mehreren Klassen (402) zuzuordnen.

**6.** Der Hyperadapter (300) nach einem der vorhergehenden Ansprüche, wobei das zumindest eine Zugriffsdokument (302) eine Anfrage nach zumindest einer Klasse (402) von Dokumenten (400) und / oder Dokumententeilen (410) spezifiziert und wobei der Hyperadapter (300) ausgebildet ist, um zumindest ein Resultat (301) zu erzeugen, welches die zumindest eine angefragte Klasse von Dokumenten (400) und / oder Dokumententeilen (410) aufweist.

**7.** Der Hyperadapter (300) nach dem vorhergehenden Anspruch 6, wobei die Anfrage (302) zumindest ein Beispieldokument aufweist und wobei der Hyperadapter (300) ausgebildet ist, zumindest ein Resultat (301) zu erzeugen, welches diejenige zumindest eine Klasse von Dokumenten (400) und / oder Dokumententeilen (410) aufweist, der das Beispieldokument zugeordnet ist.

**8.** Der Hyperadapter (300) nach einem der vorhergehenden Ansprüche, wobei das Zugriffsdokument (302) eine Schreibanforderung spezifiziert, die zusätzliche Informationen zu einem oder mehreren Dokumenten (400) und / oder Dokumententeilen (410) in der Dokumentenbasis (305) aufweist und wobei der Hyperadapter (300) ausgebildet ist, um die zusätzlichen Informationen in einen internen Speicher des Hyperadapters (300) zu speichern.

**9.** Der Hyperadapter (300) nach dem vorhergehenden Anspruch 8, wobei der Hyperadapter (300) ausgebildet ist, bei der Verarbeitung zumindest einer zweiten Anfrage (302) zumindest ein Resultat (301) zu erzeugen, wobei das Resultat (301) die angefragte Klasse von Dokumenten (400) und / oder Dokumententeilen (410) aus der Dokumentenbasis (305) und die zusätzlichen Informationen aus dem internen Speicher des Hyperadapters (300) aufweist.

**10.** Der Hyperadapter (300) nach einem der vorhergehenden Ansprüche, wobei der Hyperadapter (300) zumindest einen Detektor (306, 401) aufweist, der ausgebildet ist, um die Dokumentenbasis (305) zu analysieren und daraus ein oder mehrere Klassifikationsmittel (304) zu erzeugen.

**11.** Der Hyperadapter (300) nach dem vorhergehenden Anspruch 10, wobei die in der Dokumentenbasis (305) gespeicherten Dokumente (400) Quellcode enthalten und wobei der zumindest eine Detektor (306, 401) ausgebildet ist, um den Quellcode (400) in Klassen einzuordnen, die den Energieverbrauch angeben, den eine oder mehrere Maschinen benötigen, um Instruktionen (410) des Quellcodes (400) auszuführen.

**12.** Ein Verfahren zum Zugreifen auf Dokumente (400) und / oder Dokumententeile (410), die in einer Dokumentenbasis (305) gespeichert sind, wobei das Verfahren die folgenden Schritte aufweist:

a. Verarbeiten zumindest eines Zugriffsdokuments (302), **dadurch gekennzeichnet, dass**:
b. das Zugriffsdokument (302) eine oder mehrere Klassen (402) von Dokumenten (400) und / oder Dokumententeilen (410) spezifiziert;
c. wobei Schritt a. das Zuordnen der in der Dokumentenbasis (305) gespeicherten Dokumente (400) und / oder Dokumententeile (410) zu einer oder mehreren Klassen (402) anhand von im Zugriffsdokument (302) spezifizierten Klassifikationsmitteln aufweist.

**13.** Das Verfahren nach Anspruch 12, ferner aufweisend die Schritte des Speicherns der im Zugriffsdokument (302) spezifizierten Klassifikationsmittel und der Verwendung der gespeicherten Klassifikationsmittel bei der Verarbeitung von zumindest einem zweiten Zugriffsdokument (302).

**14.** Das Verfahren nach Anspruch 12 oder 13, ferner aufweisend die Schritte des Analysierens der Dokumentenbasis (305) durch zumindest einen Detektor (306, 401) und des Erzeugens eines oder mehrerer Klassifikationsmittel (304) durch den zumindest einen Detektor (306, 401).

**15.** Ein Computerprogramm, das Instruktionen aufweist um ein Verfahren nach einem der vorhergehenden Ansprüche 12 - 14 auszuführen.

Fig. 1

Fig. 2

Runtime Environment

Code

Annotations

Fig. 3

Runtime Environment

Code

Annotations

DSL

Generated code

Non generating DSL

DSL code interactions

Fig. 4

Runtime Environment

Code

Annotations

Pointcuts

Aspect code

DSL

Generated code

Non generating DSL

DSL code interactions

## Fig. 5

Runtime Environment

Code

Annotations

Pointcuts

Aspect code

Components

DSL

Generated code

Non generating DSL

DSL code interactions

Extension Points

Fig. 6

| Runtime Environment | | DSL | |
| Code | | Generated code | |
| Annotations | | Non generating DSL | |
| Pointcuts | | | |
| Aspect code | | DSL code interactions | |
| Components | | Extension Points | |
| | | Task view | |

## Fig. 7a

100 — Home>>Tagesgeschäft

101 —

Blogeintrags-Titel — 111

? — 117

102 — Sa. 24. Januar 2009    32 mal gelesen — 112    Tagesgeschäft — 113

103 — Text

Anzeige 1

Anzeige 2 — 114

104 — Zitat

Anzeige 3

Anzeige 4

— 115

Text

Kommentar

— 116

105 — Anzeige 5

Anzeige 6

Anzeige 7

Anzeige 8

106

110 — per RSS oder E-mail

Kommentar

107

109

Tag1, Tag2

108

## Fig. 7b

1. Armbewegung nach rechts
2. Bewegung des kompletten Roboters nach vorne
3. Ausfahren des Armes
4. Greifen
5. Bewegung des Roboters nach hinten

## Fig. 7c

```
public class MyController extends ControllerFromBibliography
                          implements
                          ServiceFromBibliography{

    @Autowired
    private MemberDao dao;


    @RequestMapping("/entries")
    @RollesAllowed("Administrator")
    public String getMembers(String group){
        if(group.equals("test")){
            ...
            ..
        }else{
            ...
            ..
        }
        Groups groups= dao.getmembersForGroup(group);
        return groups.toString;
    }

    public void otherMethod(){
        ...
        ..
    }

    public void otherMethod2(){
        ...
        ..
    }
}

public class MemberDao extends DaoTemplateFromBibliography{
    ...
    ..
}


<beans>
  <bean id="controller" class="MyController">
  </bean>
</beans>
```

## Fig. 8a

length | language | Text   205          length | language | Text   204

Text | Target   206

Actionlinks | Normal207          Owntext | Quotes | length          203          202

Number of tags | Concretetags          Number of Advertisments | google | other

208

Number of reads | Postdate | Tags | URL | Links | Caption | Text | Advertisment | Images          201

Blogname | Author | Domain | Actions | Posts | Rooturl —— 200

Mark in | Register for updates   209

210          Facebook | linkedin...          Mail | Rss | Twitter          211

## Fig. 8b

Dn

D..

V1   D..

D..

D1

## Fig. 8c

## Fig. 8d

**Fig. 9**

**Fig. 10**

Fig. 11

Fig. 12

Fig. 13

Fig. 14

**Fig. 15**

Detektoren — 401

Zuordnungen — 403

Dimensionen des Fragmentes 402

**Fig. 16**

Zugriffsdokument — 302

Dimensionsdaten/ Dimensionsdatenapparat — 304

— 303 — 305

Dokumentenanalysator

Operationen

Dokumentenbasis

301

Operationsausführer

Resultat

Fig. 17

Fig. 18

**Fig. 19**

| | |
|---|---|
| Ausführungszeitdetektor | Erweiterung |
| | Testsysteme |
| | SEF |

Dimensionsdaten

**Fig. 20**

| | | |
|---|---|---|
| SEF | Testsysteme | Maschine |
| | Temperatur-detektor | Temperatursensor |

misst

Dimensionsdaten

Fig. 21

Fig. 22

Fig. 23

```
┌─────────────────────────────┐
│      Interested Users       │
└─────────────────────────────┘
       ▲           │
       │           ▼
┌─────────────────────────────┐
│      Hyperadapter        ╱ 300
│                          ╱
│                         ◤
├─────────────────────────────┤          ┌──────────────┐
│     User interested     ◄──────────────│     News     │
│   Dimensions Queries    │              └──────────────┘
└─────────────────────────────┘
```

Fig. 24

```
┌─────────────────────────────┐
│           News              │
└─────────────────────────────┘
              │                    ╱300
              ▼                   ╱
┌─────────────────────────────┐◄
│        Hyperadapter         │
└─────────────────────────────┘
              │
              ▼
┌─────────────────────────────┐
│      Interested users       │◄─┐
└─────────────────────────────┘  │
              │                   │
              ▼                   │
┌─────────────────────────────┐  │
│    Users specify Dimensions │  │
└─────────────────────────────┘  │
              │                   │   300
              ▼                   │  ╱
┌─────────────────────────────┐◄─┘ ╱
│        Hyperadapter         │◄──╱
└─────────────────────────────┘
```

Fig. 25

Generated code
Code
Annotations
Pointcuts
Aspect code
Components

**Fig. 26**

Generated code
Code
Annotations
Pointcuts
Aspect code
Components

**Fig. 27**

Generated code
Code
Annotations
Pointcuts
Aspect code
Components

**Fig. 28**

Generated code
Code
Annotations
Pointcuts
Aspect code
Components

Fig. 29

Fig. 30

Fig. 31

Fig. 32

```
┌─────────────────────────────────────────────────────┐
│ HM Hyper Query  ⊠                            ⊟ □     │
├─────────────────────────────────────────────────────┤
│                    ▓▓▓   ·   ✖ │ 🏠  ⋯  ⇨  ▽         │
│                                    ┌──────────┐      │
│  ⊟  ✛  Generic annotated Concern   │View Menu │      │
│     ⊟  □ Concern.FIELD             └──────────┘      │
│        ⊟  □ value                                    │
│           ⌐⋯   Performance                           │
│     ⊟  □ Concern.METHOD                              │
│        ⊞  □ value                                    │
│     ⊟  □ Concern.TYPE                                │
│        ⊞  □ value                                    │
│  ⊟  ✛  JPACHECKER                                    │
│     ⊞  □ Column.FIELD                                │
│     ⊞  □ Column.METHOD                               │
│     ⌐  □ Entity.TYPE                                 │
│     ⊞  □ Table.TYPE                                  │
│  ⊟  ✛  Request param checker                         │
│     ⊞  □ RequestMapping.METHOD                       │
│     ⊞  □ RequestMapping.TYPE                         │
│  ⊟  ✛  Secured Checker                               │
│     ⊞  □ Secured.METHOD                              │
│     ⊞  □ Secured.TYPE                                │
│  ⊟  ✛  Testcase Annotation Checker                   │
│     ⌐  □ Before.METHOD                               │
│     ⌐  □ Test.METHOD                                 │
│                                                      │
│                                                      │
└─────────────────────────────────────────────────────┘
```

Fig. 33

EP 2 354 968 A1

Fig. 34

Java - org.springframework.samples.petclinic/src/test/java/Org/springframework/samples/petclinic/web/VisitsAtomViewTest.j

File  Edit  Source  Refactor  Navigate  Search  Project  Run  Window  Help

Resource  Java

Package Explorer ⊠   Hierarchy

☐ Contacts example
  ☐ src
    ☐ sample.contact
      J AddPermission.java
      J AddPermissionController.java
      J WebContactAddController.java
☐ JTrac
  ☐ src
    ☐ test.java.info.jtrac
      J JtracTest.java
      J JtracTestBase.java
☐ org.springframework.samples.petclinic
  ☐ src/test/java
    ☐ org.springframework.samples.petclinic.web
      J VisitsAtomViewTest.java

Hotel.java   User.java   BookingService.java   VisitAtomViewTest.j ⊠

```
dog.setName("dog");
Pet bello = new Pet();
bello.setName("Bello");
bello.setType(dog);
Visit belloVisit = new Visit();
belloVisit.setPet(bello);
belloVisit.setDate(new Date(2009, 0, 11);
belloVisit.setDescription("Bello visit");
Pet wodan = new Pet();
wodan.setName("Wodan");
wodan.setType(dog);
Visit wodanVisit = new Visit();
wodanVisit.setPet(wodan);
wodanVisit.setDate(new Date(2009, 0, 2));
wodanVisit.setDescription("Wodan visit");
```

T  P  @  D  T  HM P ⊠        HM Hyper Query ⊠

☐ Beans
  All Spring Beans
  Autowired Fields
☐ Generic Concerns
☐ Persistency
☐ Problems
  Deprectaed Consumer
  DiscouragedReferences
  Unsafe Casts
☐ Security
  Secured
☐ Service Layer

─ + Deprecated Consumer Check

The constructor Date(int, int, int) is deprecated        Writable   Smart Insert   64 : 1

## Fig. 35

Fig. 36

Java - Jtrac/src/main/java/info/jtrac/hibernate/HibernateJtracDao.java

File  Edit  Source  Refactor  Navigate  Search  Project  Run  Window  Help

Resource  Java

**Package Explorer**  **Hierarchy**

- bigbankexample
  - src
    - bigbank
      - BankDaoStub.java
      - SeedData.java
- Contacts example
  - src
    - sample.contact
      - DataSourcePopulator.java
- Jtrac
  - src/main/java
    - info.jtrac.acegi
      - JtracCasProxyTicketValidator.java
    - info.jtrac.config
      - DataSourceFactoryBean.java
      - JtracConfigurer.java
      - ProviderManagerFactoryBean.java
    - info.jtrac.hibernate
      - HibernateJtracDao.java
    - info.jtrac.lucene
      - Indexer.java
      - IndexSearcher.java
    - info.jtrac.web
      - DefaultMultiActionController.java
      - RestMultiActionController.java
- org.springframework.samples.petclinic
  - src/main/java
    - org.springframework.samples.petclinic.asp
      - UsageLogAspect.java

**HibernateJtracDao.java**

```
# Copyright 2002-2005 the original author or authors.

package info.jtrac.hibernate;

import info.jtrac.JtracDao;

/**
 * DAO Implementation using Spring Hibernate template
 * note usage of the Spring "init-method" and "destroy-method" options
 */
public class HibernateJtracDao extends HibernateDaoSupport implements J

    private final Logger logger = LoggerFactory.getLogger(getClass());

    private SchemaHelper schemaHelper;

    public void setSchemaHelper(SchemaHelper schemaHelper) {
        this.schemaHelper = schemaHelper;
    }
```

T  P  @ J  D  T  HMP

**Hyper Query**

- Beans
  - All Spring Beans
  - Autowired Fields
- Generic Concerns
- Persistency
  - JPA
  - Spring HibernateDaoSupport extender

- + All Spring beans checker
- − Spring Bean:bankService

Writable    Smart Insert    17 : 30

Fig. 37

Fig. 38

```
/* with the form of anonymous classes.
*/
public abstract aspect Coordinator {
    private Hashtable methods = null;
    private Vector exclusions = null;

    abstract protected pointcut synchronizationPoint();

    public Coordinator() {
        methods = new Hashtable();
        exclusions = new Vector(5);
    }

    before (): synchronizationPoint() {
        this.guardedEntry(thisJoinPointStaticPart.getSignature().getName());
    }

    after (): synchronizationPoint() {
        this.guardedExit(thisJoinPointStaticPart.getSignature().getName());
    }
```

File   Edit   Source   Refactor   Navigate   Search   Project   Run   Window   Help

Focus Editor on Active Task

Resource   Java

HibernateJtradDao.java   JtradImpl.java   JtradLdapAuthenticationP   Coordinator.aj

Hierarchy

Package Explorer

Spacewar Example
  src
    spacewar
      Game.java
        Game
          clockTick() : void
          handleCollisions() : void
          newPlayer(int) : Player
          newRobot(int) : Robot
          resetShips() : void
      Robot.java
        Robot
          run() : void
      SpaceObject.java
        SpaceObject
          SpaceObject(Game, double, doub
          die() : void

Beans
Generic Concerns
Persistency
  JPA
    Spring HibernateDaoSupport extender
    Spring Hibernate Template extender
    Spring JdbcTemplate extender

Hyper Query

Coordinator

Fig. 39

Fig. 40

Fig. 41

Fig. 42

Java - Contacts example/src/sample.contact/ContactDaoSpring.java - Eclipse

File  Edit  Source  Refactor  Navigate  Search  Project  Run  Window  Help

Resource  Java

Package Explorer  Hierarchy

Contacts example
  src
    sample.contact
      ContactDao.java
      ContactDaoSpring.java

ContactDaoSpring.java

```
        List list = contactsByIdQuery.execute(id.longValue());

        if (list.size() == 0) {
            return null;
        } else {
            return (Contact) list.get(0);
        }
    }

    protected void initDao() throws Exception {
        contactInsert = new ContactInsert(getDataSource());
        contactUpdate = new ContactUpdate(getDataSource());
        contactDelete = new ContactDelete(getDataSource());
        contactsAllQuery = new ContactsAllQuery(getDataSource());
        principalsAllQuery = new PrincipalsAllQuery(getDataSource());
        rolesAllQuery = new RolesAllQuery(getDataSource());
        contactsByIdQuery = new ContactsByIdQuery(getDataSource());
    }

    private String makeObjectIdentity(Contact contact) {
```

T  Fr  D  T  Cr

Find        All   Activate...

Uncategorized
  Change contact dao
  change contact entities

Pre-defined Concerns  Hyper Query

Task:Change contact dao
Task:change contact entities

Writable    Smart Insert    1 : 1

Fig. 43

EP 2 354 968 A1

| | Europäisches Patentamt / European Patent Office / Office européen des brevets | **EUROPÄISCHER RECHERCHENBERICHT** | **Nummer der Anmeldung** EP 09 18 0953 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/125505 A1 (BHALOTIA GAURAV [US] ET AL) 14. Mai 2009 (2009-05-14) * Zusammenfassung * ----- | 1-15 | INV. G06F17/30 |

**RECHERCHIERTE SACHGEBIETE (IPC)**

G06F

Der vorliegende Recherchenbericht wurde für alle Patentansprüche erstellt

| Recherchenort | Abschlußdatum der Recherche | Prüfer |
|---|---|---|
| München | 19. Mai 2010 | Hauck, Rainer |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......
& : Mitglied der gleichen Patentfamilie, übereinstimmendes Dokument

EPO FORM 1503 03.82 (P04C03)

EP 2 354 968 A1

**ANHANG ZUM EUROPÄISCHEN RECHERCHENBERICHT
ÜBER DIE EUROPÄISCHE PATENTANMELDUNG NR.**

EP 09 18 0953

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-05-2010

| Im Recherchenbericht angeführtes Patentdokument | Datum der Veröffentlichung | Mitglied(er) der Patentfamilie | Datum der Veröffentlichung |
|---|---|---|---|
| US 2009125505 A1 | 14-05-2009 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006046203 A1
- US 20080313175 A1

- DE 19952769 B4

**In der Beschreibung aufgeführte Nicht-Patentliteratur**

- **E. W. DIJKSTRA.** Selected Writings on Computing: A Personal Perspective. On the role of scientific thought. Springer-Verlag, 1982

- **C. RAVINDRANATH PANDIAN.** Software metrics: a guide to planning, analysis and application. Auerbach Publications, 2003